# EUROPEAN PATENT APPLICATION

(11) **EP 4 756 950 A1**
(43) Date of publication of application: **10.06.2026**
(21) Application number: 24895417.4
(22) Date of filing: 11.05.2024
(51) Int. Cl.: H01M 10/04, B65H 51/32

(54) **WRAPPING APPARATUS AND WRAPPING METHOD FOR ELECTRODE ASSEMBLY**

(30) Priority: 30.11.2023 CN 202311641502
(71) Applicant: Contemporary Amperex Technology Co., Limited, Ningde, Fujian 352100 (CN)
(72) Inventor: WU, Kai, Ningde, Fujian 352100 (CN); ZHANG, Yongli, Ningde, Fujian 352100 (CN); SUN, Weiwei, Ningde, Fujian 352100 (CN); TANG, Wenxiang, Ningde, Fujian 352100 (CN); PAN, Wensheng, Ningde, Fujian 352100 (CN)
(74) Representative: Ziebig Hengelhaupt Intellectual Property Attorneys Patentanwaltskanzlei PartGmbB
(86) International application number: PCT/CN2024/092708
(87) International publication number: WO 2025/112306

(57) **Abstract**

Disclosed in the present application are a wrapping apparatus and wrapping method for an electrode assembly. The electrode assembly comprises an electrode main body and a tab portion, wherein the electrode main body has a first direction, a second direction and a third direction, and comprises two main surfaces, two end surfaces and two side surfaces, and the tab portion protrudes from the first one of the two end surfaces. The wrapping apparatus comprises a first wrapping assembly and a first positioning assembly. The first wrapping assembly is configured to position a wrapping film. The wrapping film comprises two main wrapping areas and a connecting area, with an opening being provided in the connecting area. The first positioning assembly is configured to position the electrode assembly and arrange the tab portion to face the connecting area. The first positioning assembly and the first wrapping assembly are configured to move relative to each other, such that the tab portion passes through the opening along with the relative movement of the first positioning assembly and the first wrapping assembly, and the connecting area wraps around the first one of the two end surfaces. In this way, the interference of the tab portion on the wrapping process can be reduced, and the wrapping effect is improved.

## Description

### TECHNICAL FIELD

The present application relates to the technical field of batteries, and in particular, to a wrapping device and wrapping method for an electrode assembly.

### BACKGROUND

With the development of battery technologies, batteries are applied to more and more fields, and gradually replace traditional fossil energy in the field of automobile power. A battery may store chemical energy and controllably convert the chemical energy to electric energy. In a recyclable battery, after discharge, the active substance can be activated by charging, enabling continued use.

A battery is typically provided with an electrode assembly and a wrapping film. The wrapping film has an insulating effect and can be used for wrapping the electrode assembly. In the production process of the battery, the wrapping film needs to be wrapped on the electrode assembly by a wrapping device. However, in the existing wrapping process, the presence of the tab part of the electrode assembly increases the wrapping difficulty, resulting in a poor wrapping effect.

### SUMMARY

In view of the above problems, the present application provides a wrapping device and wrapping method for an electrode assembly, which can reduce the interference of the tab part to the wrapping process and improve the wrapping effect.

In a first aspect, the present application provides a wrapping device for an electrode assembly. The electrode assembly includes an electrode main body and a tab part. The electrode main body has a first direction, a second direction, and a third direction that are orthogonal to each other, and includes two main surfaces disposed opposite to each other in the first direction, two end surfaces disposed opposite to each other in the second direction, and two side surfaces disposed opposite to each other in the third direction. The tab part is disposed in a protruding manner on a first one of the two end surfaces. The wrapping device includes a first wrapping assembly and a first positioning assembly. The first wrapping assembly is configured to position a wrapping film, where the wrapping film includes two main wrapping zones spaced apart from each other and a connection zone connected between the two main wrapping zones, and the connection zone is provided with openings. The first positioning assembly is configured to position the electrode assembly and enable the tab part to be disposed toward the connection zone. At least one of the first positioning assembly and the first wrapping assembly is configured to be movable relative to the other, such that the tab part passes through the opening with the relative movement between the first positioning assembly and the first wrapping assembly, and the connection zone contacts and wraps the first one of the two end surfaces.

Based on the above method, by configuring the first positioning assembly and the first wrapping assembly to adjust the relative position relationship between the electrode assembly and the wrapping film, the relative position relationship between the first one of the two end surfaces and the connection zone can be adjusted. When the wrapping film wraps the first one of the two end surfaces, the stability of the wrapping process can be improved. By providing the opening on the connection zone, the opening can form a clearance for the tab part, reducing the interference of the tab part to the wrapping process, thereby improving the wrapping effect of the wrapping film on the first one of the two end surfaces.

In some embodiments, before the first one of the two end surfaces contacts the connection zone, the first wrapping assembly is configured such that the connection zone and the two main wrapping zones are coplanar with each other.

Based on the above method, the stacked storage of the wrapping film is facilitated, the occupied space of the wrapping film is reduced, and the material feeding of the wrapping film is facilitated.

In some embodiments, at least one of the first positioning assembly and the first wrapping assembly is configured to move in the second direction, such that the electrode assembly and the wrapping film approach each other in the second direction, and after the first one of the two end surfaces contacts the connection zone, to drive the electrode assembly to continue to move in the second direction relative to end parts of the two main wrapping zones distal to the connection zone. The first wrapping assembly is configured to move in the first direction, such that the end parts of the two main wrapping zones move close to each other in the first direction; as a result, the two main wrapping zones each contact and wrap an exposed portion of a corresponding one of the two main surfaces.

Based on the above method, by providing the first positioning assembly and the first wrapping assembly, the relative position relationship between the two main surfaces and the two wrapping zones can be adjusted, and the relative position relationship between the first one of the two end surfaces and the connection zone can be adjusted. When the wrapping film wraps the two main surfaces and the first one of the two end surfaces of the electrode main body, the stability of the wrapping process can be improved, and the wrapping film can smoothly transition between wrapping the first one of the two end surfaces and wrapping the two main surfaces. This simplifies the operation of the wrapping process and is conducive to improving the wrapping efficiency.

In some embodiments, the first positioning assembly includes an electrode clamp. The electrode clamp is configured to clamp and fix the electrode main body from outer sides of the two side surfaces in the third direction, or configured to clamp and fix the electrode main body from outer sides of the two main surfaces in the first direction.

Based on the above method, by configuring the electrode clamp to clamp and fix the electrode main body from the outer sides of the two side surfaces in the third direction, the electrode clamp can maintain clearance from the two main surfaces of the electrode main body, which is beneficial to increasing the area of the exposed portions of the two main surfaces and improving the wrapping effect on the two main surfaces. By configuring the electrode clamp to clamp and fix the electrode main body from the outer sides of the two main surfaces in the first direction, the stability of clamping and fixing the electrode main body by the electrode clamp is improved.

In some embodiments, the first positioning assembly includes an electrode transmission mechanism. The electrode transmission mechanism is configured to drive the electrode clamp to move in the second direction, such that after the first one of the two end surfaces contacts the connection zone, the first one of the two end surfaces and the connection zone are driven to continue to move synchronously in the second direction.

Based on the above method, the wrapping film is enabled to smoothly transition between wrapping the first one of the two end surfaces and wrapping the two main surfaces, simplifying the operation of the wrapping process and helping to improve the wrapping efficiency.

In some embodiments, the electrode transmission mechanism includes an electrode transmission motor, a first electrode support, and a second electrode support. The electrode transmission motor is disposed on the first electrode support, and the electrode transmission motor is configured to drive the second electrode support to move relative to the first electrode support in the second direction. The electrode clamp is disposed on the second electrode support and includes an electrode clamping jaw and an electrode clamping cylinder. The electrode clamping cylinder is configured to drive the electrode clamping jaw, such that the electrode clamping jaw clamps and fixes the electrode main body.

Based on the above method, the stable movement of the electrode assembly is facilitated, and the positioning accuracy of the electrode assembly can be improved.

In some embodiments, the first wrapping assembly includes two first wrapping sub-assemblies spaced apart from each other. Each first wrapping sub-assembly separately includes a film clamp and a first film transmission mechanism. Two film clamps clamp and fix two ends of the wrapping film distal to the connection zone, respectively. The first film transmission mechanism drives the two film clamps to move close to each other in the first direction, such that a zone of the main wrapping zone that is not clamped by the film clamp can be bent toward a corresponding main surface relative to the connection zone.

Based on the above method, the control of the movement of the main wrapping zone is facilitated. In addition, this helps the zone of the main wrapping zone that is not clamped by the film clamp to remain in an extended state, and facilitates the action of wrapping the main surface by the main wrapping zone, thereby improving the wrapping effect of the main wrapping zone on the main surface.

In some embodiments, the first film transmission mechanism includes a first film transmission motor, a first film support, and a second film support. The first film transmission motor is disposed on the first film support, and the first film transmission motor is configured to drive the second film support to move relative to the first film support in the first direction. The film clamp is disposed on the second film support and includes a film clamping jaw and a film clamping cylinder. The film clamping cylinder is configured to drive the film clamping jaw, such that the film clamping jaw clamps and fixes the wrapping film.

Based on the above method, the stable movement of the wrapping film is facilitated, and the positioning accuracy of the wrapping film can be improved.

In some embodiments, each first wrapping sub-assembly further separately includes a second film transmission mechanism. Two second film transmission mechanisms drive the corresponding film clamps to rotate, respectively, such that a movement trend of zones of the wrapping film that are clamped by the film clamps relative to the connection zone remains consistent with a bending trend of the unclamped zone of the main wrapping zone relative to the connection zone.

Based on the above method, the zones of the wrapping film that are clamped by the film clamps are enabled to be closer to the electrode main body, facilitating the wrapping of the electrode main body with the zones of the wrapping film that are clamped by the film clamps. In addition, the adverse effect of the zones of the wrapping film that are clamped by the film clamps on the unclamped zone of the main wrapping zone wrapping the main surface can be reduced, thereby reducing the risk that the unclamped zone of the main wrapping zone falls off from the main surface.

In some embodiments, the first film transmission mechanism includes a first film transmission motor, a first film support, and a second film support. The first film transmission motor is disposed on the first film support, and the first film transmission motor is configured to drive the second film support to move relative to the first film support in the first direction. The second film transmission mechanism includes a second film transmission motor. The second film transmission motor is disposed on the second film support and drives the film clamp to rotate. The film clamp includes a film clamping jaw and a film clamping cylinder. The film clamping cylinder is configured to drive the film clamping jaw, such that the film clamping jaw clamps and fixes the wrapping film.

Based on the above method, the movement flexibility of the wrapping film can be improved, and the wrapping effect can be improved.

In some embodiments, each first wrapping sub-assembly further separately includes a third film transmission mechanism. Two third film transmission mechanisms drive the corresponding film clamps to move in the second direction toward a side where the electrode main body is located, respectively. Alternatively, the first positioning assembly includes an electrode clamp and an electrode transmission mechanism. The electrode clamp is configured to clamp and fix the electrode main body. The electrode transmission mechanism is configured to drive the electrode clamp to move in the second direction toward a side where the wrapping film is located, such that after the first one of the two end surfaces contacts the connection zone, the first one of the two end surfaces and the connection zone continue to move synchronously in the second direction. The third film transmission mechanism is configured to drive, in the second direction, a corresponding film clamp to move in the second direction.

Based on the above method, the projections of the two main wrapping zones on the corresponding main surfaces in the first direction can gradually cover the exposed portions of the main surfaces, thereby facilitating wrapping the main surfaces by the main wrapping zones.

In some embodiments, the first film transmission mechanism includes a first film transmission motor, a first film support, and a second film support. The first film transmission motor is disposed on the first film support, and the first film transmission motor is configured to drive the second film support to move relative to the first film support in the first direction. The third film transmission mechanism includes a third film transmission motor and a third film support. The third film transmission motor is disposed on the second film support and drives the third film support to move relative to the second film support in the second direction. The second film transmission mechanism includes a second film transmission motor. The second film transmission motor is disposed on the third film support and drives the film clamp to rotate. The film clamp includes a film clamping jaw and a film clamping cylinder. The film clamping cylinder is configured to drive the film clamping jaw, such that the film clamping jaw clamps and fixes the wrapping film.

Based on the above method, the movement flexibility of the wrapping film can be further improved, and the wrapping effect can be improved.

In some embodiments, before the first one of the two end surfaces contacts the connection zone, the first wrapping assembly is configured such that the connection zone and a first one of the two main wrapping zones are bent relative to each other.

Based on the above method, the compact structure of the first wrapping assembly is facilitated, and the occupied space of the first wrapping assembly is reduced.

In some embodiments, before the first one of the two end surfaces contacts the connection zone, the first wrapping assembly is configured such that the connection zone and a second one of the two main wrapping zones are coplanar with each other.

Based on the above method, the second one of the two main wrapping zones does not block the connection zone, such that the interference of the second one of the two main wrapping zones to the process that the tab part passes through the opening can be reduced, and the interference of the second one of the two main wrapping zones to the process that the connection zone contacts and wraps the first one of the two end surfaces can be reduced.

In some embodiments, the first wrapping assembly includes a first wrapping sub-assembly and a second wrapping sub-assembly. The first wrapping sub-assembly clamps and fixes an end part of the wrapping film distal to the first one of the two main wrapping zones. The second wrapping sub-assembly is configured to support and position the first one of the two main wrapping zones.

Based on the above method, the first wrapping sub-assembly and the second wrapping sub-assembly can position the connection zone without directly contacting the connection zone, thereby reducing the interference to the process that the tab part passes through the opening, and reducing the interference to the process that the connection zone contacts and wraps the first one of the two end surfaces.

In some embodiments, the first positioning assembly is configured to move in the second direction, such that the first one of the two end surfaces contacts the connection zone. The first positioning assembly is further configured to move in the first direction, such that a first one of the two main surfaces contacts the first one of the two main wrapping zones. The first wrapping sub-assembly is configured to move in the first direction and the second direction, such that the second one of the two main wrapping zones contacts a second one of the two main surfaces.

In the above manner, the relative position relationship between the electrode assembly and the wrapping film can be adjusted. When the wrapping film wraps the two main surfaces and the first one of the two end surfaces of the electrode main body, the continuous wrapping of the two main surfaces and the first one of the two end surfaces is achieved, which can improve the stability of the wrapping process and make the wrapping action simpler and smoother.

In some embodiments, the wrapping film includes a side wrapping zone connected to the main wrapping zone, and the wrapping device further includes a second wrapping assembly, where the second wrapping assembly is configured to drive the side wrapping zone to contact and wrap the side surface.

Based on the above method, the second wrapping assembly can adjust the relative position relationship between the electrode assembly and the side wrapping zone. By configuring the second wrapping assembly, the side wrapping zone wraps the side surface, thereby improving the wrapping effect of the wrapping film on the electrode main body.

In some embodiments, the second wrapping assembly includes a side surface pressing plate, a first pressing plate transmission mechanism, and a second pressing plate transmission mechanism. The first pressing plate transmission mechanism is configured to drive the side surface pressing plate in the first direction, such that the side surface pressing plate pushes the side wrapping zone to bend toward the side surface relative to the main wrapping zone. The second pressing plate transmission mechanism is configured to drive the side surface pressing plate in the third direction, such that the side surface pressing plate presses the side wrapping zone onto the side surface.

Based on the above method, a smooth transition can be achieved between the action of the second wrapping assembly bending the side wrapping zone and the action of the side wrapping zone wrapping the side surface. This helps simplify the actions and structure of the second wrapping assembly and improve the wrapping efficiency.

In some embodiments, the wrapping film includes an end wrapping zone connected to the main wrapping zone, and the second wrapping assembly is configured to drive the end wrapping zone to contact and wrap a second one of the two end surfaces.

Based on the above method, the second wrapping assembly can adjust the relative position relationship between the electrode assembly and the end wrapping zone. By configuring the second wrapping assembly, the end wrapping zone wraps the second one of the two end surfaces, thereby improving the wrapping effect of the wrapping film on the electrode main body.

In some embodiments, the second wrapping assembly includes an end surface pressing plate, a first pressing plate transmission mechanism, and a third pressing plate transmission mechanism. The first pressing plate transmission mechanism is configured to drive the end surface pressing plate in the first direction, such that the end surface pressing plate pushes the end wrapping zone to bend toward the second one of the two end surfaces relative to the main wrapping zone. The third pressing plate transmission mechanism is configured to drive the end surface pressing plate in the second direction, such that the end surface pressing plate presses the end wrapping zone onto the second one of the two end surfaces.

Based on the above method, the wrapping action can be simplified, such that the end wrapping zone wraps the second one of the two end surfaces.

In some embodiments, the first pressing plate transmission mechanism includes a pressing plate transmission motor, a first pressing plate support, and a second pressing plate support. The pressing plate transmission motor is disposed on the first pressing plate support and drives the second pressing plate support to move relative to the first pressing plate support. The second pressing plate transmission mechanism includes a first pressing plate cylinder. The first pressing plate cylinder is disposed on the second pressing plate support, and the first pressing plate cylinder drives the side surface pressing plate to move relative to the second pressing plate support. The third pressing plate transmission mechanism includes a second pressing plate cylinder. The second pressing plate cylinder is disposed on the second pressing plate support, and the second pressing plate cylinder drives the end surface pressing plate to move relative to the second pressing plate support.

Based on the above method, the movement flexibility of the side surface pressing plate and the end surface pressing plate can be improved, thereby improving the wrapping effect.

In some embodiments, the wrapping film further includes a side wrapping zone and an end wrapping zone that are connected to the main wrapping zone. The side wrapping zone wraps the side surface, and the end wrapping zone wraps a second one of the two end surfaces. The wrapping device further includes a first tape attachment assembly. The first tape attachment assembly is configured to attach a first tape to the electrode assembly. The first tape includes a first portion and a second portion connected to each other. The first tape attachment assembly is configured to attach the first portion of the first tape to the side wrapping zone and attach the second portion of the first tape to the end wrapping zone at a corner formed by the side surface and the second one of the two end surfaces.

In the above manner, the first tape can connect the side wrapping zone and the end wrapping zone together, such that the side wrapping zone and the end wrapping zone can remain fixed relative to the electrode main body, thereby improving the firmness of the wrapping film in wrapping the electrode main body.

In some embodiments, the first tape attachment assembly includes a first unwinding mechanism, a first tape pulling mechanism, and a first cutting mechanism. The first unwinding mechanism is configured to place and release a first tape roll, the first tape pulling mechanism is configured to clamp and pull a head end of a release portion of the first tape roll, and the first cutting mechanism is configured to cut the first tape out of the release portion of the first tape roll.

Based on the above method, it is conducive to the automatic provision of the first tape.

In some embodiments, the first tape pulling mechanism includes a first tape clamping cylinder, a first tape pulling motor, and a first tape clamping member. The first tape clamping cylinder is configured to drive the first tape clamping member to clamp the head end of the release portion, and the first tape pulling motor is configured to drive the first tape clamping member to move to pull the release portion.

Based on the above method, the release portion of the first tape roll can be elongated, and the release portion of the first tape roll is stretched to facilitate the cutting.

In some embodiments, two corresponding groups of first unwinding mechanisms and first cutting mechanisms are provided. The first tape attachment assembly includes a switching mechanism, and the switching mechanism includes a material roll support and a switching motor. The two groups of first unwinding mechanisms and first cutting mechanisms are disposed on the material roll support. The switching motor drives the material roll support to rotate around a predetermined rotation axis, such that the two groups of first unwinding mechanisms and first cutting mechanisms can switch between a standby station and a work station where the first tape pulling mechanism and the first cutting mechanism operate. The rotation axis is perpendicular to the plane where the release portion is located.

Based on the above method, it is conducive to the rapid roll change operations of the first tape roll, thereby improving the roll change efficiency.

In some embodiments, the first tape attachment assembly includes a first tape pickup mechanism, and the first tape pickup mechanism is configured to adsorb and take away the first tape. The first cutting mechanism includes a first pressing block, a first cutter, and a first cutting cylinder. The first pressing block and the first cutter are oppositely and fixedly disposed. The first cutting cylinder is configured to drive the first pressing block to press the release portion onto the first tape pickup mechanism and to drive the first cutter to cut the first tape out of the release portion.

Based on the above method, the first pressing block can press and position the release portion, which can improve the stability of the cutting process.

In some embodiments, the first tape attachment assembly includes a first tape pickup mechanism, and the first tape pickup mechanism is configured to adsorb and take away the first tape. The first tape pickup mechanism includes a first tape pickup member, a first tape pickup motor, a second tape pickup motor, a first tape pickup support, and a second tape pickup support. The first tape pickup member is configured to adsorb the first tape. The first tape pickup motor is disposed on the first tape pickup support and drives the second tape pickup support to move to a side of a main surface of the release portion. The second tape pickup motor is disposed on the second tape pickup support and drives the first tape pickup member to approach and move away from a plane where the release portion is located.

Based on the above method, the movement flexibility of the first tape pickup member can be improved, facilitating the suction and transfer of the first tape.

In some embodiments, the first tape pickup member includes a first tape pickup sub-part and a second tape pickup sub-part. The first tape pickup sub-part is configured to adsorb the first portion of the first tape and attach the first portion to the side wrapping zone. The second tape pickup sub-part is configured to adsorb the second portion of the first tape and attach the second portion to the end wrapping zone.

Based on the above method, the continuity of the tape pickup action and the tape attachment action can be improved.

In some embodiments, the first tape pickup sub-part is a telescoping member. The second tape pickup motor drives the first tape pickup member in the third direction; the first tape pickup sub-part presses the first portion of the first tape onto the side wrapping zone and retracts, so as to enable the second tape pickup sub-part to continue to move in the third direction and attach to the end wrapping zone, thereby attaching the second portion of the first tape to the end wrapping zone. Alternatively, the second tape pickup sub-part is a telescoping member. The second tape pickup motor drives the first tape pickup member in the second direction; the second tape pickup sub-part is configured to press the second portion of the first tape onto the end wrapping zone and retracts, so as to enable the first tape pickup sub-part to continue to move in the second direction and attach to the side wrapping zone, thereby attaching the first portion of the first tape to the side wrapping zone.

Based on the above method, the structural flexibility of the first tape pickup member can be improved, such that the shape of the first tape pickup member can be adaptively adjusted based on the shape of the electrode main body, thereby achieving diversified tape attachment actions.

In some embodiments, the first cutting mechanism is configured to cut two first tapes out of the release portion. The first tape attachment assembly includes a first tape pickup mechanism. The first tape pickup mechanism is configured to adsorb and take away the first tape, and the first tape pickup mechanism includes a first tape pickup member, a first tape pickup motor, a second tape pickup motor, a first tape pickup support, a second tape pickup support, a third tape pickup support, and a tape dispensing cylinder. There are two first tape pickup members, and the two first tape pickup members adsorb the corresponding first tapes, respectively. The first tape pickup motor is disposed on the first tape pickup support and drives the second tape pickup support to move to a side of a main surface of the release portion. The second tape pickup motor is disposed on the second tape pickup support and drives the third tape pickup support and the two first tape pickup members to approach and move away from a plane where the release portion is located. The tape dispensing cylinder is disposed on the third tape pickup support, and the tape dispensing cylinder is configured to drive the two first tape pickup members to move away from each other, such that the two first tape pickup members correspond to two corners of the electrode assembly spaced apart from each other in the third direction, respectively.

Based on the above method, the first tape pickup mechanism can adsorb and take away the two first tapes corresponding to each electrode assembly, so as to simultaneously and correspondingly attach the two first tapes at the two corners of the electrode assembly spaced apart from each other in the third direction, thereby improving the tape attachment efficiency.

In some embodiments, the wrapping device further includes a second tape attachment assembly. The second tape attachment assembly is configured to attach a second tape to the electrode assembly. The second tape includes first portions and a second portion connected to each other. The second tape attachment assembly is configured to attach the first portion of the second tape to the main wrapping zone and attach the second portion of the second tape to the side wrapping zone at a corner formed by the side surface and the main surface.

Based on the above method, the second tape can connect the side wrapping zone and the other one of the main wrapping zones together, such that the side wrapping zone and the main wrapping zone can remain fixed relative to the electrode main body, thereby improving the firmness of the wrapping film in wrapping the electrode main body.

In some embodiments, there are two first portions of the second tape, and the two first portions are located at two ends of the second portion of the second tape; the second tape attachment assembly is configured to respectively attach the two first portions of the second tape to corresponding ones of the two main wrapping zones.

In the above manner, the contact area between the second tape and the wrapping film can be increased, thereby improving the fixing effect on the side wrapping zone.

In some embodiments, the second tape attachment assembly includes a second unwinding mechanism, a second tape pulling mechanism, and a second cutting mechanism. The second unwinding mechanism is configured to place and release a second tape roll. The second tape pulling mechanism is configured to clamp and pull a head end of a release portion of the second tape roll. The second cutting mechanism is configured to cut the second tape out of the release portion of the second tape roll.

Based on the above method, it is conducive to the automatic provision of the second tape.

In some embodiments, the second tape pulling mechanism includes a second tape clamping cylinder, a second tape pulling motor, and a second tape clamping member. The second tape clamping cylinder is configured to drive the second tape clamping member to clamp the head end of the release portion, and the second tape pulling motor is configured to drive the second tape clamping member to move to pull the release portion.

Based on the above method, the release portion of the second tape roll can be elongated, and the release portion of the second tape roll is stretched to facilitate the cutting.

In some embodiments, two corresponding groups of second unwinding mechanisms and second cutting mechanisms are provided and spaced apart from each other in a width direction of the release portion. The second tape attachment assembly includes a tape pulling support, a tape pulling and transposition cylinder, and a tape pulling and transposition support. The tape pulling and transposition cylinder is disposed on the tape pulling support, and the second tape pulling mechanism is disposed on the tape pulling and transposition support. The tape pulling and transposition cylinder is configured to drive the tape pulling and transposition support to move in a spacing direction of two second unwinding mechanisms, such that the second tape pulling mechanism can switch between the two groups of second unwinding mechanisms and second cutting mechanisms.

Based on the above method, by providing the two groups of second unwinding mechanisms and second cutting mechanisms, the interference of roll change operations of the second tape roll to the tape pulling process can be reduced, thereby improving the tape pulling efficiency. By configuring the tape pulling and transposition cylinder to drive the tape pulling and transposition support to move in the spacing direction of the two second unwinding mechanisms, the position of the tape pulling mechanism can correspond to the position of a group of the second unwinding mechanism and the second cutting mechanism that are in operation, facilitating the tape pulling operation.

In some embodiments, the second tape attachment assembly includes a second tape pickup mechanism, and the second tape pickup mechanism is configured to adsorb and take away the second tape. The second cutting mechanism includes a second pressing block, a second cutter, and a second cutting cylinder. The second pressing block and the second cutter are oppositely and fixedly disposed. The second cutting cylinder is configured to drive the second pressing block to press the release portion onto the second tape pickup mechanism and to drive the second cutter to cut the second tape out of the release portion.

Based on the above method, the second pressing block can press and position the release portion, which can improve the stability of the cutting process.

In some embodiments, the second tape attachment assembly includes a second tape pickup mechanism, and the second tape pickup mechanism is configured to adsorb and take away the second tape. The second tape pickup mechanism includes a second tape pickup member, a fourth tape pickup motor, and a fourth tape pickup support. The second tape pickup member is configured to adsorb the second tape. The fourth tape pickup motor is disposed on the fourth tape pickup support and is configured to drive the second tape pickup member to move to a side of a main surface of the release portion; and is configured to drive the second tape pickup member to approach and move away from a plane where the release portion is located.

Based on the above method, the movement flexibility of the second tape pickup member can be improved, facilitating the suction and transfer of the second tape.

In some embodiments, the second tape pickup member includes a third tape pickup sub-part and a fourth tape pickup sub-part. The third tape pickup sub-part is configured to adsorb the first portion of the second tape and attach the first portion to the main wrapping zone. The fourth tape pickup sub-part is configured to adsorb the second portion of the second tape and attach the second portion to the side wrapping zone.

Based on the above method, the continuity of the tape pickup action and the tape attachment action can be improved.

In some embodiments, the fourth tape pickup sub-part is a telescoping member. The fourth tape pickup motor drives the second tape pickup member in the third direction; the fourth tape pickup sub-part is configured to press the second portion of the second tape onto the side wrapping zone and retracts, so as to enable the third tape pickup sub-part to continue to move in the third direction and attach to the main wrapping zone, thereby attaching the first portion of the second tape to the main wrapping zone.

Based on the above method, the structural flexibility of the second tape pickup member can be improved, such that the shape of the second tape pickup member can be adaptively adjusted based on the shape of the electrode main body, thereby achieving diversified tape attachment actions.

In some embodiments, two corresponding groups of second unwinding mechanisms and second cutting mechanisms are provided and spaced apart from each other in a width direction of the release portion. The second tape pickup mechanism includes a tape pickup and transposition cylinder and a tape pickup and transposition support. The tape pickup and transposition cylinder is disposed on the fourth tape pickup support, and the second tape pickup member is disposed on the tape pickup and transposition support. The tape pickup and transposition cylinder is configured to drive the tape pickup and transposition support to move in a spacing direction of the two second unwinding mechanisms, such that the second tape pickup member switches between the two groups of second unwinding mechanisms and second cutting mechanisms.

Based on the above method, by configuring the tape pickup and transposition cylinder to drive the tape pickup and transposition support to move in the spacing direction of the two second unwinding mechanisms, the position of the second tape pickup member can correspond to the position of a group of the second unwinding mechanism and the second cutting mechanism that are in operation, facilitating the tape pickup operation.

In some embodiments, the electrode main body includes two electrode modules stacked on each other in the first direction, and each electrode module separately includes a positive electrode plate, a separation film, and a negative electrode plate that are stacked.

Based on the above method, the space utilization rate of the electrode assembly can be improved, and the energy storage density of the electrode assembly can be improved.

In some embodiments, the wrapping device further includes a rotary disk. The rotary disk is configured to rotate around a predetermined rotation axis. There are at least two first wrapping assemblies, and the at least two first wrapping assemblies are spaced apart on the rotary disk around the rotation axis. The rotary disk drives the at least two first wrapping assemblies to sequentially pass through the first positioning assembly.

Based on the above method, a circuit and an air path are conveniently disposed on the rotary disk. By configuring the rotary disk to drive the at least two first wrapping assemblies to sequentially pass through the first positioning assembly, it facilitates the control of the movement of the first wrapping assembly and the positioning of the wrapping film by the first wrapping assembly.

In a second aspect, the present application provides a wrapping method for an electrode assembly. The electrode assembly includes an electrode main body and a tab part. The electrode main body has a first direction, a second direction, and a third direction that are orthogonal to each other, and includes two main surfaces disposed opposite to each other in the first direction, two end surfaces disposed opposite to each other in the second direction, and two side surfaces disposed opposite to each other in the third direction. The tab part is disposed in a protruding manner on a first one of the two end surfaces. The wrapping method includes: using a first wrapping assembly to position a wrapping film, where the wrapping film includes two main wrapping zones spaced apart from each other and a connection zone connected between the two main wrapping zones, and the connection zone is provided with openings; using a first positioning assembly to position the electrode assembly and enable the tab part to be disposed toward the connection zone; and controlling at least one of the first positioning assembly and the first wrapping assembly to move relative to the other, such that the tab part passes through the opening, and the connection zone contacts and wraps the first one of the two end surfaces.

In some embodiments, using the first wrapping assembly to position the wrapping film, includes: before the first one of the two end surfaces contacts the connection zone, controlling the first wrapping assembly to enable the connection zone and the two main wrapping zones to be coplanar with each other.

In some embodiments, controlling the at least one of the first positioning assembly and the first wrapping assembly to move relative to the other, includes: controlling the at least one of the first positioning assembly and the first wrapping assembly to approach each other in the second direction, such that after the first one of the two end surfaces contacts the connection zone, the electrode assembly continues to move in the second direction relative to end parts of the two main wrapping zones distal to the connection zone; and controlling the first wrapping assembly to move in the first direction, such that the end parts of the two main wrapping zones move close to each other, and thus the two main wrapping zones each contact and wrap an exposed portion of a corresponding one of the two main surfaces.

In some embodiments, using the first wrapping assembly to position the wrapping film, includes: before the first one of the two end surfaces contacts the connection zone, controlling the first wrapping assembly to enable the connection zone and a first one of the two main wrapping zones to be bent relative to each other.

In some embodiments, the first wrapping assembly includes a first wrapping sub-assembly and a second wrapping sub-assembly. The first wrapping sub-assembly clamps and fixes an end part of the wrapping film distal to the first one of the two main wrapping zones. The second wrapping sub-assembly is configured to support and position the first one of the two main wrapping zones. Controlling the at least one of the first positioning assembly and the first wrapping assembly to drive the electrode assembly and the wrapping film to move relative to each other, includes: controlling the first positioning assembly to move in the second direction, such that the first one of the two end surfaces contacts the connection zone; controlling the first positioning assembly to move in the first direction, such that a first one of the two main surfaces contacts the first one of the two main wrapping zones; and controlling the first wrapping sub-assembly to move in the first direction and the second direction, such that the wrapping film moves away from an end part of the first one of the two main wrapping zones, and thus a second one of the two main wrapping zones contacts a second one of the two main surfaces.

The above description is only an overview of the technical solutions of the present application. To more clearly understand the technical means of the present application to enable implementation in accordance with the content of the specification and to make the above and other purposes, features, and advantages of the present application more obvious and easy to understand, the detailed description of the present application is provided below.

### BRIEF DESCRIPTION OF THE DRAWINGS

By reading the detailed description of the preferred embodiments below, various additional advantages and benefits will become clear to those of ordinary skill in the art. The drawings are provided solely for the purpose of illustrating the preferred implementations and shall not be construed as limiting the scope of the present application. Furthermore, the same reference numerals in all the drawings denote identical components. In the drawings:
FIG. 1 is a schematic structural diagram of a vehicle to which an electrode assembly is applied according to one or more embodiments;
FIG. 2 is a schematic diagram of an exploded structure of a battery in which an electrode assembly is located according to one or more embodiments;
FIG. 3 is a schematic diagram of an exploded structure of a battery cell in which an electrode assembly is located according to one or more embodiments;
FIG. 4 is a schematic diagram of a partial structure of an electrode assembly according to one or more embodiments;
FIG. 5 is a schematic structural diagram of a first positioning assembly and a first wrapping assembly driving a wrapping film and an electrode assembly according to one or more embodiments;
FIG. 6 is a schematic structural diagram of a first positioning assembly and a first wrapping assembly driving a wrapping film and an electrode assembly according to one or more embodiments;
FIG. 7 is a schematic diagram of a process for wrapping an electrode assembly with a wrapping film according to one or more embodiments;
FIG. 8 is a schematic structural diagram of a first positioning assembly according to one or more embodiments;
FIG. 9 is a schematic diagram of a partial structure of a first wrapping assembly according to one or more embodiments;
FIG. 10 is another schematic structural diagram of a first positioning assembly and a first wrapping assembly driving a wrapping film and an electrode assembly according to one or more embodiments;
FIG. 11 is a schematic structural diagram of a first wrapping sub-assembly driving a bent wrapping film according to one or more embodiments;
FIG. 12 is a schematic diagram of another process for wrapping an electrode assembly with a wrapping film according to one or more embodiments;
FIG. 13 is a schematic structural diagram of a second wrapping assembly driving a wrapping film and an electrode assembly according to one or more embodiments;
FIG. 14 is a schematic structural diagram of a second wrapping assembly according to one or more embodiments;
FIG. 15 is a schematic structural diagram of portion A of the second wrapping assembly driving the wrapping film and the electrode assembly shown in FIG. 13;
FIG. 16 is a schematic structural diagram of a wrapping device according to one or more embodiments;
FIG. 17 is a schematic structural diagram of a wrapping film with a first tape and a second tape attached thereto and an electrode assembly according to one or more embodiments;
FIG. 18 is a schematic structural diagram of a first tape attachment assembly according to one or more embodiments;
FIG. 19 is a schematic diagram of a cooperative structure between a first unwinding mechanism, a first tape feeding mechanism, and a first tape roll according to one or more embodiments;
FIG. 20 is a schematic structural diagram of a first tape pickup mechanism according to one or more embodiments;
FIG. 21 is a schematic diagram of a partial structure of a first tape pulling mechanism according to one or more embodiments;
FIG. 22 is a schematic structural diagram of a first cutting mechanism according to one or more embodiments;
FIG. 23 is a schematic structural diagram of a first tape pickup member adsorbing a first tape according to one or more embodiments;
FIG. 24 is a schematic structural diagram of a second tape attachment assembly according to one or more embodiments;
FIG. 25 is a schematic diagram of a cooperative structure between a second unwinding mechanism, a second cutting mechanism, a second tape roll, and a second tape feeding mechanism according to one or more embodiments;
FIG. 26 is a schematic structural diagram of a second tape pulling mechanism according to one or more embodiments;
FIG. 27 is a schematic structural diagram of a second tape pickup mechanism adsorbing a second tape according to one or more embodiments;
FIG. 28 is a schematic diagram of a partial structure of a second tape pickup mechanism adsorbing a second tape shown in FIG. 27;
FIG. 29 is a schematic structural diagram of a second cutting mechanism according to one or more embodiments;
FIG. 30 is a schematic structural diagram of a third positioning assembly positioning an electrode assembly according to one or more embodiments; and
FIG. 31 is a schematic structural diagram of an electrode assembly according to one or more embodiments.

Reference numerals in the detailed description are as follows:
1000a vehicle;
100a battery; 200a controller; 300a motor;
10a case; 11a first sub-case; 12a second sub-case; 101b accommodating space; 1 battery cell;
100 housing; 110 accommodating housing; 112 opening end; 120 end cover; 200 electrode assembly;
201 tab part; 210 electrode main body; 211 main surface; 212a first one of two end surfaces; 212b second one of two end surfaces; 212 end surface; 213 side surface; 220 electrode module; 221 positive electrode plate 221; 222 separation film; 223 negative electrode plate 223; 230 fixing member;
300 wrapping device; 301 wrapping film feeding mechanism; 302 electrode assembly discharging mechanism; 310 first positioning assembly; 311 electrode clamp; 312 electrode transmission mechanism; 313 electrode clamping cylinder; 3131 electrode clamping jaw; 314 electrode transmission motor; 3141 first electrode support; 3142 second electrode support;
330 first wrapping assembly; 331 first wrapping sub-assembly; 332 film clamp; 333 first film transmission mechanism; 334 second film transmission mechanism; 335 third film transmission mechanism; 336 film clamping cylinder; 337 first film transmission motor; 3371 first film support; 338 film clamping jaw; 339 fourth film support; 340 second film transmission motor; 341 third film transmission motor; 342 second film support; 343 third film support; 344 second wrapping sub-assembly; 350 rotary disk; 351 sliding track; 353 electrode assembly pickup mechanism; 354 electrode assembly shaping mechanism; 355 defective product discharging mechanism; 360 flipping assembly; 361 main pressing cylinder; 362 main pressing member; 363 side pressing cylinder; 364 side pressing member; 365 rotary motor; 366 rotary support; 367 displacement motor; 368 displacement support;
370 second wrapping assembly; 371 side surface pressing plate; 372 first pressing plate transmission mechanism; 373 second pressing plate transmission mechanism; 374 end surface pressing plate; 3741 end limiting block; 3711 side limiting block; 375 third pressing plate transmission mechanism; 376 first pressing plate cylinder; 3761 second pressing plate cylinder; 377 pressing plate transmission motor; 378 first pressing plate support; 379 second pressing plate support;
380 first tape attachment assembly; 381 first unwinding mechanism; 382 first tape pulling mechanism; 3821 first tape clamping cylinder; 3822 first tape pulling motor; 3823 first tape clamping member; 383 first cutting mechanism; 3831 first pressing block; 3832 first cutter; 3833 first cutting cylinder; 384 first tape roll; 385 switching mechanism; 3851 material roll support; 3852 switching motor; 386 first tape pickup mechanism; 3861 first tape pickup member; 3862 first tape pickup motor; 3863 second tape pickup motor; 3864 first tape pickup support; 3865 second tape pickup support; 3866 first tape pickup sub-part; 3867 second tape pickup sub-part; 3868 third tape pickup support; 3869 tape dispensing cylinder; 387 first tape feeding mechanism;
390 second tape attachment assembly; 391 second unwinding mechanism; 392 second tape pulling mechanism; 3921 second tape clamping cylinder; 3922 second tape pulling motor; 3923 second tape clamping member; 393 second cutting mechanism; 3931 second pressing block; 3932 second cutter; 3933 second cutting cylinder; 394 tape pulling support; 3941 tape pulling and transposition cylinder; 3942 tape pulling and transposition support; 395 second tape pickup mechanism; 3951 second tape pickup member; 3952 fourth tape pickup motor; 3953 fourth tape pickup support; 3954 third tape pickup sub-part; 3955 fourth tape pickup sub-part; 3956 tape pickup and transposition cylinder; 3957 tape pickup and transposition support; 396 second tape roll; 397 second tape feeding mechanism;
400 wrapping film; 410 main wrapping zone; 420 connection zone; 421 opening; 430 side wrapping zone; 440 end wrapping zone; 511 first portion of first tape; 512 second portion of first tape; 510 first tape; 521 first portion of second tape; 522 second portion of second tape; 520 second tape;
D1 first direction; D2 second direction; D3 third direction; D4 width direction of release portion; D5 spacing direction of two second unwinding mechanisms; and D6 thickness direction of release portion.

### DETAILED DESCRIPTION

Embodiments of the technical solutions of the present application will be described in detail below with reference to the drawings. The following embodiments are only used to more clearly illustrate the technical solutions of the present application, and therefore, are only exemplary and do not limit the claimed scope of the present application.

Unless otherwise defined, all technical and scientific terms used herein have the same meaning as commonly understood by those skilled in the technical field to which the present application belongs. The terms used herein are only used to illustrate the specific embodiments, rather than limit the present application. The terms "include", "comprise", and "provided with", and any variations thereof in the specification and claims of the present application and the above description of the drawings are intended to cover non-exclusive inclusions.

In the description of the embodiments of the present application, technical terms such as "first" and "second" are only used to distinguish different objects and should not be interpreted as indicating or implying the relative importance or implicitly indicating the number, specific order, or primary and secondary relationship of the technical features referred to. In the description of the embodiments of the present application, unless otherwise specifically defined, "plurality of" means two or more.

Reference in the present application to "embodiment" means that a particular feature, structure, or characteristic described in combination with the embodiment can be included in at least one embodiment of the present application. The references of the word in the context of the specification do not necessarily refer to the same embodiment, nor to separate or alternative embodiments exclusive of other embodiments. It will be explicitly and implicitly understood by those skilled in the art that the embodiments described herein can be combined with other embodiments.

In the description of the embodiments of the present application, the term "and/or" is merely a way to describe the associative relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present application, the term "plurality of" refers to two or more (including two). Similarly, "plurality of groups" refers to two or more (including two) groups, and "plurality of pieces" refers to two or more (including two) pieces.

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential" and the like indicate orientations or positional relationships based on those shown in the drawings. They are merely for the convenience of describing the embodiments of the present application and simplifying the description, rather than indicating or implying that the apparatus or element referred to must have a specific orientation or be constructed and operated in the specific orientation, and thus should not be construed as a limitation to the embodiments of the present application.

In the description of the embodiments of the present application, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present application can be interpreted according to specific conditions.

With the development of battery technologies, batteries are applied to more and more fields, and gradually replace traditional fossil energy in the field of automobile power. A battery may store chemical energy and controllably convert the chemical energy to electric energy. In a recyclable battery, after discharge, the active substance can be activated by charging, enabling continued use.

A battery is typically provided with an electrode assembly and a wrapping film. The wrapping film has an insulating effect and can be used for wrapping the electrode assembly. In the production process of the battery, the wrapping film needs to be wrapped on the electrode assembly by a wrapping device. However, in the existing wrapping process, the presence of the tab part of the electrode assembly increases the wrapping difficulty, resulting in a poor wrapping effect.

To reduce the wrapping difficulty and improve the wrapping effect, at least one of a first positioning assembly and a first wrapping assembly is configured to drive the electrode assembly and the wrapping film to move relative to each other, such that the tab part passes through an opening, and the connection zone contacts and wraps the first one of the two end surfaces. The first positioning assembly is configured to position the electrode assembly, such that the position and posture of the electrode assembly can be kept stable and controlled. The first wrapping assembly is configured to position the wrapping film, such that the positions and postures of the two main wrapping zones and the connection zone can be kept stable and controlled. At least one of the first positioning assembly and the first wrapping assembly is configured to drive the electrode assembly and the wrapping film to move relative to each other, such that the relative position relationship between the two main surfaces and the two wrapping zones can be adjusted, and the relative position relationship between the first one of the two end surfaces and the connection zone can be adjusted. The tab part is disposed toward the connection zone, such that the tab part can pass through the opening.

Based on the above considerations, the present application provides a wrapping device and wrapping method for an electrode assembly. The electrode assembly includes an electrode main body and a tab part. The electrode main body has a first direction, a second direction, and a third direction that are orthogonal to each other, and includes two main surfaces disposed opposite to each other in the first direction, two end surfaces disposed opposite to each other in the second direction, and two side surfaces disposed opposite to each other in the third direction. The tab part is disposed in a protruding manner on the first one of the two end surfaces. The wrapping device includes a first wrapping assembly and a first positioning assembly. The first wrapping assembly is configured to position a wrapping film, where the wrapping film includes two main wrapping zones spaced apart from each other and a connection zone connected between the two main wrapping zones, and the connection zone is provided with openings. The first positioning assembly is configured to position the electrode assembly and enable the tab part to be disposed toward the connection zone. At least one of the first positioning assembly and the first wrapping assembly is configured to be movable relative to the other, such that the tab part passes through the opening with the relative movement between the first positioning assembly and the first wrapping assembly, and the connection zone contacts and wraps the first one of the two end surfaces. In this way, by configuring the first positioning assembly and the first wrapping assembly to adjust the relative position relationship between the electrode assembly and the wrapping film, the relative position relationship between the first one of the two end surfaces and the connection zone can be adjusted. When the wrapping film wraps the first one of the two end surfaces, the stability of the wrapping process can be improved. By providing the opening on the connection zone, the opening can form a clearance for the tab part, reducing the interference of the tab part to the wrapping process, thereby improving the wrapping effect of the wrapping film on the first one of the two end surfaces.

The wrapping device and wrapping method for an electrode assembly disclosed in the embodiments of the present application are used for wrapping an electrode assembly with a wrapping film. The electrode assembly and the wrapping film are disposed on a battery, and the battery can be used in electric devices that use batteries as the power source or in various energy storage systems that use batteries as the energy storage element. The electric device may be, but is not limited to, a mobile phone, a tablet, a laptop computer, an electric toy, an electric tool, an electric bicycle, an electric vehicle, a ship, a spacecraft, or the like. The electric toy may include stationary or mobile electric toys, such as game consoles, electric car toys, electric ship toys, or electric airplane toys. The spacecraft may include airplanes, rockets, space shuttles, spaceships, and the like.

In the following embodiments, for ease of description, the present application is illustrated by taking a vehicle 1000a as an example of the electric device according to an embodiment of the present application.

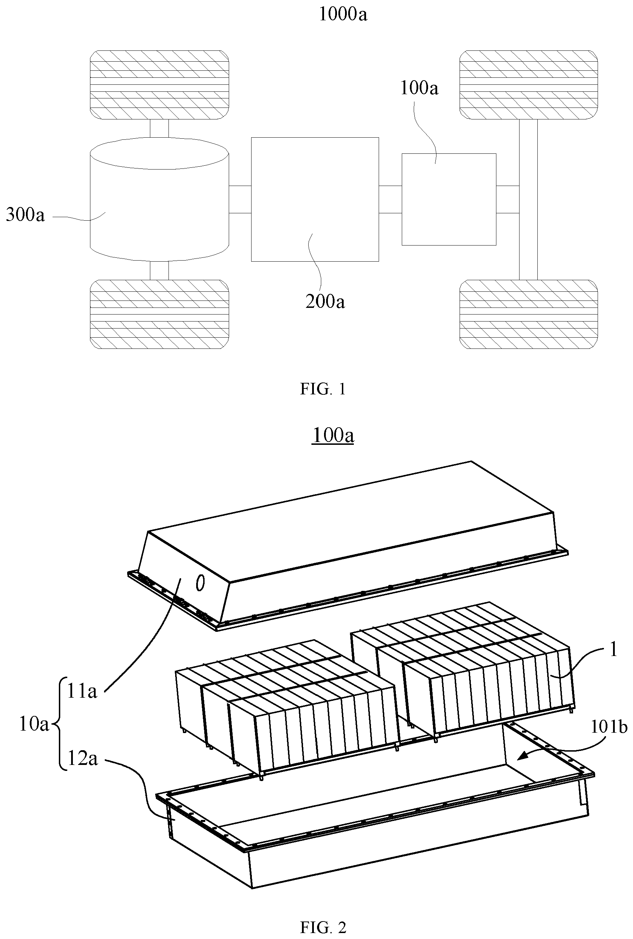

Referring to FIG. 1, a vehicle 1000a may be a fuel vehicle, a gas vehicle, or a new energy vehicle. The new energy vehicle may be a pure electric vehicle, a hybrid vehicle, an extended-range vehicle, or the like. A battery 100a is disposed inside the vehicle 1000a, and the battery 100a may be disposed at the bottom, head, or tail of the vehicle 1000a. The battery 100a may be configured to power the vehicle 1000a. For example, the battery 100a may serve as an operation power source of the vehicle 1000a. The vehicle 1000a may further include a controller 200a and a motor 300a. The controller 200a is configured to control the battery 100a to supply power to the motor 300a, e.g., for operation power needed by the vehicle 1000a for start-up, navigation, and driving.

In some embodiments of the present application, the battery 100a may not only serve as an operation power source for the vehicle 1000a, but also as a driving power source for the vehicle 1000a to, instead of or in part instead of fuel or natural gas, provide driving power for the vehicle 1000a.

In some embodiments, the battery 100a may be an energy storage device. The energy storage device includes an energy storage container, an energy storage electrical cabinet, and the like.

The battery 100a mentioned in the embodiments of the present application refers to a single physical module including one or a plurality of battery cells 1 to provide higher voltage and capacity.

In the embodiments of the present application, the battery cell 1 may be a secondary battery. The secondary battery refers to a battery cell 1 that can be reused by activating the active material through charging after the battery cell 1 is discharged. Each battery cell 1 may also be a primary battery.

The battery cell 1 includes, but is not limited to, a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, and the like. The battery cell 1 may be cylindrical, flat, rectangular parallelepiped-shaped, or in other shapes.

In some embodiments, the battery 100a may be a battery module, and when a plurality of battery cells 1 are provided, the plurality of battery cells 1 are disposed and fixed to form one battery module.

In some embodiments, referring to FIG. 2, the battery 100a may be a battery pack, the battery pack includes a case 10a and battery cells 1, and the battery cells 1 or the battery modules are accommodated in the case 10a.

In some embodiments, the case 10a may be a portion of the chassis structure of the vehicle 1000a. For example, a portion of the case 10a may be at least a portion of the floor of the vehicle 1000a, or a portion of the case 10a may be at least a portion of a transverse beam and a longitudinal beam of the vehicle 1000a.

Referring to FIG. 2, the battery 100a includes the case 10a and the battery cells 1, and the battery cells 1 are accommodated in the case 10a. The case 10a is configured to provide an accommodating space 101b for the battery cells 1, and the case 10a may be of a variety of structures. In some embodiments, the case 10a may include a first sub-case 11a and a second sub-case 12a. The first sub-case 11a and the second sub-case 12a are lidded with each other. The first sub-case 11a and the second sub-case 12a jointly define an accommodating space 101b for accommodating the battery cells 1. The second sub-case 12a may be of a hollow structure with one end open, and the first sub-case 11a may be of a plate structure. The open side of the second sub-case 12a is lidded with the first sub-case 11a, such that the first sub-case 11a and the second sub-case 12a jointly define the accommodating space 101b. The first sub-case 11a and the second sub-case 12a may also be of a hollow structure with one side open, and the open side of the second sub-case 12a is lidded with the open side of the first sub-case 11a. Certainly, the case 10a formed by the first sub-case 11a and the second sub-case 12a may be in various shapes, such as cylindrical or rectangular parallelepiped-shaped.

In the battery 100a, there may be a plurality of battery cells 1, and the plurality of battery cells 1 may be connected in series, in parallel, or in series-parallel. The series-parallel connection means that both series connection and parallel connection are present for the connection among the plurality of battery cells 1. The plurality of battery cells 1 may be directly connected in series, in parallel, or in series-parallel, and then the whole formed by the plurality of battery cells 1 is accommodated in the case 10a. Certainly, the situation may be that in the battery 100a, the plurality of battery cells 1 are first connected in series, in parallel, or in series-parallel to form battery modules, and then the plurality of battery modules are connected in series, in parallel, or in series-parallel to form a whole and accommodated in the case 10a. The battery 100a may further include other structures. For example, the battery 100a may further include a busbar component for achieving an electrical connection among the plurality of battery cells 1.

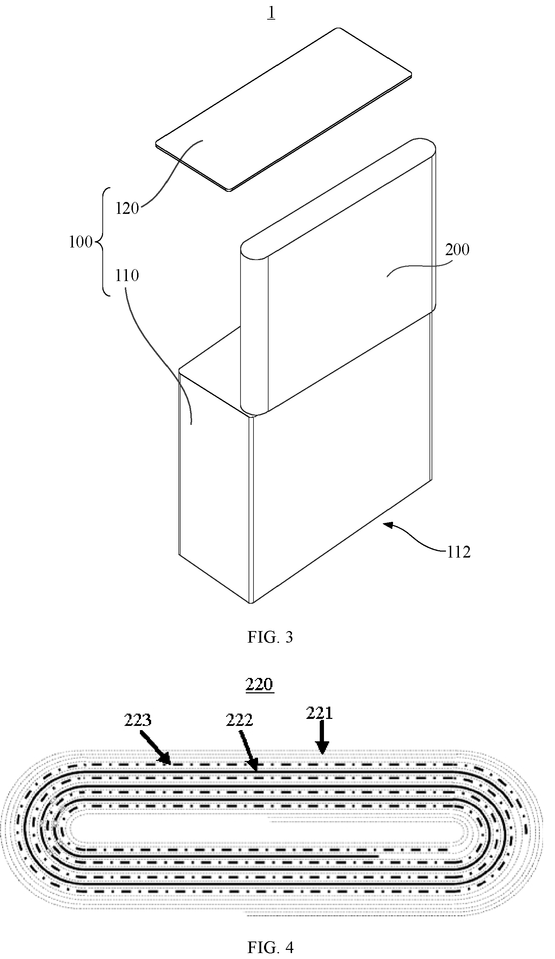

Referring to FIG. 3, the battery cell 1 refers to the smallest unit forming a battery. In this embodiment, a cylindrical battery cell 1 is taken as an example for description. As shown in FIG. 3, the battery cell 1 includes a housing 100, an electrode assembly 200, and other functional components.

In some embodiments, the housing 100 is configured to package components such as the electrode assembly 200 and the electrolyte. The housing 100 may be a steel housing, an aluminum housing, a plastic (such as polypropylene) housing, a composite metal housing (such as a copper-aluminum composite housing), an aluminum-plastic film, or the like.

The housing 100 may include an end cover 120 and an accommodating housing 110. The end cover 120 refers to a component that is lidded onto the opening of the accommodating housing 110 to isolate the internal environment of the battery cell 1 from the external environment. Without limitation, the shape of the end cover 120 may be adapted to the shape of the accommodating housing 110 to fit the accommodating housing 110. Optionally, the end cover 120 may be made of a material with a certain hardness and strength (for example, an aluminum alloy), such that the end cover 120 is not easily deformed when being squeezed or collided. This enables the battery cell 1 to have higher structural strength, and the safety performance can also be improved. Functional components such as the post terminal may be disposed on the end cover 120. The post terminal may be configured to be electrically connected to the electrode assembly 200 to output or input the electric energy of the battery cell 1. In some embodiments, the end cover 120 may also be provided with a pressure relief mechanism for releasing the internal pressure when the internal pressure or temperature of the battery cell 1 reaches a threshold. The end cover 120 may also be made of various materials, such as copper, iron, aluminum, stainless steel, aluminum alloy, and plastic. In some embodiments, an insulating component may also be disposed on the inner side of the end cover 120, and the insulating component may be configured to isolate an electrical connection component in the accommodating housing 110 from the end cover 120 to reduce the risk of a short circuit. Illustratively, the insulating component may be made of plastic, rubber, or the like.

The accommodating housing 110 is a component configured to form the internal environment of the battery cell 1 in combination with the end cover 120. The formed internal environment may be used to accommodate the electrode assembly 200, an electrolytic solution, and other components. The accommodating housing 110 and the end cover 120 may be independent components, and the connection between the accommodating housing 110 and the end cover 120 may form the internal environment of the battery cell 1. Without limitation, the end cover 120 and the accommodating housing 110 may be integrated. Specifically, the end cover 120 and the accommodating housing 110 may form a common connection surface before other components are placed in the housing, and when the interior of the accommodating housing 110 needs to be encapsulated, the end cover 120 is lidded onto the accommodating housing 110. The accommodating housing 110 may be in various shapes and dimensions, such as a rectangular parallelepiped, a cylinder, and a hexagonal prism. Specifically, the shape of the accommodating housing 110 may be determined according to the specific shape and dimension of the electrode assembly 200. The accommodating housing 110 may be made of various materials, for example, including but not limited to, copper, iron, aluminum, stainless steel, aluminum alloy, and the like.

Optionally, the battery cell 1 includes a housing 100, a bottom cover, and an electrode assembly 200. The housing 100 is provided with an opening end 112, and a post terminal is disposed on a wall of the housing 100 opposite to the opening end 112. The post terminal is provided with a through hole, and the housing and the bottom cover are connected to form an accommodating cavity in communication with the through hole. An active substance-coated part of the electrode assembly 200 is disposed in the housing 100, and a tab part 201 of the electrode assembly 200 passes through the through hole and is connected to a side of the post terminal facing away from the accommodating cavity.

The electrode assembly 200 is a component where the electrochemical reaction occurs in the battery cell 1. One or more electrode assemblies 200 may be accommodated in the accommodating housing 110.

In some embodiments, the electrode assembly 200 includes a positive electrode, a negative electrode, and a separator. During the charging and discharging process of the battery cell 1, active ions (such as lithium ions) are intercalated and deintercalated back and forth between the positive electrode and the negative electrode. The separator is disposed between the positive electrode and the negative electrode to prevent the positive electrode and the negative electrode from short-circuiting while allowing the passage of active ions. The separator may be a separation film.

In some embodiments, referring to FIG. 4, the positive electrode may be a positive electrode plate 221, and the positive electrode plate 221 may include a positive electrode current collector and a positive electrode active material disposed on at least one surface of the positive electrode current collector.

As an example, the positive electrode current collector is provided with two surfaces opposite to each other in the thickness direction thereof, and the positive electrode active material is disposed on either or both of the two opposite surfaces of the positive electrode current collector.

As an example, a metal foil or a composite current collector may be used as the positive electrode current collector. For example, for the metal foil, aluminum or stainless steel treated with silver on the surface, stainless steel, copper, aluminum, nickel, carbon electrode, carbon, nickel, titanium, or the like may be used. The composite current collector may include a polymer material substrate and a metal layer. The composite current collector may be fabricated by forming a metal material (aluminum, aluminum alloy, nickel, nickel alloy, titanium, titanium alloy, silver, silver alloy, and the like) on a polymer material substrate (such as a substrate made of polypropylene, polyethylene terephthalate, polybutylene terephthalate, polystyrene, and polyethylene).

As an example, the positive electrode active material may include at least one of the following materials: a lithium-containing phosphate, a lithium transition metal oxide, and respective modified compounds thereof. However, the present application is not limited to these materials, and other conventional materials that can be used as positive electrode active materials for batteries may also be used. These positive electrode active materials may be used alone or in combination of two or more. Examples of the lithium-containing phosphate may include, but are not limited to, at least one of lithium iron phosphate (such as LiFePO₄ (also referred to as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon. Examples of the lithium transition metal oxide may include, but are not limited to, at least one of a lithium cobalt oxide (such as LiCoO₂), a lithium nickel oxide (such as LiNiO₂), a lithium manganese oxide (such as LiMnO₂ or LiMn2O₄), a lithium nickel cobalt oxide, a lithium manganese cobalt oxide, a lithium nickel manganese oxide, a lithium nickel cobalt manganese oxide (such as LiNi_{1/3}Co_{1/3}Mn_{1/3}O₂ (also referred to as NCM₃₃₃), LiNi_{0.5}Co_{0.2}Mn_{0.3}O₂ (also referred to as NCM₅₂₃), LiNi_{0.5}Co_{0.25}Mn_{0.25}O₂ (also referred to as NCM₂₁₁), LiNi_{0.6}Co_{0.2}Mn_{0.2}O₂ (also referred to as NCM₆₂₂), LiNi_{0.8}Co_{0.1}Mn_{0.1}O₂ (also referred to as NCM₈₁₁)), a lithium nickel cobalt aluminum oxide (such as LiNi_{0.85}Co_{0.15}Al_{0.05}O₂), and modified compounds thereof.

In some examples, referring to FIG. 4, the negative electrode may be a negative electrode plate 223. The negative electrode plate 223 may include a negative electrode current collector.

As an example, a metal foil, a foam metal, a composite current collector, or a foam carbon may be used as the negative electrode current collector. For example, for the metal foil, aluminum or stainless steel treated with silver on the surface, stainless steel, copper, aluminum, carbon electrode, carbon, nickel, titanium, or the like may be used. The foam metal may be foam nickel, foam copper, foam aluminum, foam alloy, or the like. The composite current collector may include a polymer material substrate and a metal layer. The composite current collector may be fabricated by forming a metal material (copper, copper alloy, nickel, nickel alloy, titanium, titanium alloy, silver, silver alloy, and the like) on a polymer material substrate (such as a substrate made of polypropylene, polyethylene terephthalate, polybutylene terephthalate, polystyrene, and polyethylene).

As an example, the negative electrode plate 223 may include a negative electrode current collector and a negative electrode active material disposed on at least one surface of the negative electrode current collector.

As an example, the negative electrode current collector is provided with two surfaces opposite to each other in the thickness direction thereof, and the negative electrode active material is disposed on either or both of the two opposite surfaces of the negative electrode current collector.

As an example, the negative electrode active material may be a negative electrode active material known in the art for use in battery cells 1. As an example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and other conventional materials that can be used as negative electrode active materials for batteries may also be used. These negative electrode active materials may be used alone or in combination of two or more.

In some embodiments, the material of the positive electrode current collector may be aluminum, and the material of the negative electrode current collector may be copper.

In some embodiments, the electrode assembly 200 further includes a separator disposed between the positive electrode and the negative electrode.

In some embodiments, the separator is a separation film 222. The present application does not particularly limit the type of the separation film 222, and any porous-structure separation film 222 known to have good chemical stability and mechanical stability may be selected and used.

As an example, the main material of the separation film 222 may be selected from at least one of glass fiber, non-woven fabric, polyethylene, polypropylene, polyvinylidene difluoride, and ceramic. The separation film 222 may be a single-layer film or a multi-layer composite film, and there is no particular limitation on this. When the separation film 222 is a multi-layer composite film, the materials of the layers may be the same or different, and there is no particular limitation on this. The separator may be a separate component located between the positive electrode and the negative electrode, or may be attached to the surfaces of the positive electrode and the negative electrode.

In some embodiments, the separator is a solid-state electrolyte. The solid-state electrolyte is disposed between the positive electrode and the negative electrode, serving both to transport ions and to isolate the positive electrode and the negative electrode.

In some embodiments, the battery cell 1 further includes an electrolyte that serves to conduct ions between the positive electrode and the negative electrode. The present application has no specific limitations on the type of the electrolyte, which can be selected according to needs. The electrolyte may be liquid-state, gel-state, or solid-state.

The electrolytic solution may be in the form of an electrolyte. The electrolytic solution may include an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone. The solvent may also be selected from an ether solvent. The ether solvent may include one or more of dimethoxyethane, ethylene glycol diethyl ether, diethylene glycol dimethyl ether, triethylene glycol dimethyl ether, tetraethylene glycol dimethyl ether, 1,3-dioxolane, tetrahydrofuran, methyl tetrahydrofuran, diphenyl ether, and crown ether.

The gel-state electrolyte includes a skeleton network with a polymer as an electrolyte, combined with an ionic liquid-lithium salt.

The solid-state electrolyte includes a polymer solid-state electrolyte, an inorganic solid-state electrolyte, and a composite solid-state electrolyte.

As an example, the polymer solid-state electrolyte may be polyether, polysiloxane, polycarbonate, polyacrylonitrile, polyvinylidene fluoride, polymethyl methacrylate, single-ion polymer, polyionic liquid-lithium salt, cellulose, or the like. As an example, the polymer solid-state electrolyte may be polyethylene oxide.

As an example, the inorganic solid-state electrolyte may be one or more of an oxide solid electrolyte (crystalline perovskite, sodium superionic conductor, garnet, and amorphous LiPON thin film), a sulfide solid electrolyte (crystalline lithium superionic conductor (lithium germanium phosphorus sulfur, argyrodite), and amorphous sulfide), a halide solid electrolyte, a nitride solid electrolyte, and a hydride solid electrolyte.

As an example, the composite solid-state electrolyte is formed by adding an inorganic solid-state electrolyte filler to the polymer solid electrolyte.

In some embodiments, the electrode assembly 200 is of a wound structure. The positive electrode plate 221 and the negative electrode plate 223 are wound to form a wound structure.

In some embodiments, the electrode assembly 200 is provided with a tab part 201 that can conduct current out from the electrode assembly 200. The tab part 201 includes a positive electrode tab and a negative electrode tab. The positive electrode tab and the negative electrode tab may be located together at one end of the electrode main body or respectively at two ends of the electrode main body.

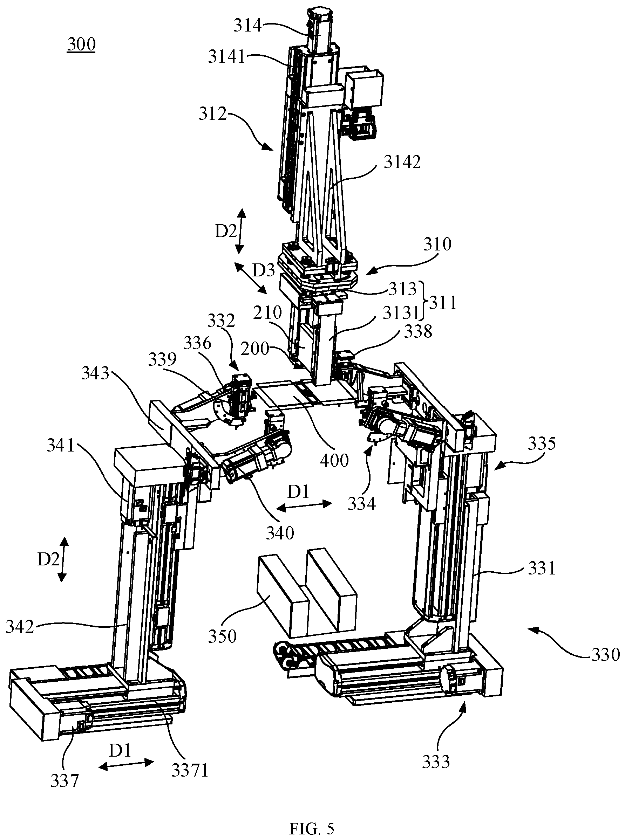

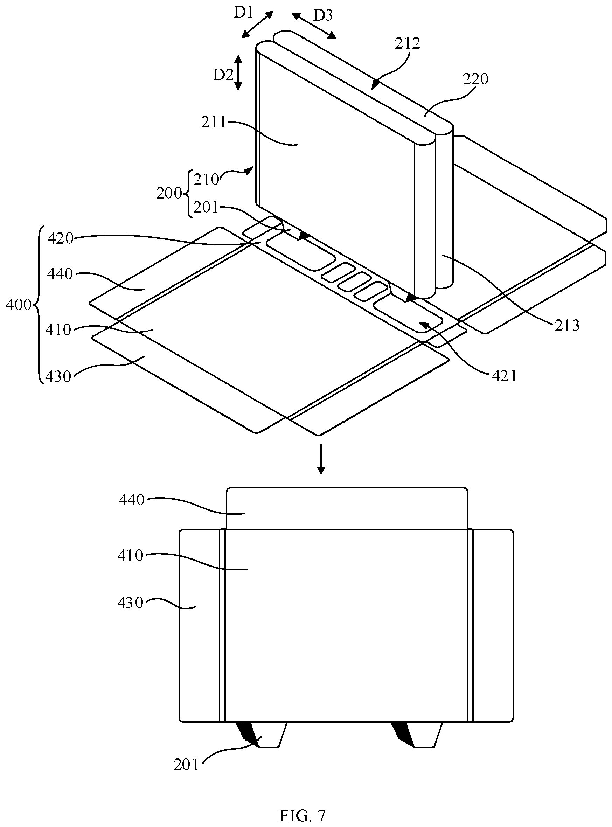

According to some embodiments of the present application, as shown in FIGs. 5 to 7, the electrode assembly 200 described in the embodiments of the wrapping device for an electrode assembly of the present application includes an electrode main body 210 and a tab part 201. The electrode main body 210 has a first direction D1, a second direction D2, and a third direction D3 that are orthogonal to each other, and includes two main surfaces 211 disposed opposite to each other in the first direction D1, two end surfaces 212 disposed opposite to each other in the second direction D2, and two side surfaces 213 disposed opposite to each other in the third direction D3. The tab part 201 is disposed in a protruding manner on the first one 212a of the two end surfaces 212. The wrapping device 300 includes a first wrapping assembly 330 and a first positioning assembly 310. The first wrapping assembly 330 is configured to position the wrapping film 400. The wrapping film 400 includes two main wrapping zones 410 spaced apart from each other and a connection zone 420 connected between the two main wrapping zones 410, and the connection zone 420 is provided with openings 421. The first positioning assembly 310 is configured to position the electrode assembly 200 and enable the tab part 201 to be disposed toward the connection zone 420. At least one of the first positioning assembly 310 and the first wrapping assembly 330 is configured to be movable relative to the other, such that the tab part 201 passes through the opening 421 with the relative movement between the first positioning assembly 310 and the first wrapping assembly 330, and the connection zone 420 contacts and wraps the first one 212a of the two end surfaces 212.

By configuring the first positioning assembly 310 and the first wrapping assembly 330 to adjust the relative position relationship between the electrode assembly 200 and the wrapping film 400, the relative position relationship between the first one 212a of the two end surfaces 212 and the connection zone 420 can be adjusted. When the wrapping film 400 wraps the first one 212a of the two end surfaces 212, the stability of the wrapping process can be improved. Specifically, the first positioning assembly 310 positions the electrode assembly 200 such that the tab part 201 faces the connection zone 420 and is spaced apart from the connection zone 420; then at least one of the first positioning assembly 310 and the first wrapping assembly 330 is configured to drive the electrode assembly 200 and the wrapping film 400 to approach each other, such that the tab part 201 gradually approaches the connection zone 420. Then the tab part can pass through the opening 421, and finally the connection zone 420 can contact and wrap the first one 212a of the two end surfaces 212.

The presence of the tab part 201 increases the difficulty for the wrapping film 400 to wrap the first one 212a of the two end surfaces 212. By providing the opening 421 on the connection zone 420, the opening 421 can form a clearance for the tab part 201, reducing the interference from the tab part 201 with the wrapping process, thereby improving the wrapping effect of the wrapping film 400 on the first one 212a of the two end surfaces 212.

When the electrode assembly 200 is loaded into the housing 100, firstly, the tab part 201 and the opening of the housing 100 are disposed opposite to each other and spaced apart from each other in the second direction D2, and then the electrode assembly 200 is moved toward the housing 100 in the second direction D2, such that the tab part 201 and the first one 212a of the two end surfaces 212 sequentially enter the housing 100. The connection zone 420 and the main wrapping zone 410 can constrain the electrode assembly 200, forming a circular arc-shaped surface at the joint between the main surface 211 and the first one 212a of the two end surfaces 212 of the electrode assembly 200. As a result, the first one 212a of the two end surfaces 212 enters the housing 100 more smoothly, facilitating the loading of the electrode assembly 200 into the housing 100, thereby improving the assembly efficiency and the assembly effect.

Further, no tab part 201 is disposed on the two main surfaces 211, the two side surfaces 213, and the second one 212b of the two end surfaces 212 of the electrode main body 210. The wrapping device 300 controls the wrapping film 400 to wrap the first one 212a of the two end surfaces 212 earlier than the wrapping device 300 controls the wrapping film 400 to wrap the second one 212b of the two end surfaces 212 of the electrode main body 210, as well as the two main surfaces 211 and the two side surfaces 213 of the electrode main body 210. During the process of the wrapping film 400 wrapping the electrode main body 210, the edges of the wrapping film 400 need to be fixed, such that the wrapping film 400 can be fixed to the electrode main body 210. The wrapping device 300 controls the wrapping film 400 to first wrap the first one 212a of the two end surfaces 212, such that the edge of the wrapping film 400 falls beyond the first one 212a of the two end surfaces 212. In this way, the tab part 201 does not interfere with the fixing operation performed on the edge of the wrapping film 400, thereby improving the wrapping effect of the wrapping film 400 on the electrode main body 210. In addition, the edge of the wrapping film 400 falls beyond the first one 212a of the two end surfaces 212, reducing the risk of the edge of the wrapping film 400 being detached from the electrode main body 210 due to compression when the first one 212a of the two end surfaces 212 enters the housing 100, thereby facilitating the loading of the electrode assembly 200 into the housing 100.

According to some embodiments of the present application, optionally, as shown in FIGs. 5 to 7, before the first one 212a of the two end surfaces 212 contacts the connection zone 420, the first wrapping assembly 330 is configured such that the connection zone 420 and the two main wrapping zones 410 are coplanar with each other.

By setting the connection zone 420 and the two main wrapping zones 410 to be coplanar with each other, the stacked storage of the wrapping film 400 is facilitated, the occupied space of the wrapping film 400 is reduced, and the material feeding of the wrapping film 400 is facilitated. For example, the first wrapping assembly 330 stretches the wrapping film 400 by pulling the wrapping film 400, such that the connection zone 420 and the two main wrapping zones 410 are coplanar with each other.

According to some embodiments of the present application, optionally, as shown in FIGs. 5 to 7, at least one of the first positioning assembly 310 and the first wrapping assembly 330 is configured to move in the second direction D2, such that the electrode assembly 200 and the wrapping film 400 approach each other in the second direction D2, and after the first one 212a of the two end surfaces 212 contacts the connection zone 420, to drive the electrode assembly 200 to continue to move in the second direction D2 relative to the end parts of the two main wrapping zones 410 distal to the connection zone 420. The first wrapping assembly 330 is configured to move in the first direction D1, such that the end parts of the two main wrapping zones 410 move close to each other in the first direction D1; as a result, the two main wrapping zones 410 each contact and wrap the exposed portion of the corresponding one of the two main surfaces 211.

The first positioning assembly 310 and the first wrapping assembly 330 can drive the electrode assembly 200 and the wrapping film 400 to approach each other. The first wrapping assembly 330 can separately drive the end parts of the two main wrapping zones 410 to move close to each other. The first one 212a of the two end surfaces 212 may be connected between the two main surfaces 211 of the electrode main body 210, such that the connection zone 420 wraps the first one 212a of the two end surfaces 212 and the two main wrapping zones 410 can wrap the two main surfaces 211, respectively. In some embodiments, the two main wrapping zones 410 are separately movable relative to the connection zone 420, such that when the connection zone 420 wraps the first one 212a of the two end surfaces 212, the two main wrapping zones 410 can wrap the two main surfaces 211 by moving relative to the connection zone 420. The first wrapping assembly 330 may be configured to be capable of driving the two main wrapping zones 410 to separately move relative to the connection zone 420.

When the first positioning assembly 310 positions the electrode assembly 200, the acting position of the first positioning assembly 310 on the electrode assembly 200 may be the two main surfaces 211, the two side surfaces 213, or the second one 212b of the two end surfaces 212. When the acting position of the first positioning assembly 310 on the electrode assembly 200 is the two main surfaces 211, the two main surfaces 211 remain partially exposed, separately. When the acting position of the first positioning assembly 310 on the electrode assembly 200 is the two side surfaces 213 or the second one 212b of the two end surfaces 212, the two main surfaces 211 can remain entirely exposed, separately.

Specifically, the first positioning assembly 310 can drive the electrode assembly 200 to move toward the wrapping film 400 in the second direction D2, or the first wrapping assembly 330 can drive the wrapping film 400 to move toward the electrode assembly 200 in the second direction D2, or the first positioning assembly 310 drives the electrode assembly 200 to move toward the wrapping film 400 in the second direction D2 while the first wrapping assembly 330 drives the wrapping film 400 to move toward the electrode assembly 200 in the second direction D2, such that the electrode assembly 200 and the wrapping film 400 approach each other in the second direction D2 until the first one 212a of the two end surfaces 212 contacts and is wrapped by the connection zone 420.

The two main surfaces 211 may be connected between the two end surfaces 212 in the second direction D2. After the first one 212a of the two end surfaces 212 contacts the connection zone 420, by driving the electrode assembly 200 to continue to move in the second direction D2 relative to the end parts of the two main wrapping zones 410 distal to the connection zone 420, the projections of the two main wrapping zones 410 on the corresponding main surfaces 211 in the first direction D1 can gradually cover the exposed portions of the main surfaces 211. In this case, the first wrapping assembly 330 drives the end parts of the two main wrapping zones 410 to move close to each other in the first direction D1, such that the two main wrapping zones 410 contact and wrap the exposed portions of the corresponding ones of the two main surfaces 211.

By providing the first positioning assembly 310 and the first wrapping assembly 330, the relative position relationship between the two main surfaces 211 and the two wrapping zones can be adjusted, and the relative position relationship between the first one 212a of the two end surfaces 212 and the connection zone 420 can be adjusted. When the wrapping film 400 wraps the two main surfaces 211 and the first one 212a of the two end surfaces 212 of the electrode main body 210, the stability of the wrapping process can be improved, and the wrapping film 400 can smoothly transition between wrapping the first one 212a of the two end surfaces 212 and wrapping the two main surfaces 211. This simplifies the operation of the wrapping process and is conducive to improving the wrapping efficiency.

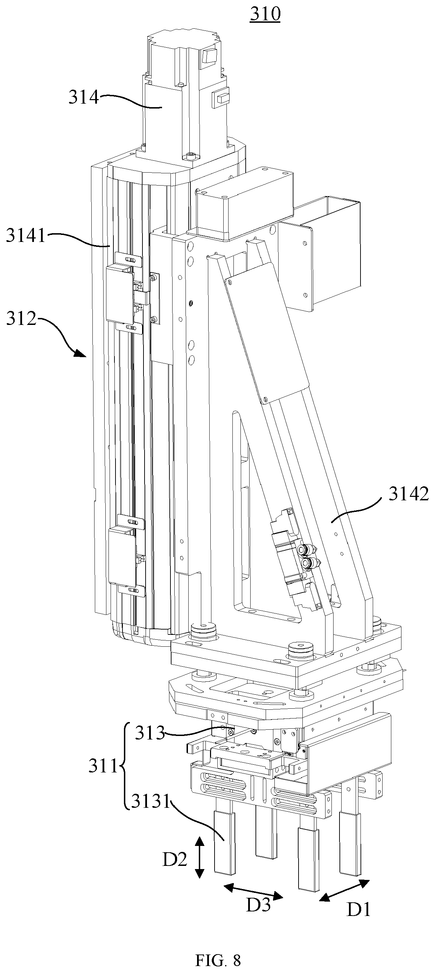

According to some embodiments of the present application, optionally, as shown in FIGs. 5 and 8, the first positioning assembly 310 includes an electrode clamp 311. The electrode clamp 311 is configured to clamp and fix the electrode main body 210 from the outer sides of the two side surfaces 213 in the third direction D3, or configured to clamp and fix the electrode main body 210 from the outer sides of the two main surfaces 211 in the first direction D1.

When the electrode clamp 311 clamps and fixes the electrode main body 210, the electrode clamp 311 and the electrode main body 210 can remain relatively fixed. By configuring the electrode clamp 311 to clamp and fix the electrode main body 210, the first positioning assembly 310 can position the electrode assembly 200. By configuring the electrode clamp 311 to clamp and fix the electrode main body 210 from the outer sides of the two side surfaces 213 in the third direction D3, the electrode clamp 311 can maintain clearance from the two main surfaces 211 of the electrode main body 210, which is beneficial to increasing the area of the exposed portions of the two main surfaces 211 and improving the wrapping effect on the two main surfaces 211. The area of the two main surfaces 211 is greater than the area of the two side surfaces 213. By configuring the electrode clamp 311 to clamp and fix the electrode main body 210 from the outer sides of the two main surfaces 211 in the first direction D1, the stability of clamping and fixing the electrode main body 210 by the electrode clamp 311 is improved.

Further, the electrode main body 210 includes two electrode modules 220 described below. By configuring the electrode clamp 311 to clamp and fix the electrode main body 210 from the outer sides of the two main surfaces 211 in the first direction D1, it is beneficial for the two electrode modules 220 to remain relatively fixed, and the stability of clamping and fixing the electrode main body 210 by the electrode clamp 311 is improved.

Optionally, as shown in FIGs. 5 and 8, the electrode clamp 311 is in transmission connection with an electrode clamping cylinder 313, and the electrode clamping cylinder 313 may control the electrode clamp 311 to clamp or release the electrode main body 210.

According to some embodiments of the present application, optionally, as shown in FIGs. 5 and 8, the first positioning assembly 310 includes an electrode transmission mechanism 312. The electrode transmission mechanism 312 is configured to drive the electrode clamp 311 to move in the second direction D2, such that after the first one 212a of the two end surfaces 212 contacts the connection zone 420, the first one 212a of the two end surfaces 212 and the connection zone 420 are driven to continue to move synchronously in the second direction D2.

The electrode transmission mechanism 312 can drive the electrode assembly 200 to move in the second direction D2 toward the side where the wrapping film 400 is located. The electrode transmission assembly can provide power for the movement of the electrode assembly 200 in the second direction D2. Such a configuration enables a smooth transition of the wrapping film 400 between wrapping the first one 212a of the two end surfaces 212 and wrapping the two main surfaces 211, simplifying the operation of the wrapping process and helping to improve the wrapping efficiency.

Further, the electrode transmission mechanism 312 may be in transmission connection with the electrode clamp 311. The electrode transmission mechanism 312 can drive the electrode assembly 200 to move in the second direction D2 by driving the electrode clamp 311 to move in the second direction D2.

Optionally, as shown in FIGs. 5 and 8, the electrode transmission mechanism 312 includes an electrode transmission motor 314, a screw rod, and a slider. The electrode transmission motor 314 can drive the screw rod to rotate. The slider sleeves the screw rod and is engaged with the screw rod through threads. The slider and the electrode assembly 200 are oppositely and fixedly disposed, and the rotation axis of the screw rod is set parallel to the second direction D2. When the electrode transmission motor 314 drives the screw rod to rotate, the slider may be driven to move in the direction of the rotation axis of the screw rod, so as to drive the electrode assembly 200 to move in the second direction D2.

According to some embodiments of the present application, optionally, as shown in FIGs. 5 and 8, the electrode transmission mechanism 312 includes an electrode transmission motor 314, a first electrode support 3141, and a second electrode support 3142. The electrode transmission motor 314 is disposed on the first electrode support 3141, and the electrode transmission motor 314 is configured to drive the second electrode support 3142 to move relative to the first electrode support 3141 in the second direction D2. The electrode clamp 311 is disposed on the second electrode support 3142 and includes an electrode clamping jaw 3131 and an electrode clamping cylinder 313. The electrode clamping cylinder 313 is configured to drive the electrode clamping jaw 3131, such that the electrode clamping jaw 3131 clamps and fixes the electrode main body 210.

Such a configuration facilitates the stable movement of the electrode assembly 200, and can improve the accuracy of positioning the electrode assembly 200.

In some embodiments, the first wrapping assembly 330 includes a support frame, a support transmission mechanism, and two support plates spaced apart from each other. The support transmission mechanism and the two support plates are disposed on the support frame, one end of each support plate is rotatably connected to the support frame, and the support transmission mechanism is configured to drive the two support plates to rotate relative to the support frame, such that the two support plates switch between a laid-flat state and an opposing state. The two support plates are each provided with a support plane. In the laid-flat state, the two support planes face in the same direction and are coplanar, and the two support planes are configured to separately support one main wrapping zone 410, such that the connection zone 420 and the two main wrapping zones 410 can be coplanar with each other. The two support plates are spaced apart from each other, such that the connection zone 420 is in a suspended state. In the opposing state, the two support planes are spaced apart from each other and opposite to each other, such that the two main wrapping zones 410 correspondingly supported by the two support planes are bent relative to the connection zone 420. In this way, the two support plates switch from the laid-flat state to the opposing state, such that the two main wrapping zones 410 can wrap the two main surfaces 211.

Optionally, the two support plates are each provided with an adsorption structure, and the adsorption structure is configured to keep the main wrapping zone 410 and the support plate relatively fixed by adsorbing the main wrapping zone 410.

According to some embodiments of the present application, optionally, as shown in FIGs. 5 to 7, and 9, the first wrapping assembly 330 includes two first wrapping sub-assemblies 331 spaced apart from each other. Each first wrapping sub-assembly 331 separately includes a film clamp 332 and a first film transmission mechanism 333. Two film clamps 332 clamp and fix two ends of the wrapping film 400 distal to the connection zone 420, respectively. The first film transmission mechanism 333 drives the two film clamps 332 to move close to each other in the first direction D1, such that the zone of the main wrapping zone 410 that is not clamped by the film clamp 332 can be bent toward the corresponding main surface 211 relative to the connection zone 420.

In some embodiments, two ends of the wrapping film 400 distal to the connection zone 420 may be located in the two main wrapping zones 410. In this case, the main wrapping zone 410 wraps and is clamped by the film clamp 332. In some other embodiments, two ends of the wrapping film 400 distal to the connection zone 420 may be located outside the two main wrapping zones 410. In this case, the main wrapping zone 410 is not clamped by the film clamp 332. For example, the wrapping film 400 includes an end wrapping zone 440 described below. Two ends of the wrapping film 400 distal to the connection zone 420 may be located in the end wrapping zone 440.

When the first film transmission mechanism 333 drives the two film clamps 332 to move close to each other in the first direction D1, the two film clamps 332 may drive the two ends of the wrapping film 400 distal to the connection zone 420 to move close to each other, thereby driving the two main wrapping zones 410 to move toward the corresponding main surfaces 211. When the main wrapping zone 410 moves toward the corresponding main surface 211, the region of the main wrapping zone 410 that is not clamped by the film clamp 332 can be bent relative to the connection zone 420.

In the first direction D1, the acting forces respectively exerted by the two film clamps 332 on the connection zone 420 through the two main wrapping zones 410 can cancel each other out. As a result, after the connection zone 420 contacts the electrode main body 210, the connection zone and the electrode main body 210 can remain relatively fixed. Meanwhile, in the second direction D2, the connection zone 420 is supported by the electrode main body 210, such that the connection zone 420 can be used as a fulcrum for the bending of the region of the main wrapping zone 410 that is not clamped by the film clamp 332.

By configuring the two film clamps 332 to respectively clamp and fix the two ends of the wrapping film 400 distal to the connection zone 420, the control of the movement of the main wrapping zone 410 is facilitated. In addition, this helps the region of the main wrapping zone 410 that is not clamped by the film clamp 332 to remain in an extended state, and facilitates the action of wrapping the main surface 211 by the main wrapping zone 410, thereby improving the wrapping effect of the main wrapping zone 410 on the main surface 211.

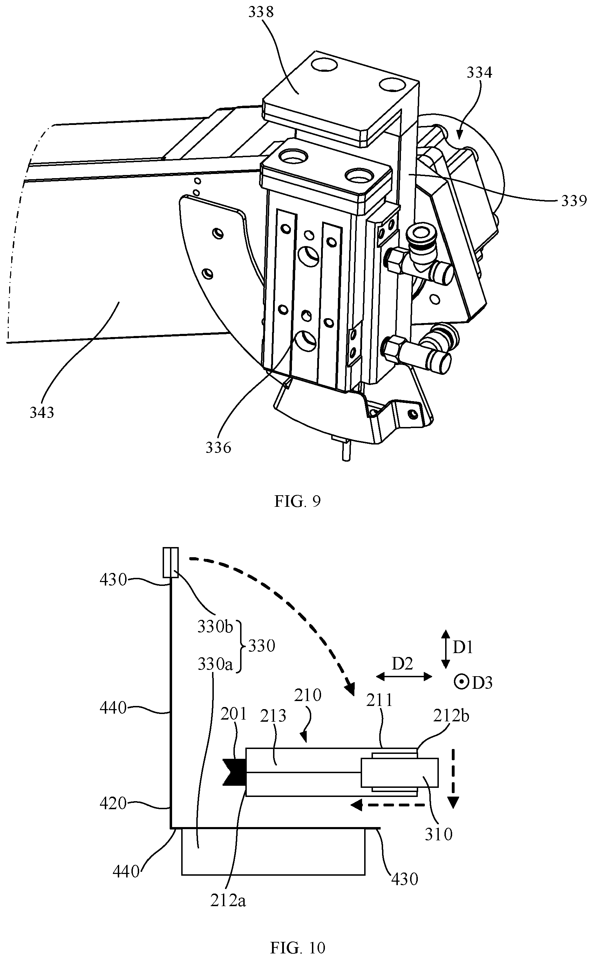

Optionally, as shown in FIGs. 5 and 9, the film clamp 332 is in transmission connection with a film clamping cylinder 336, and the film clamping cylinder 336 may control the film clamp 332 to clamp or release the wrapping film 400.

Optionally, as shown in FIGs. 5 and 9, the first film transmission mechanism 333 includes a first film transmission motor 337, and two first film transmission motors 337 are configured to drive the two film clamps 332 to move close to each other in the first direction D1, respectively. Specifically, the first film transmission mechanism 333 further includes a screw rod and a slider. The first film transmission motor 337 can drive the screw rod to rotate, and the slider is sleeved over the screw rod and is engaged with the screw rod through threads. The slider and the film clamp 332 are oppositely and fixedly disposed, and the rotation axis of the screw rod is set parallel to the first direction D1. When the first film transmission motor 337 drives the screw rod to rotate, the slider may be driven to move in the direction of the rotation axis of the screw rod, so as to drive the film clamp 332 to move in the first direction D1.

Optionally, as shown in FIGs. 5 and 9, each film clamp 332 is provided with two film clamping jaws 338, each film clamping jaw 338 is configured to clamp one corner of the wrapping film 400, and four film clamping jaws 338 clamp four corners of the wrapping film 400, respectively.

According to some embodiments of the present application, optionally, as shown in FIGs. 5 and 9, the first film transmission mechanism 333 includes a first film transmission motor 337, a first film support 3371, and a second film support 342. The first film transmission motor 337 is disposed on the first film support 3371, and the first film transmission motor 337 is configured to drive the second film support 342 to move relative to the first film support 3371 in the first direction D1. The film clamp 332 is disposed on the second film support 342 and includes a film clamping jaw 338 and a film clamping cylinder 336. The film clamping cylinder 336 is configured to drive the film clamping jaw 338, such that the film clamping jaw 338 clamps and fixes the wrapping film 400.

Such a configuration facilitates the stable movement of the wrapping film 400, and can improve the accuracy of positioning the wrapping film 400.

According to some embodiments of the present application, optionally, as shown in FIGs. 5 to 7, and 9, each first wrapping sub-assembly 331 further separately includes a second film transmission mechanism 334. Two second film transmission mechanisms 334 drive the corresponding film clamps 332 to rotate, respectively, such that the movement trend of zones of the wrapping film 400 that are clamped by the film clamps 332 relative to the connection zone 420 remains consistent with the bending trend of the unclamped zone of the main wrapping zone 410 relative to the connection zone 420.

After the unclamped region of the main wrapping zone 410 is bent relative to the connection zone 420, the wrapping can be formed on the main surface 211. After the unclamped region of the main wrapping zone 410 wraps the main surface 211, the film clamp 332 may release the clamping of the wrapping film 400. The region of the wrapping film 400 that is clamped by the film clamp 332 also needs to be wrapped onto the electrode main body 210. By setting the movement trend of the region of the wrapping film 400 that is clamped by the film clamp 332 relative to the connection zone 420 to be consistent with the bending trend of the unclamped region of the main wrapping zone 410 relative to the connection zone 420, the region of the wrapping film 400 that is clamped by the film clamp 332 is closer to the electrode main body 210, thereby facilitating the wrapping of the region of the wrapping film 400 that is clamped by the film clamp 332 on the electrode main body 210.

In addition, after the film clamp 332 releases the clamping of the wrapping film 400, by setting the movement trend of the region of the wrapping film 400 that is clamped by the film clamp 332 relative to the connection zone 420 to be consistent with the bending trend of the unclamped region of the main wrapping zone 410 relative to the connection zone 420, the adverse effect of the region of the wrapping film 400 that is clamped by the film clamp 332 on the unclamped region of the main wrapping zone 410 wrapping the main surface 211 can be reduced, thereby reducing the risk that the unclamped region of the main wrapping zone 410 falls off from the main surface 211.

Optionally, as shown in FIGs. 5 and 9, the second film transmission mechanism 334 includes a fourth film support 339 and a second film transmission motor 340. A film clamp 332 is disposed on the fourth film support 339, and the second film transmission motor 340 is configured to drive the fourth film support 339 to rotate. Further, the film clamping cylinder 336 is fixed to the fourth film support 339.

According to some embodiments of the present application, optionally, as shown in FIGs. 5 and 9, the first film transmission mechanism 333 includes a first film transmission motor 337, a first film support 3371, and a second film support 342. The first film transmission motor 337 is disposed on the first film support 3371, and the first film transmission motor 337 is configured to drive the second film support 342 to move relative to the first film support 3371 in the first direction D1. The second film transmission mechanism 334 includes a second film transmission motor 340. The second film transmission motor 340 is disposed on the second film support 342 and drives the film clamp 332 to rotate. The film clamp 332 includes a film clamping jaw 338 and a film clamping cylinder 336. The film clamping cylinder 336 is configured to drive the film clamping jaw 338, such that the film clamping jaw 338 clamps and fixes the wrapping film 400.

Such a configuration can improve the movement flexibility of the wrapping film 400, thereby improving the wrapping effect.

According to some embodiments of the present application, optionally, as shown in FIGs. 5 and 9, each first wrapping sub-assembly 331 further separately includes a third film transmission mechanism 335. Two third film transmission mechanisms 335 drive the corresponding film clamps 332 to move in the second direction D2 toward the side where the electrode main body 210 is located, respectively. When the film clamp 332 moves in the second direction D2 toward the side where the electrode main body 210 is located, the electrode assembly 200 can remain fixed or move in the second direction D2 toward the wrapping film 400.

In such a configuration, by driving the film clamp 332 to move in the second direction D2 toward the side where the electrode main body 210 is located, the first one 212a of the two end surfaces 212 can contact the connection zone 420, and can drive the main wrapping zone 410 to move in the second direction D2 toward the side where the electrode main body 210 is located. In addition, the projections of the two main wrapping zones 410 on the corresponding main surfaces 211 in the first direction D1 can gradually cover the exposed portions of the main surfaces 211, thereby facilitating wrapping the main surfaces 211 by the main wrapping zones 410.

Optionally, as shown in FIGs. 5 to 7, and 9, the first positioning assembly 310 includes an electrode clamp 311 and an electrode transmission mechanism 312. The electrode clamp 311 is configured to clamp and fix the electrode main body 210. The electrode transmission mechanism 312 is configured to drive the electrode assembly 200 to move in the second direction D2 toward the side where the wrapping film 400 is located, such that after the first one 212a of the two end surfaces 212 contacts the connection zone 420, the first one 212a of the two end surfaces 212 and the connection zone 420 continue to move synchronously in the second direction D2. The third film transmission mechanism 335 is configured to drive, in the second direction D2, the corresponding film clamp 332 to move in the second direction D2. Further, the third film transmission mechanism 335 drives, in the second direction D2, the corresponding film clamp 332 to move toward the side distal to the electrode main body 210 in the second direction D2 after the first one 212a of the two end surfaces 212 contacts the connection zone 420.

The direction in which the film clamp 332 moves in the second direction D2 may be the same as the direction in which the electrode assembly 200 moves in the second direction D2, such that the wrapping film 400 and the electrode assembly 200 can move to a new station synchronously. In the process that the wrapping film 400 and the electrode assembly 200 move synchronously to a new station, the displacement travel of the film clamp 332 moving in the second direction D2 toward the side distal to the electrode main body 210 is less than the displacement travel of the electrode assembly 200 moving in the second direction D2 toward the side where the wrapping film 400 is located, such that a relative displacement between the wrapping film 400 and the electrode assembly 200 is created. Thus, the first one 212a of the two end surfaces 212 can contact the connection zone 420, and can drive the main wrapping zone 410 to move in the second direction D2 toward the side where the electrode main body 210 is located. In addition, the projections of the two main wrapping zones 410 on the corresponding main surfaces 211 in the first direction D1 can gradually cover the exposed portions of the main surfaces 211, thereby facilitating wrapping the main surfaces 211 by the main wrapping zones 410.

Optionally, as shown in FIGs. 5 and 9, the third film transmission mechanism 335 is provided with a third film transmission motor 341, and the third film transmission motor 341 is configured to drive the film clamp 332 to move in the second direction D2. Specifically, the third film transmission mechanism 335 further includes a screw rod and a slider. The third film transmission motor 341 can drive the screw rod to rotate, and the slider is sleeved over the screw rod and is engaged with the screw rod through threads. The slider and the film clamp 332 are oppositely and fixedly disposed, and the rotation axis of the screw rod is set parallel to the second direction D2. When the third film transmission motor 341 drives the screw rod to rotate, the slider may be driven to move in the direction of the rotation axis of the screw rod, so as to drive the film clamp 332 to move in the second direction D2.

Optionally, as shown in FIGs. 5 and 9, the first wrapping sub-assembly 331 is provided with a second film support 342 and a third film support 343. The second film support 342 extends in the second direction D2, and the third film support 343 is slidably disposed on the second film support 342 in the second direction D2. The second film transmission mechanism 334 and the film clamp 332 are disposed on the third film support 343. The third film transmission mechanism 335 is in transmission connection with the third film support 343, and the third film transmission mechanism 335 may drive the third film support 343 to move in the second direction D2, such that the third film support 343 drives the second film transmission mechanism 334 and the film clamp 332 to move in the second direction D2. The third film transmission mechanism 335 is disposed on the second film support 342, the first film transmission mechanism 333 is in transmission connection with the second film support 342, and the first film transmission mechanism 333 may drive the second film support 342 to move in the first direction D1, such that the second film support 342 drives the third film transmission mechanism 335, the third film support 343, the second film transmission mechanism 334, and the film clamp 332 to move in the first direction D1.

According to some embodiments of the present application, optionally, as shown in FIGs. 5 and 9, the first film transmission mechanism 333 includes a first film transmission motor 337, a first film support 3371, and a second film support 342. The first film transmission motor 337 is disposed on the first film support 3371, and the first film transmission motor 337 is configured to drive the second film support 342 to move relative to the first film support 3371 in the first direction D1. The third film transmission mechanism 335 includes a third film transmission motor 341 and a third film support 343. The third film transmission motor 341 is disposed on the second film support 342, and drives the third film support 343 to move relative to the second film support 342 in the second direction D2. The second film transmission mechanism 334 includes a second film transmission motor 340. The second film transmission motor 340 is disposed on the third film support 343 and drives the film clamp 332 to rotate. The film clamp 332 includes a film clamping jaw 338 and a film clamping cylinder 336. The film clamping cylinder 336 is configured to drive the film clamping jaw 338, such that the film clamping jaw 338 clamps and fixes the wrapping film 400.

Such a configuration can further improve the movement flexibility of the wrapping film 400, thereby improving the wrapping effect.

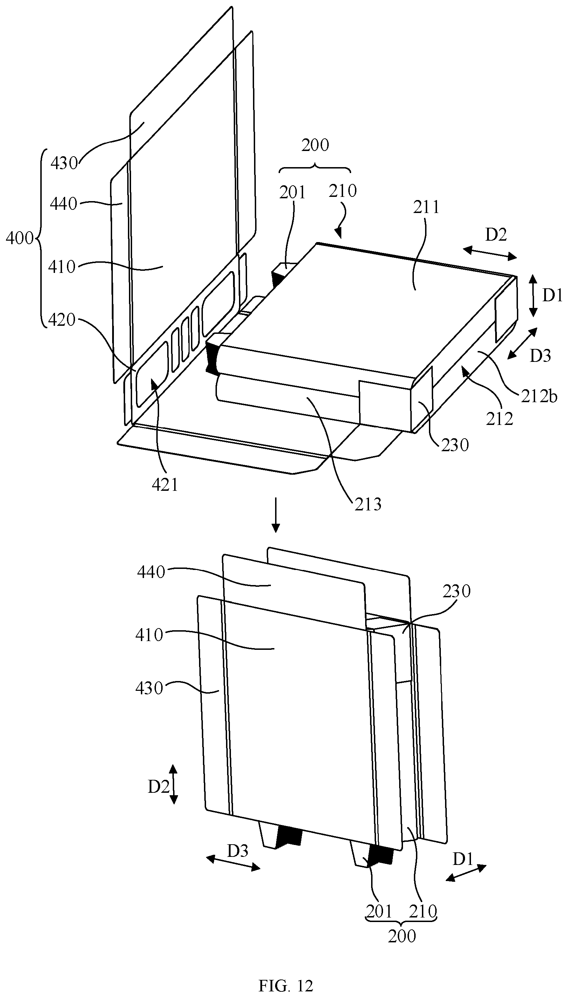

According to some embodiments of the present application, optionally, as shown in FIGs. 10 to 12, before the first one 212a of the two end surfaces 212 contacts the connection zone 420, the first wrapping assembly 330 is configured such that the connection zone 420 and the first one of the two main wrapping zones 410 are bent relative to each other.

The connection zone 420 and the first one of the two main wrapping zones 410 are bent relative to each other, which is conducive to the compact structure of the first wrapping assembly 330 and reduces the occupied space of the first wrapping assembly 330. Specifically, if the connection zone 420 is coplanar with the first one of the two main wrapping zones 410, the maximum distance between the edge of the connection zone 420 and the edge of the first one of the two main wrapping zones 410 may be greater. The positioning effect of the first wrapping assembly 330 when positioning the wrapping film 400 needs to reach the edge of the connection zone 420 and the edge of the first one of the two main wrapping zones 410, and thus a greater distance exists between positions where the first wrapping assembly 330 acts on the wrapping film 400. Consequently, the first wrapping assembly 330 occupies a larger space.

The first wrapping assembly 330 may position the connection zone 420 and the first one of the two main wrapping zones 410 that are bent relative to each other, such that the connection zone 420 and the first one of the two main wrapping zones 410 remain bent relative to each other. In some embodiments, the first wrapping assembly 330 is configured to control the connection zone 420 and the first one of the two main wrapping zones 410 that are coplanar to move relative to each other, such that the two are bent relative to each other.

According to some embodiments of the present application, optionally, as shown in FIGs. 10 to 12, before the first one 212a of the two end surfaces 212 contacts the connection zone 420, the first wrapping assembly 330 is configured such that the connection zone 420 and the second one of the two main wrapping zones 410 are coplanar with each other.

By configuring the connection zone 420 and the second one of the two main wrapping zones 410 to be coplanar with each other, the second one of the two main wrapping zones 410 does not block the connection zone 420, such that the interference of the second one of the two main wrapping zones 410 to the process that the tab part 201 passes through the opening 421 can be reduced, and the interference of the second one of the two main wrapping zones 410 to the process that the connection zone 420 contacts and wraps the first one 212a of the two end surfaces 212 can be reduced.

For example, the first wrapping assembly 330 stretches the wrapping film 400 partially by pulling the wrapping film 400, such that the connection zone 420 and the two main wrapping zones 410 are coplanar with each other.

According to some embodiments of the present application, optionally, as shown in FIGs. 10 to 12, the first wrapping assembly 330 includes a first wrapping sub-assembly 331 and a second wrapping sub-assembly 344. The first wrapping sub-assembly 331 clamps and fixes an end part of the wrapping film 400 distal to the first one of the two main wrapping zones 410. The second wrapping sub-assembly 344 is configured to support and position the first one of the two main wrapping zones 410.

On the basis that the second wrapping sub-assembly 344 positions the first one of the two main wrapping zones 410, the first wrapping sub-assembly 331 clamps and fixes the end part of the wrapping film 400 distal to the first one of the two main wrapping zones 410, thereby positioning the wrapping film 400. Therefore, the second wrapping sub-assembly 344 and the first wrapping sub-assembly 331 can position the connection zone 420 without directly contacting the connection zone 420, thereby reducing the interference to the process that the tab part 201 passes through the opening 421, and reducing the interference to the process that the connection zone 420 contacts and wraps the first one 212a of the two end surfaces 212.

Specifically, the connection zone 420 is connected between the two main wrapping zones 410, so the position of the first one of the two main wrapping zones 410 may constrain the position of the second one of the two main wrapping zones 410 and the position of the connection zone 420. The second one of the two main wrapping zones 410 is integrally connected to the connection zone 420, and the two can stretch under the action of the first wrapping sub-assembly 331 and the first one of the two main wrapping zones 410. The second one of the two main wrapping zones 410 and the connection zone 420 can be positioned by the second wrapping sub-assembly 344 and the first wrapping sub-assembly 331.

For example, the second wrapping sub-assembly 344 is disposed below the first one of the two main wrapping zones 410, thereby supporting the first one of the two main wrapping zones 410. In addition, the second wrapping sub-assembly 344 can position the first one of the two main wrapping zones 410 through negative pressure suction.

According to some embodiments of the present application, optionally, as shown in FIGs. 10 to 12, the first positioning assembly 310 is configured to move in the second direction D2, such that the first one 212a of the two end surfaces 212 contacts the connection zone 420. The first positioning assembly 310 is further configured to move in the first direction D1, such that the first one of the two main surfaces 211 contacts the first one of the two main wrapping zones 410. The first wrapping sub-assembly 331 is configured to move in the first direction D1 and the second direction D2, such that the second one of the two main wrapping zones 410 contacts the second one of the two main surfaces 211. Specifically, the first positioning assembly 310 can drive the electrode assembly 200 in the second direction D2, such that the first one 212a of the two end surfaces 212 contacts the connection zone 420. The first positioning assembly 310 can drive the electrode assembly 200 in the first direction D1, such that the first one of the two main surfaces 211 contacts the first one of the two main wrapping zones 410. The first wrapping sub-assembly 331 can drive the end part of the second one of the two main wrapping zones 410 in the first direction D1 and the second direction D2, such that the second one of the two main wrapping zones 410 contacts the second one of the two main surfaces 211.

The first positioning assembly 310 may be configured to first drive the electrode assembly 200 in the second direction D2, such that the first one 212a of the two end surfaces 212 contacts the connection zone 420. Then, the first positioning assembly 310 is further configured to drive the electrode assembly 200 in the first direction D1, such that the first one of the two main surfaces 211 contacts the first one of the two main wrapping zones 410. Alternatively, the first positioning assembly 310 may be configured to first drive the electrode assembly 200 in the first direction D1, such that the first one of the two main surfaces 211 contacts the first one of the two main wrapping zones 410. Then, the first positioning assembly 310 is further configured to drive the electrode assembly 200 in the second direction D2, such that the first one 212a of the two end surfaces 212 contacts the connection zone 420. Alternatively, the first positioning assembly 310 may be configured to drive the electrode assembly 200 in the first direction D1 and drive the electrode assembly 200 in the second direction D2 simultaneously.

After the first one 212a of the two end surfaces 212 contacts the connection zone 420, the first wrapping sub-assembly 331 can drive the end part of the second one of the two main wrapping zones 410 in the first direction D1 and the second direction D2, such that the second one of the two main wrapping zones 410 contacts the second one of the two main surfaces 211. For example, the first wrapping sub-assembly 331 can simultaneously drive the end part of the second one of the two main wrapping zones 410 in the first direction D1 and the second direction D2, such that the end part of the second one of the main wrapping zones 410 moves toward an end of the main surface 211 distal to the tab part 201, thereby driving the second one of the main wrapping zones 410 to rotate relative to the connection zone 420 until the second one of the main wrapping zones 410 contacts the second one of the two main surfaces 211.

Such a configuration can adjust the relative position relationship between the electrode assembly 200 and the wrapping film 400. When the wrapping film 400 wraps the two main surfaces 211 and the first one 212a of the two end surfaces 212 of the electrode main body 210, the continuous wrapping of the two main surfaces 211 and the first one 212a of the two end surfaces 212 can be achieved, which can improve the stability of the wrapping process and enable the wrapping action to be simpler and smoother.

Optionally, as shown in FIGs. 9 to 12, the first wrapping sub-assembly 331 may include the above film clamp 332, the first film transmission mechanism 333, and the second film transmission mechanism 334 described above. The first wrapping sub-assembly 331 may further include a third film transmission mechanism 335. The film clamp 332 clamps and fixes the end part of the wrapping film 400 distal to the first one of the two main wrapping zones 410. The first film transmission mechanism 333, the second film transmission mechanism 334, and the third film transmission mechanism 335 can drive the end part of the second one of the two main wrapping zones 410 in the first direction D1 and the second direction D2 by driving the film clamp 332 to move, such that the second one of the two main wrapping zones 410 contacts the second one of the two main surfaces 211.

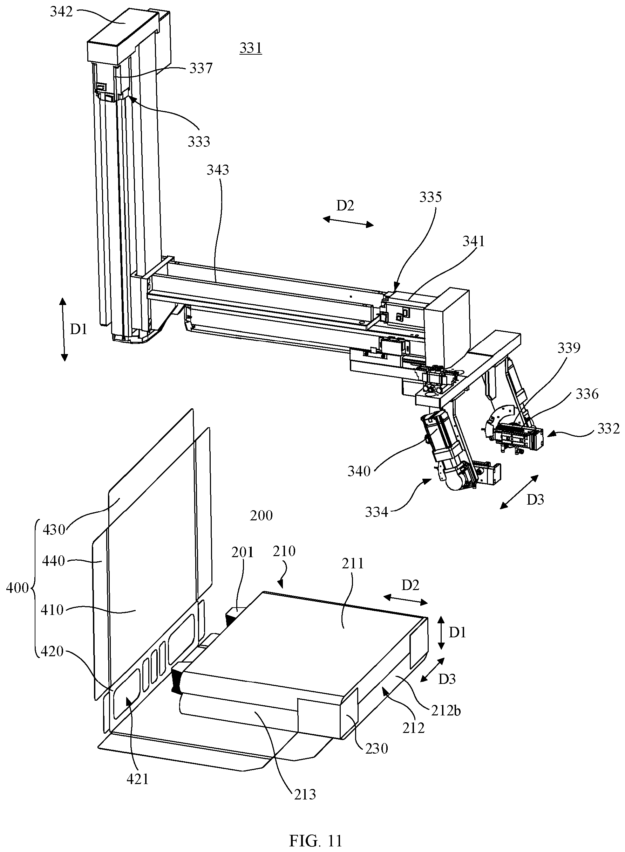

Optionally, as shown in FIGs. 9 and 11, the third film transmission mechanism 335 is provided with a third film transmission motor 341, and the third film transmission motor 341 is configured to drive the film clamp 332 to move in the second direction D2. Specifically, the third film transmission mechanism 335 further includes a screw rod and a slider. The third film transmission motor 341 can drive the screw rod to rotate, and the slider is sleeved over the screw rod and is engaged with the screw rod through threads. The slider and the film clamp 332 are oppositely and fixedly disposed, and the rotation axis of the screw rod is set parallel to the second direction D2. When the third film transmission motor 341 drives the screw rod to rotate, the slider may be driven to move in the direction of the rotation axis of the screw rod, so as to drive the film clamp 332 to move in the second direction D2.

Optionally, as shown in FIGs. 9 and 11, the first wrapping sub-assembly 331 is provided with a second film support 342 and a third film support 343. The second film support 342 extends in the second direction D2, and the third film support 343 is slidably disposed on the second film support 342 in the second direction D2. The second film transmission mechanism 334 and the film clamp 332 are disposed on the third film support 343. The third film transmission mechanism 335 is in transmission connection with the third film support 343, and the third film transmission mechanism 335 may drive the third film support 343 to move in the second direction D2, such that the third film support 343 drives the second film transmission mechanism 334 and the film clamp 332 to move in the second direction D2. The third film transmission mechanism 335 is disposed on the second film support 342, the first film transmission mechanism 333 is in transmission connection with the second film support 342, and the first film transmission mechanism 333 may drive the second film support 342 to move in the first direction D1, such that the second film support 342 drives the third film transmission mechanism 335, the third film support 343, the second film transmission mechanism 334, and the film clamp 332 to move in the first direction D1.

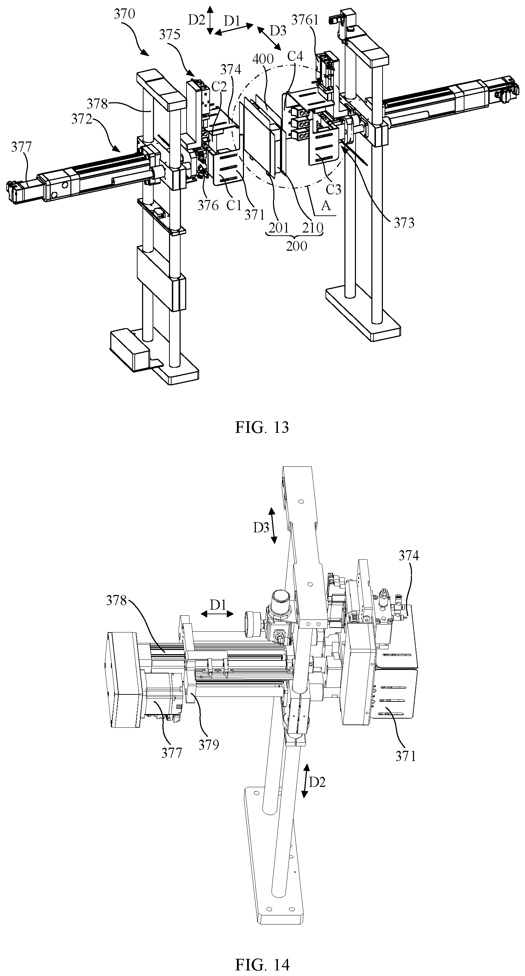

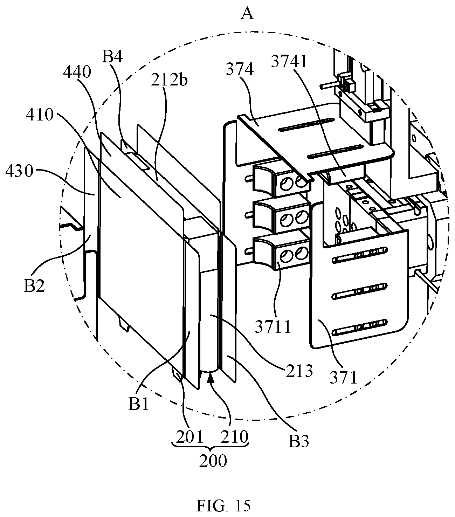

According to some embodiments of the present application, optionally, as shown in FIGs. 13 to 15, the wrapping film 400 includes a side wrapping zone 430 connected to the main wrapping zone 410. The wrapping device 300 further includes a second wrapping assembly 370, and the second wrapping assembly 370 is configured to drive the side wrapping zone 430 to contact and wrap the side surface 213.

The second wrapping assembly 370 can adjust the relative position relationship between the electrode assembly 200 and the side wrapping zone 430. By providing the second wrapping assembly 370, the side wrapping zone 430 wraps the side surface 213, thereby improving the wrapping effect of the wrapping film 400 on the electrode main body 210.

According to some embodiments of the present application, optionally, as shown in FIGs. 13 to 15, the second wrapping assembly 370 includes a side surface pressing plate 371, a first pressing plate transmission mechanism 372, and a second pressing plate transmission mechanism 373. The first pressing plate transmission mechanism 372 is configured to drive the side surface pressing plate 371 in the first direction D1, such that the side surface pressing plate 371 pushes the side wrapping zone 430 to bend toward the side surface 213 relative to the main wrapping zone 410. The second pressing plate transmission mechanism 373 is configured to drive the side surface pressing plate 371 in the third direction D3, such that the side surface pressing plate 371 presses the side wrapping zone 430 onto the side surface 213.

After the main wrapping zone 410 wraps the main surface 211 of the electrode main body 210, the side wrapping zone 430 and the main wrapping zone 410 may be coplanar or approximately coplanar. The movement of the side surface pressing plate 371 in the first direction D1 can push the side wrapping zone 430 to bend relative to the main wrapping zone 410. During the bending process of the side wrapping zone 430 relative to the main wrapping zone 410, the side wrapping zone gradually approaches the side surface 213 of the electrode main body 210. After the side surface pressing plate 371 pushes the side wrapping zone 430 to bend toward the side surface 213 relative to the main wrapping zone 410, in the third direction D3, the side surface pressing plate 371 and the side surface 213 of the electrode main body 210 may be disposed opposite to each other and spaced apart from each other, and the side wrapping zone 430 is located between the side surface pressing plate 371 and the side surface 213 of the electrode main body 210. In this case, the side surface pressing plate 371 moves toward the electrode main body 210 in the third direction D3 to press the side wrapping zone 430 onto the side surface 213 of the electrode main body 210, such that the side wrapping zone 430 wraps the side surface 213 of the electrode main body 210.

Such a configuration enables a smooth transition between the action of the second wrapping assembly 370 bending the side wrapping zone 430 and the action of the side wrapping zone 430 wrapping the side surface 213. This helps simplify the actions and structure of the second wrapping assembly 370 and improves the wrapping efficiency.

Optionally, as shown in FIGs. 13 to 15, each main wrapping zone 410 may be connected with two side wrapping zones 430. The two side wrapping zones 430 connected to the first one of the two main wrapping zones 410 may be denoted as B1 and B2, and the two side wrapping zones 430 connected to the second one of the two main wrapping zones 410 may be denoted as B3 and B4. The second wrapping assembly 370 includes four side surface pressing plates 371 that are in a one-to-one correspondence with the four side wrapping zones 430. The four side surface pressing plates 371 may be denoted as C1, C2, C3, and C4. C1, C2, C3, and C4 are configured to bend B1, B2, B3, and B4 toward the side surface 213 and press B1, B2, B3, and B4 onto the side surface 213 of the electrode main body 210 in a one-to-one correspondence.

Before the four side surface pressing plates 371 separately move in the first direction D1, the four side wrapping zones 430 are located between the four side surface pressing plates 371. The direction in which C1 and C2 move in the first direction D1 is opposite to the direction in which C3 and C4 move in the first direction D1, such that C1 and C2 can approach C3 and C4, C1 and C2 can bend B1 and B2 toward the side surface 213, respectively, and C3 and C4 can bend B3 and B4 toward the side surface 213, respectively.

Before C1 and C2 separately move in the third direction D3, C1 and C2 are spaced apart from and disposed opposite to the two side surfaces 213, respectively. B1 is located between C1 and one side surface 213, and B2 is located between C2 and the other side surface 213. The direction in which C1 moves in the third direction D3 toward the electrode main body 210 is opposite to the direction in which C2 moves in the third direction D3 toward the electrode main body 210, such that C1 and C2 can move close to each other, and C1 and C2 can press B1 and B2 onto the side surface 213 of the electrode main body 210, respectively. Before C3 and C4 separately move in the third direction D3, C3 and C4 are spaced apart from and disposed opposite to the two side surfaces 213, respectively. B3 is located between C3 and one side surface 213, and B4 is located between C4 and the other side surface 213. The direction in which C3 moves in the third direction D3 toward the electrode main body 210 is opposite to the direction in which C4 moves in the third direction D3 toward the electrode main body 210, such that C3 and C4 can move close to each other, and C3 and C4 can press B3 and B4 onto the side surface 213 of the electrode main body 210, respectively.

Further, there are two side wrapping zones 430 connected to each main wrapping zone 410. One of the two side wrapping zones 430 connected to the first one of the two main wrapping zones 410 and one of the two side wrapping zones 430 connected to the second one of the two main wrapping zones 410 jointly cover one side surface 213 of the electrode main body 210, and the other of the two side wrapping zones 430 connected to the first one of the two main wrapping zones 410 and the other of the two side wrapping zones 430 connected to the second one of the two main wrapping zones 410 jointly cover the other side surface 213 of the electrode main body 210. Further, the two side wrapping zones 430 covering the same side surface 213 of the electrode main body 210 may overlap each other and partially coincide.

According to some embodiments of the present application, optionally, as shown in FIGs. 13 to 15, the wrapping film 400 includes an end wrapping zone 440 connected to the main wrapping zone 410. The second wrapping assembly 370 is configured to drive the end wrapping zone 440 to contact and wrap the second one 212b of the two end surfaces 212.

The second wrapping assembly 370 can adjust the relative position relationship between the electrode assembly 200 and the end wrapping zone 440. By providing the second wrapping assembly 370, the end wrapping zone 440 wraps the second one 212b of the two end surfaces 212, thereby improving the wrapping effect of the wrapping film 400 on the electrode main body 210.

According to some embodiments of the present application, optionally, as shown in FIGs. 13 to 15, the second wrapping assembly 370 includes an end surface pressing plate 374, a first pressing plate transmission mechanism 372, and a third pressing plate transmission mechanism 375. The first pressing plate transmission mechanism 372 is configured to drive the end surface pressing plate 374 in the first direction D1, such that the end surface pressing plate 374 pushes the end wrapping zone 440 to bend toward the second one 212b of the two end surfaces 212 relative to the main wrapping zone 410. The third pressing plate transmission mechanism 375 is configured to drive the end surface pressing plate 374 in the second direction D2, such that the end surface pressing plate 374 presses the end wrapping zone 440 onto the second one 212b of the two end surfaces 212.

After the main wrapping zone 410 wraps the main surface 211 of the electrode main body 210, the end wrapping zone 440 and the main wrapping zone 410 may be coplanar or approximately coplanar. The movement of the end surface pressing plate 374 in the first direction D1 can push the end wrapping zone 440 to bend relative to the main wrapping zone 410. During the bending process of the end wrapping zone 440 relative to the main wrapping zone 410, the end wrapping zone gradually approaches the second one 212b of the two end surfaces 212. After the end surface pressing plate 374 pushes the end wrapping zone 440 to bend toward the second one 212b of the two end surfaces 212 relative to the main wrapping zone 410, in the second direction D2, the end surface pressing plate 374 and the second one 212b of the two end surfaces 212 may be disposed opposite to each other and spaced apart from each other, and the end wrapping zone 440 is located between the end surface pressing plate 374 and the second one 212b of the two end surfaces 212. In this case, the end surface pressing plate 374 moves toward the electrode main body 210 in the second direction D2 to press the end wrapping zone 440 onto the second one 212b of the two end surfaces 212, such that the end wrapping zone 440 wraps the second one 212b of the two end surfaces 212.

Optionally, as shown in FIGs. 13 to 15, each main wrapping zone 410 is connected with one end wrapping zone 440, and the second wrapping assembly 370 includes two end surface pressing plates 374. The movement of the two end surface pressing plates 374 separately in the first direction D1 enables the two end surface pressing plates 374 to approach each other, thereby enabling the two end wrapping zones 440 to bend toward the second one 212b of the two end surfaces 212, respectively. The movement of the two end surface pressing plates 374 separately in the second direction D2 enables the two end wrapping zones 440 to cover the second one 212b of the two end surfaces 212, respectively.

In some embodiments, the two end wrapping zones 440 may overlap with each other and partially coincide. One of the two end surface pressing plates 374 may first bend one end wrapping zone 440 toward the second one 212b of the two end surfaces 212 and press the end wrapping zone onto the second one 212b of the two end surfaces 212. The other one of the two end surface pressing plates 374 may then bend the other end wrapping zone 440 toward the second one 212b of the two end surfaces 212 and press the other end wrapping zone onto the second one 212b of the two end surfaces 212.

In some embodiments, the second pressing plate transmission mechanism 373 includes a first pressing plate cylinder 376, and the third pressing plate transmission mechanism 375 includes a second pressing plate cylinder 3761. The second pressing plate cylinder 3761 is configured to provide power for driving the end surface pressing plate 374 in the second direction D2, and the first pressing plate cylinder 376 is configured to provide power for driving the side surface pressing plate 371 in the third direction D3. In some other embodiments, the second pressing plate transmission mechanism 373 and the third pressing plate transmission mechanism 375 may be disposed in a linked manner. For example, the second pressing plate transmission mechanism 373 and the third pressing plate transmission mechanism 375 share one cylinder to simultaneously provide power for driving the end surface pressing plate 374 in the second direction D2 and driving the side surface pressing plate 371 in the third direction D3, such that when the side surface pressing plate 371 moves in the third direction D3 toward the side wrapping zone 430, the end surface pressing plate 374 moves in the second direction D2 toward the end wrapping zone 440. In this way, the wrapping time can be reduced, thereby improving the wrapping efficiency.

Optionally, no relative displacement is generated between the end surface pressing plate 374 and the side surface pressing plate 371 in the first direction D1. The first pressing plate transmission mechanism 372 can simultaneously drive the end surface pressing plate 374 and the side surface pressing plate 371 in the first direction D1. In this way, the wrapping efficiency can be improved. Further, when driving the end surface pressing plate 374 in the first direction D1, the first pressing plate transmission mechanism 372 can synchronously drive the third pressing plate transmission mechanism 375 in the first direction D1. When driving the side surface pressing plate 371 in the first direction D1, the first pressing plate transmission mechanism 372 can synchronously drive the second pressing plate transmission mechanism 373 in the first direction D1.

Optionally, as shown in FIGs. 13 to 15, a pressing plate transmission motor 377 is disposed on the first pressing plate transmission mechanism 372, and the pressing plate transmission motor 377 is configured to provide power for driving the end surface pressing plate 374 and the side surface pressing plate 371 in the first direction D1. Further, the pressing plate transmission motor 377 is configured to drive the second pressing plate transmission mechanism 373, the third pressing plate transmission mechanism 375, the end surface pressing plate 374, and the side surface pressing plate 371 in the first direction D1.

Optionally, as shown in FIGs. 13 to 15, the second wrapping assembly 370 includes a first pressing plate support 378 and a second pressing plate support 379. The second pressing plate support 379 is slidably disposed on the first pressing plate support 378 in the first direction D1. The first pressing plate transmission mechanism 372 is disposed on the first pressing plate support 378 and is in transmission connection with the second pressing plate support 379, so as to drive the second pressing plate support 379 to move in the first direction D1 relative to the first pressing plate support 378. The side surface pressing plate 371, the second pressing plate transmission mechanism 373, the end surface pressing plate 374, and the third pressing plate transmission mechanism 375 may be disposed on the second pressing plate support 379 and move in the first direction D1 synchronously with the second pressing plate support 379.

Further, the first pressing plate support 378 and the second pressing plate support 379 are oppositely and fixedly disposed.

Optionally, as shown in FIGs. 13 to 15, the end surface pressing plate 374 is provided with a position-adjustable end limiting block 3741. The end limiting block 3741 is configured to abut against the main wrapping zone 410 to limit the electrode assembly 200 in the first direction D1. By adjusting the position of the end limiting block 3741 on the end surface pressing plate 374, electrode assemblies 200 of different dimensions can be matched, thereby improving the compatibility of the end surface pressing plate 374 with electrode assemblies 200 of different dimensions. Further, the end limiting block 3741 is provided with a circular arc-shaped surface facing the main wrapping zone 410, thereby improving the attachment between the end limiting block and the main wrapping zone 410.

Optionally, as shown in FIGs. 13 to 15, the side surface pressing plate 371 is provided with a position-adjustable side limiting block 3711. The side limiting block 3711 is configured to abut against the main wrapping zone 410 to limit the electrode assembly 200 in the first direction D1. By adjusting the position of the side limiting block 3711 on the side surface pressing plate 371, electrode assemblies 200 of different dimensions can be matched, thereby improving the compatibility of the side surface pressing plate 371 with electrode assemblies 200 of different dimensions. Further, the side limiting block 3711 is provided with a circular arc-shaped surface facing the main wrapping zone 410, thereby improving the attachment between the side limiting block and the main wrapping zone 410.

According to some embodiments of the present application, optionally, as shown in FIGs. 13 to 15, the first pressing plate transmission mechanism 372 includes a pressing plate transmission motor 377, a first pressing plate support 378, and a second pressing plate support 379. The pressing plate transmission motor 377 is disposed on the first pressing plate support 378 and drives the second pressing plate support 379 to move relative to the first pressing plate support 378. The second pressing plate transmission mechanism 373 includes a first pressing plate cylinder 376. The first pressing plate cylinder 376 is disposed on the second pressing plate support 379, and the first pressing plate cylinder 376 drives the side surface pressing plate 371 to move relative to the second pressing plate support 379. The third pressing plate transmission mechanism 375 includes a second pressing plate cylinder 3761. The second pressing plate cylinder 3761 is disposed on the second pressing plate support 379, and the second pressing plate cylinder 3761 drives the end surface pressing plate 374 to move relative to the second pressing plate support 379.

Such a configuration can improve the movement flexibility of the side surface pressing plate 371 and the end surface pressing plate 374, thereby improving the wrapping effect.

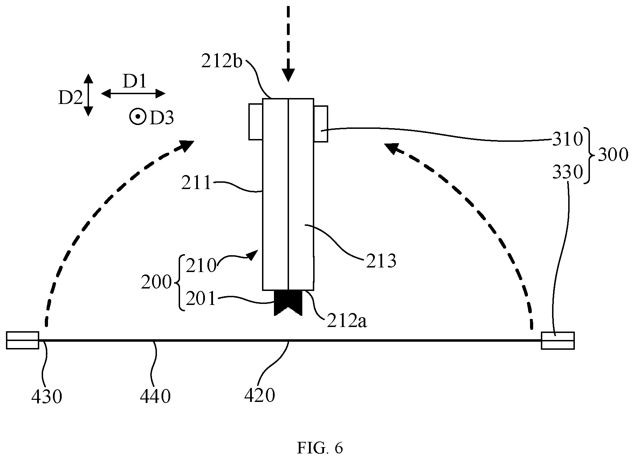

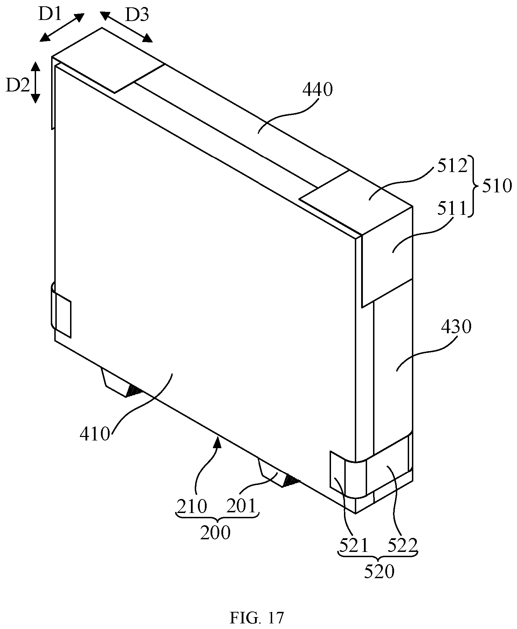

According to some embodiments of the present application, optionally, as shown in FIGs. 6, 7, 16, and 17, the wrapping film 400 further includes a side wrapping zone 430 and an end wrapping zone 440 that are connected to the main wrapping zone 410. The side wrapping zone 430 wraps the side surface 213, and the end wrapping zone 440 wraps the second one 212b of the two end surfaces 212. The wrapping device 300 further includes a first tape attachment assembly 380. The first tape attachment assembly 380 is configured to attach a first tape 510 to the electrode assembly 200. The first tape 510 includes a first portion and a second portion connected to each other. The first tape attachment assembly 380 is configured to attach the first portion 511 of the first tape 510 to the side wrapping zone 430 and attach the second portion 512 of the first tape 510 to the end wrapping zone 440 at the corner formed by the side surface 213 and the second one 212b of the two end surfaces 212.

The first tape attachment assembly 380 may drive the electrode assembly 200 and the first tape 510 to move relative to each other. The first tape 510 can connect the side wrapping zone 430 and the end wrapping zone 440 together, such that the side wrapping zone 430 and the end wrapping zone 440 can remain fixed relative to the electrode main body 210, thereby improving the firmness of the wrapping film 400 in wrapping the electrode main body 210.

Specifically, after the end wrapping zone 440 and the side wrapping zone 430 are pressed on the battery main body, the first tape attachment assembly 380 can drive the electrode assembly 200 to move, such that the side wrapping zone 430 is disposed opposite to the first portion 511 of the first tape 510. Then, the first tape attachment assembly 380 drives the electrode assembly 200 to continue to move, such that the first portion 511 of the first tape 510 is attached to the side wrapping zone 430. Subsequently, the first tape attachment assembly 380 may drive the electrode assembly 200 to rotate toward the second portion 512 of the first tape 510, such that the second portion 512 of the first tape 510 gradually approaches and is eventually attached to the end wrapping zone 440.

Alternatively, the first tape attachment assembly 380 can drive the electrode assembly 200 to move, such that the end wrapping zone 440 is disposed opposite to the second portion 512 of the first tape 510. Then, the first tape attachment assembly 380 drives the electrode assembly 200 to continue to move, such that the second portion 512 of the first tape 510 is attached to the end wrapping zone 440. Subsequently, the first tape attachment assembly 380 may drive the electrode assembly 200 to rotate toward the first portion 511 of the first tape 510, such that the first portion 511 of the first tape 510 gradually approaches and is eventually attached to the side wrapping zone 430.

Further, the respective side wrapping zones 430 connected to the two main wrapping zones 410 jointly wrap the same side surface 213 of the electrode main body 210, and the first tape 510 can serve to connect the two side wrapping zones 430 wrapping the same side surface 213 of the electrode main body 210. The respective end wrapping zones 440 connected to the two main wrapping zones 410 jointly wrap the second one 212b of the two end surfaces 212, and the first tape 510 can serve to connect the two end wrapping zones 440 wrapping the second one 212b of the two end surfaces 212.

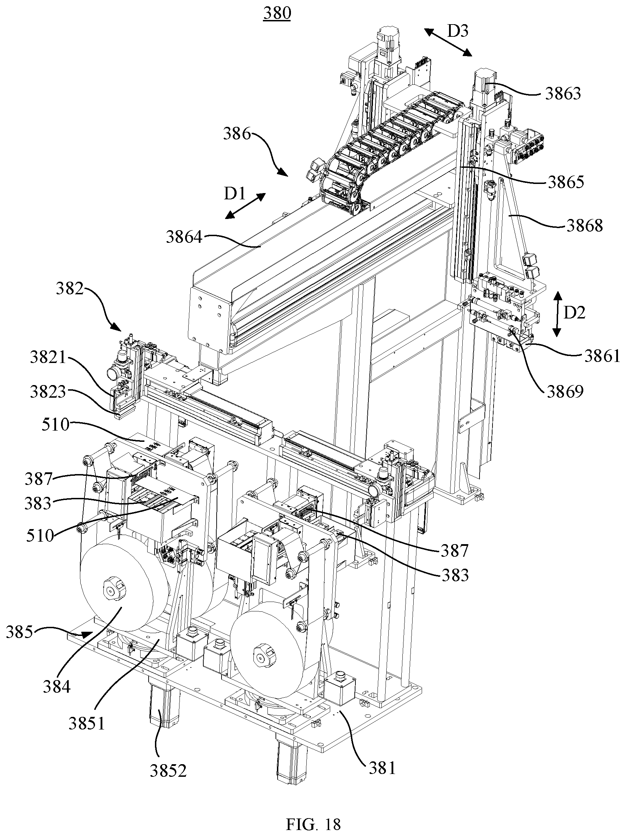

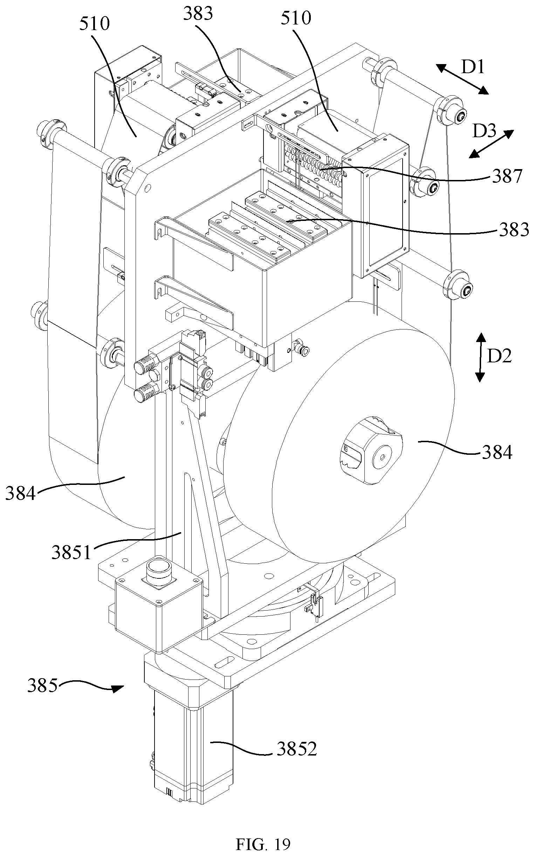

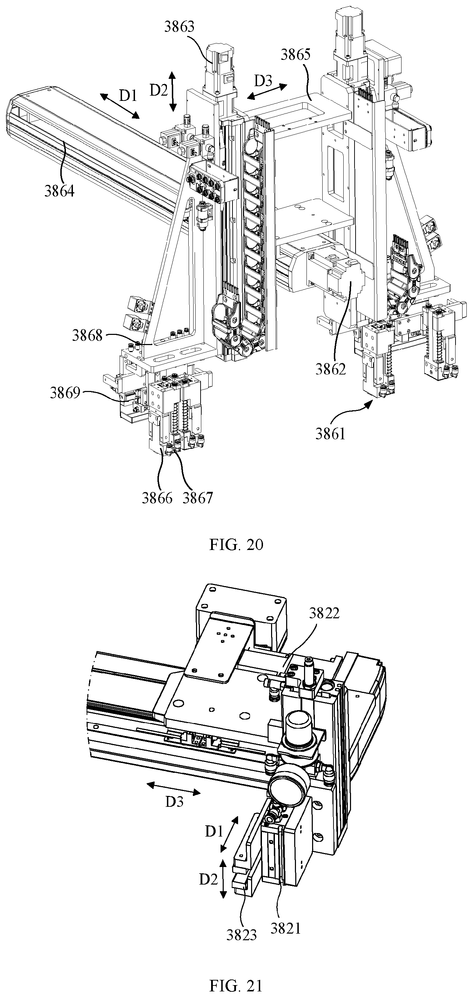

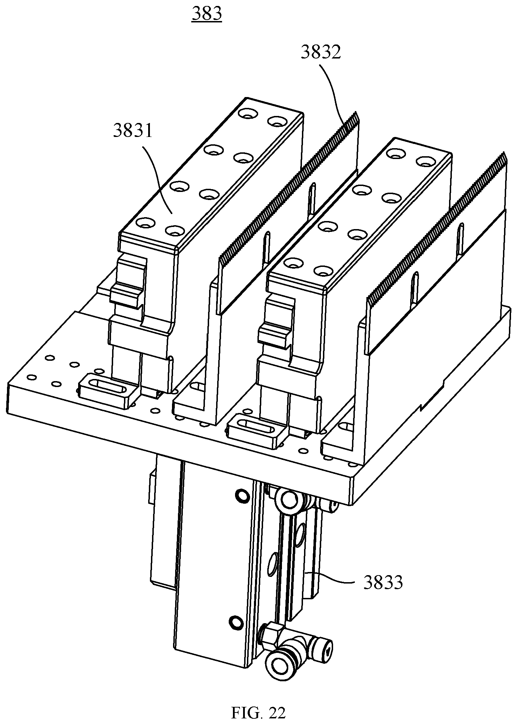

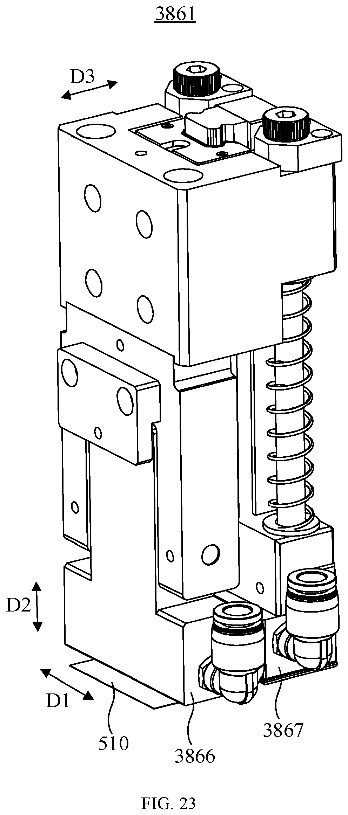

Optionally, as shown in FIGs. 18 to 23, the first tape attachment assembly 380 further includes a first cutting mechanism 383, a first tape pickup mechanism 386, and a first tape pulling mechanism 382. The first tape pulling mechanism 382 is configured to clamp and pull a head end of a release portion of the first tape roll 384, the first cutting mechanism 383 is configured to cut the first tape 510 out of the release portion of the first tape roll 384, and the first tape pickup mechanism 386 is configured to suck the first tape 510 and attach the first tape to the wrapping film 400.

Optionally, as shown in FIGs. 18 to 23, the first tape attachment assembly 380 further includes a first tape feeding mechanism 387, and the first tape feeding mechanism 387 is configured to convey the release portion of the first tape roll 384 for cutting by the first cutting mechanism 383. Further, the first tape feeding mechanism 387 includes a roller (not labeled), and the roller is configured to convey the release portion of the first tape roll 384.

According to some embodiments of the present application, optionally, as shown in FIGs. 18 to 23, the first tape attachment assembly 380 includes a first unwinding mechanism 381, a first tape pulling mechanism 382, and a first cutting mechanism 383. The first unwinding mechanism 381 is configured to place and release the first tape roll 384, the first tape pulling mechanism 382 is configured to clamp and pull the head end of the release portion of the first tape roll 384, and the first cutting mechanism 383 is configured to cut the first tape 510 out of the release portion of the first tape roll 384.

Such a configuration facilitates the automatic provision of the first tape 510.

According to some embodiments of the present application, optionally, as shown in FIGs. 18 to 23, the first tape pulling mechanism 382 includes a first tape clamping cylinder 3821, a first tape pulling motor 3822, and a first tape clamping member 3823. The first tape clamping cylinder 3821 is configured to drive the first tape clamping member 3823 to clamp the head end of the release portion, and the first tape pulling motor 3822 is configured to drive the first tape clamping member 3823 to move to pull the release portion.

The first tape pulling motor 3822 can elongate the release portion of the first tape roll 384 by driving the first tape clamping member 3823 to move to pull the release portion, and the release portion of the first tape roll 384 is stretched to facilitate the cutting.

According to some embodiments of the present application, optionally, as shown in FIGs. 18 to 23, two corresponding groups of first unwinding mechanisms 381 and first cutting mechanisms 383 are provided. The first tape attachment assembly 380 includes a switching mechanism 385, and the switching mechanism 385 includes a material roll support 3851 and a switching motor 3852. The two groups of first unwinding mechanisms 381 and first cutting mechanisms 383 are disposed on the material roll support 3851. The switching motor 3852 drives the material roll support 3851 to rotate around a predetermined rotation axis, such that the two groups of first unwinding mechanisms 381 and first cutting mechanisms 383 can switch between a standby station and a work station where the first tape pulling mechanism 382 and the first cutting mechanism 383 operate. The rotation axis is perpendicular to the plane where the release portion is located.

One first unwinding mechanism 381 and one first cutting mechanism 383 may form a group. Two first unwinding mechanisms 381 and two first cutting mechanisms 383 may correspondingly form two groups. Such a configuration facilitates rapid roll change operations of the first tape roll 384, thereby improving the roll change efficiency. Specifically, the switching motor 3852 drives the material roll support 3851 to rotate by 180° during each roll change.

According to some embodiments of the present application, optionally, as shown in FIGs. 18 to 23, the first tape attachment assembly 380 includes a first tape pickup mechanism 386, and the first tape pickup mechanism 386 is configured to adsorb and take away the first tape 510. The first cutting mechanism 383 includes a first pressing block 3831, a first cutter 3832, and a first cutting cylinder 3833. The first pressing block 3831 and the first cutter 3832 are oppositely and fixedly disposed. The first cutting cylinder 3833 is configured to drive the first pressing block 3831 to press the release portion onto the first tape pickup mechanism 386 and to drive the first cutter 3832 to cut the first tape 510 out of the release portion.

Configuring the first pressing block 3831 to press and position the release portion of the first tape roll 384 can improve the stability of the cutting process.

According to some embodiments of the present application, optionally, as shown in FIGs. 18 to 23, the first tape attachment assembly 380 includes a first tape pickup mechanism 386, and the first tape pickup mechanism 386 is configured to adsorb and take away the first tape 510. The first tape pickup mechanism 386 includes a first tape pickup member 3861, a first tape pickup motor 3862, a second tape pickup motor 3863, a first tape pickup support 3864, and a second tape pickup support 3865. The first tape pickup member 3861 is configured to adsorb the first tape 510. The first tape pickup motor 3862 is disposed on the first tape pickup support 3864 and drives the second tape pickup support 3865 to move to the side of the main surface of the release portion of the first tape roll 384. The second tape pickup motor 3863 is disposed on the second tape pickup support 3865 and drives the first tape pickup member 3861 to approach and move away from the plane where the release portion of the first tape roll 384 is located.

Such a configuration can improve the movement flexibility of the first tape pickup member 3861, facilitating the suction and transfer of the first tape 510.

According to some embodiments of the present application, optionally, as shown in FIGs. 18 to 23, the first tape pickup member 3861 includes a first tape pickup sub-part 3866 and a second tape pickup sub-part 3867. The first tape pickup sub-part 3866 is configured to adsorb the first portion 511 of the first tape 510 and attach the first portion to the side wrapping zone 430. The second tape pickup sub-part 3867 is configured to adsorb the second portion 512 of the first tape 510 and attach the second portion to the end wrapping zone 440.

Such a configuration can improve the continuity of the tape pickup action and the tape attachment action.

Optionally, at least one of the first tape pickup sub-part 3866 and the second tape pickup sub-part 3867 is provided with an adsorption surface configured to contact and adsorb the first tape 510. The first tape pickup sub-part 3866 and the second tape pickup sub-part 3867 are configured to be relatively movable in a direction perpendicular to the adsorption surface, thereby enabling the first tape 510 adsorbed on the first tape pickup member 3861 to bend. For example, one of the first tape pickup sub-part 3866 and the second tape pickup sub-part 3867 may be driven to move in the direction perpendicular to the adsorption surface.

According to some embodiments of the present application, optionally, as shown in FIGs. 18 to 23, the first tape pickup sub-part 3866 is a telescoping member. The second tape pickup motor 3863 drives the first tape pickup member 3861 in the third direction D3; and the first tape pickup sub-part 3866 presses the first portion 511 of the first tape 510 onto the side wrapping zone 430 and retracts, so as to enable the second tape pickup sub-part 3867 to continue to move in the third direction D3 and attach to the end wrapping zone 440, thereby attaching the second portion 512 of the first tape 510 to the end wrapping zone 440. Alternatively, the second tape pickup sub-part 3867 is a telescoping member. The second tape pickup motor 3863 drives the first tape pickup member 3861 in the second direction D2; and the second tape pickup sub-part 3867 presses the second portion 512 of the first tape 510 onto the end wrapping zone 440 and retracts, so as to enable the first tape pickup sub-part 3866 to continue to move in the second direction D2 and attach to the side wrapping zone 430, thereby attaching the first portion 511 of the first tape 510 to the side wrapping zone 430.

The telescoping member may extend and retract. For example, the telescoping member is an elastic member that extends and retracts under pressure.

Such a configuration can improve the structural flexibility of the first tape pickup member 3861, such that the shape of the first tape pickup member 3861 can be adaptively adjusted based on the shape of the electrode main body 210, thereby achieving diversified tape attachment actions. Specifically, when the first tape pickup sub-part 3866 and the second tape pickup sub-part 3867 suck the first tape 510, the first tape 510 is in a planar shape. One of the first tape pickup sub-part 3866 and the second tape pickup sub-part 3867 is compressed, such that the first tape pickup sub-part 3866 and the second tape pickup sub-part 3867 are misaligned. As a result, the first tape 510 is bent, and can be attached to both the end wrapping zone 440 and the side wrapping zone 430.

According to some embodiments of the present application, optionally, as shown in FIGs. 18 to 23, the first cutting mechanism 383 is configured to cut two first tapes 510 out of the release portion. The first tape attachment assembly 380 includes a first tape pickup mechanism 386. The first tape pickup mechanism 386 is configured to adsorb and take away the first tape 510, and the first tape pickup mechanism 386 includes a first tape pickup member 3861, a first tape pickup motor 3862, a second tape pickup motor 3863, a first tape pickup support 3864, a second tape pickup support 3865, a third tape pickup support 3868, and a tape dispensing cylinder 3869. There are two first tape pickup members 3861, and the two first tape pickup members adsorb the corresponding first tapes 510, respectively. The first tape pickup motor 3862 is disposed on the first tape pickup support 3864 and drives the second tape pickup support 3865 to move to the side of the main surface of the release portion of the first tape roll 384. The second tape pickup motor 3863 is disposed on the second tape pickup support 3865 and drives the third tape pickup support 3868 and the two first tape pickup members 3861 to move toward or away from the plane where the release portion of the first tape roll 384 is located. The tape dispensing cylinder 3869 is disposed on the third tape pickup support 3868, and the tape dispensing cylinder 3869 is configured to drive the two first tape pickup members 3861 to move away from each other, such that the two first tape pickup members 3861 correspond to the two corners of the electrode assembly 200 spaced apart from each other in the third direction D3, respectively.

For example, the first cutting mechanism 383 is provided with two first cutters 3832 corresponding to the same release portion, and the first cutting cylinder 3833 drives the two first cutters 3832 to move synchronously, such that the two first cutters 3832 can cut two first tapes 510 out of the same release portion each time.

Such a configuration enables the first tape pickup mechanism 386 to adsorb and take away the two first tapes 510 corresponding to each electrode assembly 200, so as to simultaneously attach the two first tapes 510 at the two corners of the electrode assembly 200 spaced apart from each other in the third direction D3, thereby improving the tape attachment efficiency.

According to some embodiments of the present application, optionally, as shown in FIGs. 6, 7, 16, and 17, the wrapping device 300 further includes a second tape attachment assembly 390. The second tape attachment assembly 390 is configured to attach a second tape 520 to the electrode assembly 200. The second tape 520 includes first portions and a second portion connected to each other. The second tape attachment assembly 390 is configured to attach the first portion 521 of the second tape 520 to the main wrapping zone 410 and attach the second portion 522 of the second tape 520 to the side wrapping zone 430 at the corner formed by the side surface 213 and the main surface 211.

The second tape attachment assembly 390 may drive the electrode assembly 200 and the second tape 520 to move relative to each other. Before attaching the second tape 520, the side wrapping zone 430 is at least partially connected to only one of the two main wrapping zones 410 and is not connected to the other of the two main wrapping zones 410. The second tape 520 can connect the side wrapping zone 430 and the other one of the main wrapping zones 410 together, such that the side wrapping zone 430 and the main wrapping zone 410 can remain fixed relative to the electrode main body 210, thereby improving the firmness of the wrapping film 400 in wrapping the electrode main body 210.

For example, after the side wrapping zone 430 is pressed on the battery main body, the second tape attachment assembly 390 can drive the electrode assembly 200 to move, such that the first portion 521 of the second tape 520 gradually approaches and is eventually attached to the main wrapping zone 410. Subsequently, the second tape attachment assembly 390 may drive the electrode assembly 200 to rotate toward the second portion 522 of the second tape 520, such that the second portion 522 of the second tape 520 gradually approaches and is eventually attached to the side wrapping zone 430.

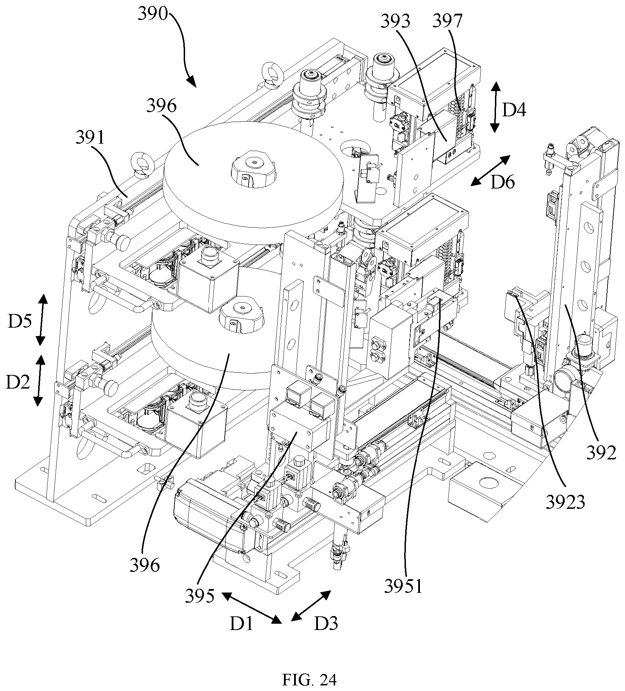

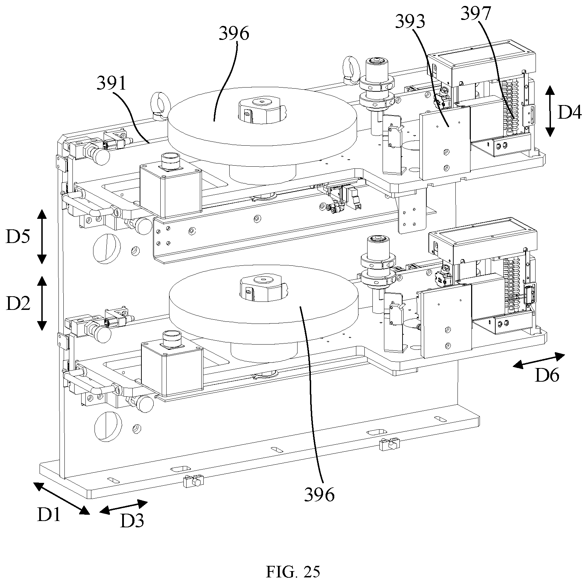

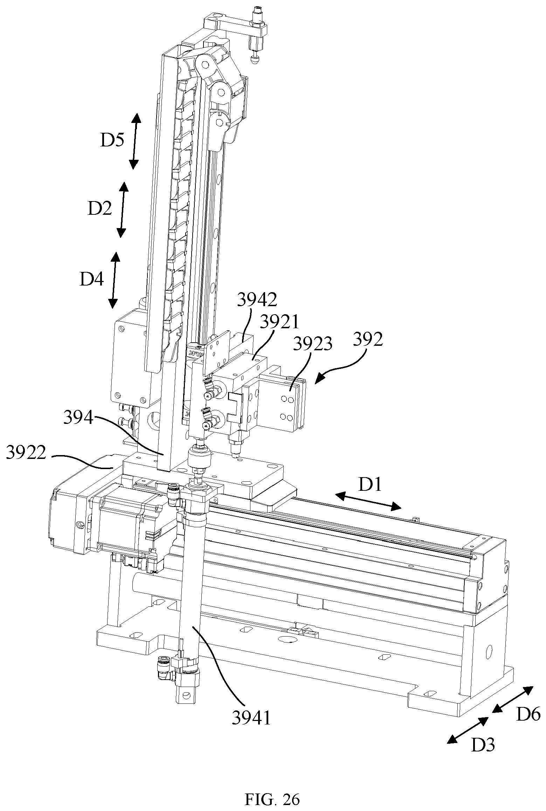

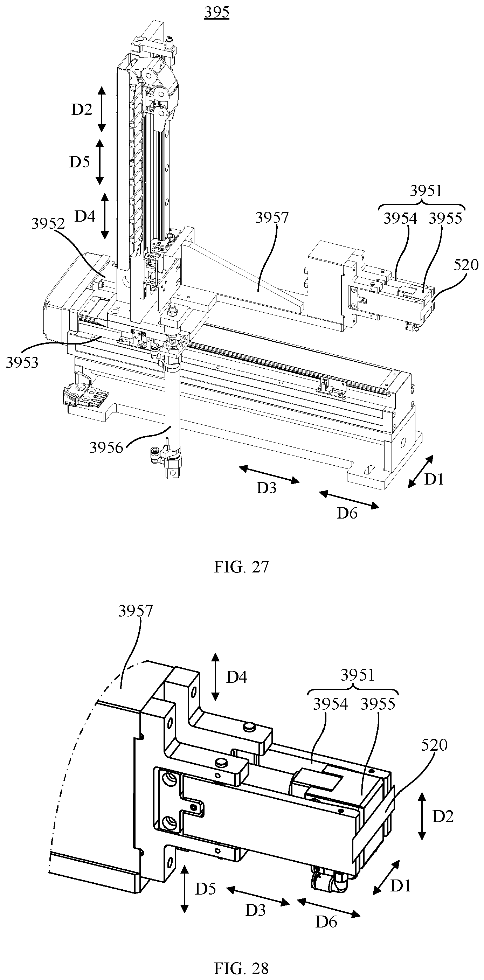

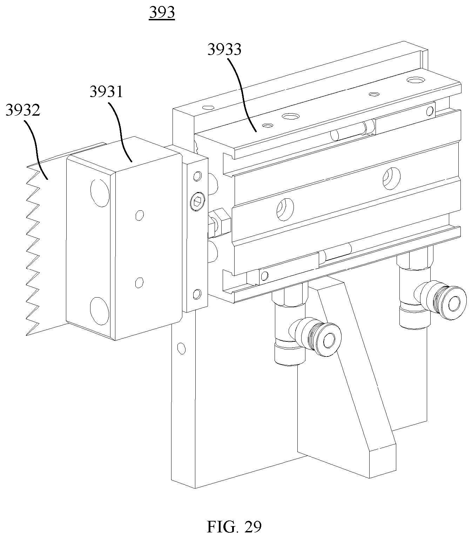

Optionally, as shown in FIGs. 24 to 29, the second tape attachment assembly 390 further includes a second cutting mechanism 393, a second tape pickup mechanism 395, and a second tape pulling mechanism 392. The second tape pulling mechanism 392 is configured to pull the second tape 520 out, the second cutting mechanism 393 is configured to cut the second tape 520 out of the release portion of the second tape roll 396, and the second tape pickup mechanism 395 is configured to suck the second tape 520 and attach the second tape to the wrapping film 400.

Optionally, as shown in FIGs. 24 to 29, the second tape attachment assembly 390 further includes a second tape feeding mechanism 397, and the second tape feeding mechanism 397 is configured to convey the release portion of the second tape roll 396 for cutting by the second cutting mechanism 393. Further, the second tape feeding mechanism 397 includes a roller (not labeled), and the roller is configured to convey the release portion of the second tape roll 396.

According to some embodiments of the present application, optionally, as shown in FIGs. 24 to 29, the number of the first portions 521 of the second tape 520 is two, and the two first portions are located at two ends of the second portion 522 of the second tape 520; and the second tape attachment assembly 390 is configured to respectively attach the two first portions of the second tape 520 to corresponding ones of the two main wrapping zones 410.

Such a configuration can increase the contact area between the second tape 520 and the wrapping film 400, thereby improving the fixing effect on the side wrapping zone 430.

Further, the respective side wrapping zones 430 connected to the two main wrapping zones 410 jointly wrap the same side surface 213 of the electrode main body 210, and the second tape 520 can serve to connect the two side wrapping zones 430 wrapping the same side surface 213 of the electrode main body 210.

According to some embodiments of the present application, optionally, as shown in FIGs. 24 to 29, the second tape attachment assembly 390 includes a second unwinding mechanism 391, a second tape pulling mechanism 392, and a second cutting mechanism 393. The second unwinding mechanism 391 is configured to place and release the second tape roll 396. The second tape pulling mechanism 392 is configured to clamp and pull the head end of the release portion of the second tape roll 396. The second cutting mechanism 393 is configured to cut the second tape 520 out of the release portion of the second tape roll 396.

Such a configuration facilitates the automatic provision of the second tape 520.

According to some embodiments of the present application, optionally, as shown in FIGs. 24 to 29, the second tape pulling mechanism 392 includes a second tape clamping cylinder 3921, a second tape pulling motor 3922, and a second tape clamping member 3923. The second tape clamping cylinder 3921 is configured to drive the second tape clamping member 3923 to clamp the head end of the release portion of the second tape roll 396, and the second tape pulling motor 3922 is configured to drive the second tape clamping member 3923 to move to pull the release portion of the second tape roll 396.

The second tape pulling motor 3922 can elongate the release portion of the second tape roll 396 by driving the second tape clamping member 3923 to move to pull the release portion, and the release portion of the second tape roll 396 is stretched to facilitate the cutting.

According to some embodiments of the present application, optionally, as shown in FIGs. 24 to 29, two corresponding groups of second unwinding mechanisms 391 and second cutting mechanisms 393 are provided and spaced apart from each other in the width direction D4 of the release portion. The second tape attachment assembly 390 includes a tape pulling support 394, a tape pulling and transposition cylinder 3941, and a tape pulling and transposition support 3942. The tape pulling and transposition cylinder 3941 is disposed on the tape pulling support 394, and the second tape pulling mechanism 392 is disposed on the tape pulling and transposition support 3942. The tape pulling and transposition cylinder 3941 is configured to drive the tape pulling and transposition support 3942 to move in a spacing direction D5 of two second unwinding mechanisms 391, such that the second tape pulling mechanism 392 can switch between the two groups of second unwinding mechanisms 391 and second cutting mechanisms 393.

One second unwinding mechanism 391 and one second cutting mechanism 393 may form a group. Two second unwinding mechanisms 391 and two second cutting mechanisms 393 may correspondingly form two groups. By providing two groups of second unwinding mechanisms 391 and second cutting mechanisms 393, the interference from roll change operations of the second tape roll 396 with the tape pulling process can be reduced, thereby improving the tape pulling efficiency. Further, two groups of second unwinding mechanisms 391 and second cutting mechanisms 393 are disposed in layers in the height direction of the second tape attachment assembly 390.

By configuring the tape pulling and transposition cylinder 3941 to drive the tape pulling and transposition support 3942 to move in the spacing direction D5 of the two second unwinding mechanisms 391, the position of the tape pulling mechanism can correspond to the position of a group of the second unwinding mechanism 391 and the second cutting mechanism 393 that are in operation, facilitating the tape pulling operation.

According to some embodiments of the present application, optionally, as shown in FIGs. 24 to 29, the second tape attachment assembly 390 includes a second tape pickup mechanism 395, and the second tape pickup mechanism 395 is configured to adsorb and take away the second tape 520. The second cutting mechanism 393 includes a second pressing block 3931, a second cutter 3932, and a second cutting cylinder 3933. The second pressing block 3931 and the second cutter 3932 are oppositely and fixedly disposed. The second cutting cylinder 3933 is configured to drive the second pressing block 3931 to press the release portion of the second tape roll 396 onto the second tape pickup mechanism 395 and to drive the second cutter 3932 to cut the second tape 520 out of the release portion of the second tape roll 396.

Configuring the second pressing block 3931 to press and position the release portion of the second tape roll 396 can improve the stability of the cutting process.

According to some embodiments of the present application, optionally, as shown in FIGs. 24 to 29, the second tape attachment assembly 390 includes a second tape pickup mechanism 395, and the second tape pickup mechanism 395 is configured to adsorb and take away the second tape 520. The second tape pickup mechanism 395 includes a second tape pickup member 3951, a fourth tape pickup motor 3952, and a fourth tape pickup support 3953. The second tape pickup member 3951 is configured to adsorb the second tape 520. The fourth tape pickup motor 3952 is disposed on the fourth tape pickup support 3953, drives the second tape pickup member 3951 to move to the side of the main surface of the release portion, and drives the second tape pickup member 3951 to approach and move away from the plane where the release portion of the second tape roll 396 is located. Further, the fourth tape pickup motor 3952 drives the second tape pickup member 3951 to move to be disposed opposite to the release portion of the second tape roll 396 in a thickness direction D6 of the release portion of the second tape roll 396.

Such a configuration can improve the movement flexibility of the second tape pickup member 3951, facilitating the suction and transfer of the second tape 520.

According to some embodiments of the present application, optionally, as shown in FIGs. 24 to 29, the second tape pickup member 3951 includes a third tape pickup sub-part 3954 and a fourth tape pickup sub-part 3955. The third tape pickup sub-part 3954 is configured to adsorb the first portion 521 of the second tape 520 and attach the first portion to the main wrapping zone 410. The fourth tape pickup sub-part 3955 is configured to adsorb the second portion 522 of the second tape 520 and attach the second portion to the side wrapping zone 430.

Such a configuration can improve the continuity of the tape pickup action and the tape attachment action.

Optionally, at least one of the third tape pickup sub-part 3954 and the fourth tape pickup sub-part 3955 is provided with an adsorption surface configured to contact and adsorb the second tape 520. The third tape pickup sub-part 3954 and the fourth tape pickup sub-part 3955 are configured to be relatively movable in a direction perpendicular to the adsorption surface, thereby enabling the second tape 520 adsorbed on the second tape pickup member 3951 to bend. For example, one of the third tape pickup sub-part 3954 and the fourth tape pickup sub-part 3955 may be driven to move in the direction perpendicular to the adsorption surface.

According to some embodiments of the present application, optionally, as shown in FIGs. 24 to 29, the fourth tape pickup sub-part 3955 is a telescoping member. The fourth tape pickup motor 3952 drives the second tape pickup member 3951 in the third direction D3; and the fourth tape pickup sub-part 3955 presses the second portion 522 of the second tape 520 onto the side wrapping zone 430 and retracts, so as to enable the third tape pickup sub-part 3954 to continue to move in the third direction D3 and attach to the main wrapping zone 410, thereby attaching the first portion 521 of the second tape 520 to the main wrapping zone 410.

The telescoping member may extend and retract. For example, the telescoping member is an elastic member.

Such a configuration can improve the structural flexibility of the second tape pickup member 3951, such that the shape of the second tape pickup member 3951 can be adaptively adjusted based on the shape of the electrode main body 210, thereby achieving diversified tape attachment actions. Specifically, when the third tape pickup sub-part 3954 and the fourth tape pickup sub-part 3955 suck the second tape 520, the second tape 520 is in a planar shape. The fourth tape pickup sub-part 3955 is compressed, such that the first tape pickup sub-part 3866 and the second tape pickup sub-part 3867 are misaligned. As a result, the second tape 520 is bent, and can be simultaneously attached to the main wrapping zone 410 and the side wrapping zone 430. Further, the fourth tape pickup sub-part 3955 is located between two third tape pickup sub-parts 3954. During the tape attachment, both the two third tape pickup sub-parts 3954 can be misaligned with the fourth tape pickup sub-part 3955, such that the second tape 520 can be simultaneously attached to the two main wrapping zones 410 and the side wrapping zone 430.

According to some embodiments of the present application, optionally, as shown in FIGs. 24 to 29, two corresponding groups of second unwinding mechanisms 391 and second cutting mechanisms 393 are provided and spaced apart from each other in the width direction D4 of the release portion of the second tape roll 396. The second tape pickup mechanism 395 includes a tape pickup and transposition cylinder 3956 and a tape pickup and transposition support 3957. The tape pickup and transposition cylinder 3956 is disposed on the fourth tape pickup support 3953, and the second tape pickup member 3951 is disposed on the tape pickup and transposition support 3957. The tape pickup and transposition cylinder 3956 is configured to drive the tape pickup and transposition support 3957 to move in the spacing direction D5 of the two second unwinding mechanisms 391, such that the second tape pickup member 3951 switches between the two groups of second unwinding mechanisms 391 and second cutting mechanisms 393.

Each second unwinding mechanism 391 and each second cutting mechanism 393 may form a group. By providing two groups of second unwinding mechanisms 391 and second cutting mechanisms 393, the interference from roll change operations of the second tape roll 396 with the tape pickup process can be reduced, thereby improving the tape pickup efficiency. Further, two groups of second unwinding mechanisms 391 and second cutting mechanisms 393 are disposed in layers in the height direction of the second tape attachment assembly 390.

By configuring the tape pickup and transposition cylinder 3956 to drive the tape pickup and transposition support 3957 to move in the spacing direction D5 of the two second unwinding mechanisms 391, the position of the second tape pickup member 3951 can correspond to the position of a group of the second unwinding mechanism 391 and the second cutting mechanism 393 that are in operation, facilitating the tape pickup operation.

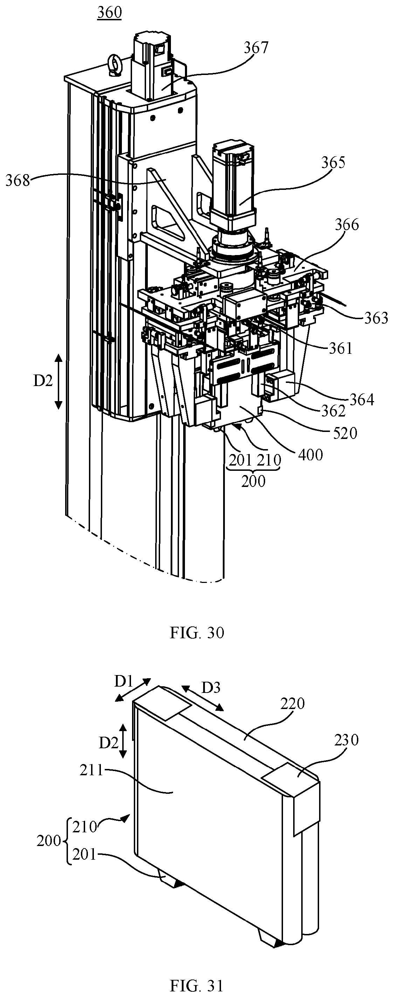

According to some embodiments of the present application, optionally, as shown in FIG. 30, the wrapping device 300 includes a flipping assembly 360. The flipping assembly 360 includes a main pressing cylinder 361, a main pressing member 362, a side pressing cylinder 363, and a side pressing member 364. The main pressing cylinder 361 is configured to drive the main pressing member 362 to press the main wrapping zone 410 and the main surface 211. The side pressing cylinder 363 is configured to drive the side pressing member 364 to press the side wrapping zone 430 and the side surface 213.

The side pressing member 364 and the main pressing member 362 can serve to clamp and position the electrode assembly 200 and the wrapping film 400. The main pressing member 362 is configured to form a clearance for the attachment position of the second tape 520 when pressing the main wrapping zone 410 and the main surface 211. The side pressing member 364 is configured to form a clearance for the attachment position of the second tape 520 when pressing the side wrapping zone 430 and the side surface 213. Such a configuration can improve the stability of the tape attachment process.

According to some embodiments of the present application, optionally, as shown in FIG. 30, the flipping assembly 360 includes a rotary motor 365 and a rotary support 366. The main pressing cylinder 361, the main pressing member 362, the side pressing cylinder 363, and the side pressing member 364 are disposed on the rotary support 366. The rotary motor 365 is configured to drive the rotary support 366 to rotate. The rotation axis of the rotary support 366 is parallel to the second direction D2.

Such a configuration can improve the movement flexibility of the electrode assembly 200, facilitating the attachment of the second tape 520 at different positions of the electrode assembly 200. Further, the rotary motor 365 is configured to drive the rotary support 366 to rotate°, such that the second tapes 520 can be attached to two opposite sides of the electrode assembly 200, respectively.

According to some embodiments of the present application, optionally, as shown in FIGs. 24 and 30, the second tape attachment assembly 390 includes two second unwinding mechanisms 391. The flipping assembly 360 includes a displacement motor 367 and a displacement support 368. The main pressing cylinder 361, the main pressing member 362, the side pressing cylinder 363, the side pressing member 364, the rotary motor 365, and the rotary support 366 are disposed on the displacement support 368. The displacement motor 367 is configured to drive the displacement support 368 to move in the spacing direction D5 of the two second unwinding mechanisms 391.

Each second unwinding mechanism 391 and each second cutting mechanism 393 may form a group. By providing two groups of second unwinding mechanisms 391 and second cutting mechanisms 393, the interference from roll change operations of the second tape roll 396 with the tape attachment process can be reduced, thereby improving the tape pickup efficiency. Further, two groups of second unwinding mechanisms 391 and second cutting mechanisms 393 are disposed in layers in the height direction of the second tape attachment assembly 390.

By configuring the displacement motor 367 to drive the displacement support 368 to move in the spacing direction D5 of the two second unwinding mechanisms 391, the position of the electrode assembly 200 can correspond to the position of a group of the second unwinding mechanism 391 and the second cutting mechanism 393 that are in operation, facilitating the tape attachment operation.

According to some embodiments of the present application, optionally, as shown in FIGs. 4 and 31, the electrode main body 210 includes two electrode modules 220 stacked on each other in the first direction D1, and each electrode module 220 separately includes a positive electrode plate 221221, a separation film 222, and a negative electrode plate 223223 that are stacked.

Such a configuration is beneficial to improving the space utilization rate of the electrode assembly 200 and improving the energy storage density of the electrode assembly 200.

Further, the two electrode modules 220 may be connected in series or in parallel through the tab part 201.

Optionally, the two electrode modules 220 may be fixed together by a fixing member 230, so as to improve the stability of the wrapping process. For example, the fixing member 230 is a tape.

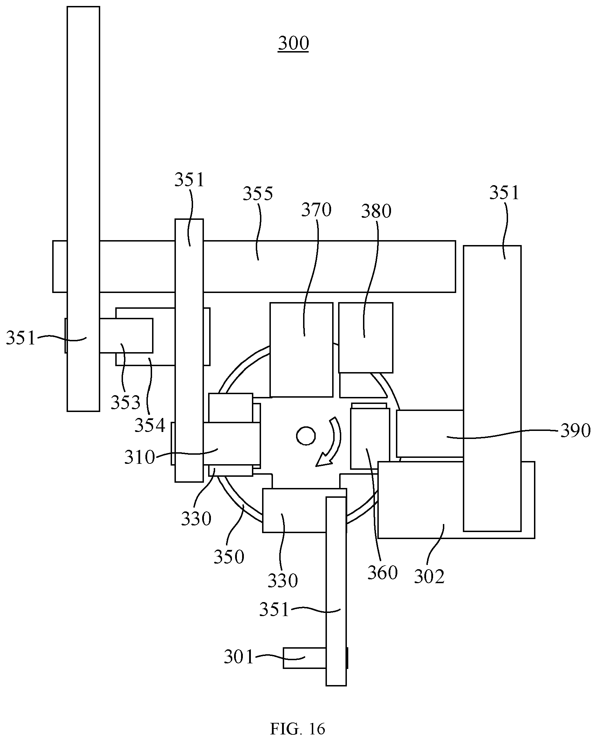

According to some embodiments of the present application, optionally, as shown in FIG. 16, the wrapping device 300 further includes a rotary disk 350. The rotary disk 350 is configured to rotate around a predetermined rotation axis. There are at least two first wrapping assemblies 330, and the at least two first wrapping assemblies are spaced apart on the rotary disk 350 around the rotation axis. The rotary disk 350 drives the at least two first wrapping assemblies 330 to sequentially pass through the first positioning assembly 310.

Specifically, the rotary disk 350 is rotatable relative to the first positioning assembly 310, and the first wrapping assembly 330 is disposed on the rotary disk 350 and can rotate with the rotary disk 350. The first wrapping assembly 330 can drive the wrapping film 400 to rotate with the rotary disk 350, and the first positioning assembly 310 can position the electrode assembly 200. When the first wrapping assembly 330 passes through the first positioning assembly 310, the first wrapping assembly 330 can drive the wrapping film 400 to move relative to the electrode assembly 200, such that the tab part 201 passes through the opening 421, and the connection zone 420 contacts and wraps the first one 212a of the two end surfaces 212. As the rotary disk 350 rotates for one cycle, the at least two first wrapping assemblies 330 may sequentially pass through the first positioning assembly 310, such that the at least two electrode assemblies 200 and the at least two wrapping films 400 perform the following actions at the first positioning assembly 310 in a one-to-one correspondence, respectively. The tab part 201 passes through the opening 421, and the connection zone 420 contacts and wraps the first one 212a of the two end surfaces 212. As the rotary disk 350 rotates for a plurality of cycles, each first wrapping assembly 330 may pass through the first positioning assembly 310 a plurality of times, so as to drive different electrode assemblies 200 and different wrapping films 400 to perform the following actions in a one-to-one correspondence. The tab part 201 passes through the opening 421, and the connection zone 420 contacts and wraps the first one 212a of the two end surfaces 212.

A circuit and an air path are conveniently disposed on the rotary disk 350. By configuring the rotary disk 350 to drive the at least two first wrapping assemblies 330 to sequentially pass through the first positioning assembly 310, it facilitates the control of the movement of the first wrapping assembly 330 and the positioning of the wrapping film 400 by the first wrapping assembly 330.

Optionally, the dimension of the electrode assembly 200 in the first direction D1 is less than the dimension of the electrode assembly 200 in the second direction D2 and the dimension of the electrode assembly 200 in the third direction D3. The direction of the rotation axis of the rotary disk 350 may be parallel to the first direction D1. Such a configuration is beneficial to reducing the dimension of the wrapping device 300 in the first direction D1. When the first wrapping assembly 330 passes through the first positioning assembly 310, for the electrode assembly 200, the second one 212b of the two end surfaces 212 is closer to the rotation axis of the rotary disk 350 than the first one 212a of the two end surfaces 212. For the wrapping film 400, one end of the first one of the two main wrapping zones 410 is connected to the connection zone 420, and the end of the first one of the two main wrapping zones 410 extends toward the rotation axis of the rotary disk 350. Such a configuration facilitates the tab part 201 to pass through the opening 421 and the connection zone 420 to wrap the first one 212a of the two end surfaces 212. Further, the rotation axis of the rotary disk 350 is arranged to be perpendicular to the ground.

Optionally, after the first one of the two main surfaces 211 contacts the first one of the two main wrapping zones 410, the second wrapping sub-assembly 344 can be configured to support the electrode assembly 200 and drive the electrode assembly 200 to rotate with the rotary disk 350, so as to achieve the loading of the electrode assembly 200 onto the rotary disk 350.

Optionally, as shown in FIGs. 10, 11, and 16, the wrapping device 300 further includes a wrapping film feeding mechanism 301. The wrapping film feeding mechanism 301 may drive the wrapping film 400 to approach the rotary disk 350. For example, the wrapping device 300 further includes a sliding track 351. The wrapping film feeding mechanism 301 can suck the wrapping film 400 and slide to approach the rotary disk 350 along the sliding track 351. When rotating with the rotary disk 350, the first wrapping assembly 330 may pass through the wrapping film feeding mechanism 301. In this case, the first wrapping assembly 330 may position the wrapping film 400 to drive the wrapping film 400 to rotate with the rotary disk 350, thereby achieving the loading of the wrapping film 400 onto the rotary disk 350. Then, the wrapping film 400 may rotate with the rotary disk 350 and approach the first positioning assembly 310 and the electrode assembly 200 positioned by the first positioning assembly 310, and the following actions occur. The tab part 201 passes through the opening 421, the connection zone 420 contacts and wraps the first one 212a of the two end surfaces 212, and the two main wrapping zones 410 wrap the two main surfaces 211, respectively.

Optionally, as shown in FIGs. 10 and 16, the wrapping device 300 further includes an electrode assembly pickup mechanism 353 and an electrode assembly shaping mechanism 354. The electrode assembly pickup mechanism 353 can clamp the incoming materials of the electrode assembly 200 to the electrode assembly shaping mechanism 354, and the electrode assembly shaping mechanism 354 can shape the electrode assembly 200, such that the shape of the electrode assembly 200 meets the specification. The first positioning assembly 310 may drive the shaped electrode assembly 200 to the rotary disk 350. For example, the wrapping device 300 further includes a sliding track 351. The electrode assembly pickup mechanism 353 can clamp the electrode assembly 200 and slide to the electrode assembly shaping mechanism 354 along the sliding track 351. The first positioning assembly 310 can clamp the shaped electrode assembly 200 and slide toward the rotary disk 350 along the sliding track 351.

Optionally, the wrapping device 300 further includes an electrode assembly discharging mechanism 302. After the tab part 201 passes through the opening 421, the connection zone 420 contacts and wraps the first one 212a of the two end surfaces 212, and the two main wrapping zones 410 wrap the two main surfaces 211, respectively, the electrode assembly 200 and the wrapping film 400 can be driven by the rotary disk 350 to pass through the second wrapping assembly 370 and the first tape attachment assembly 380, so as to wrap the two side surfaces 213 and the second one 212b of the two end surfaces 212 with the wrapping film 400 and attach the first tape 510. Then, the electrode assembly 200 and the wrapping film 400 may be driven by the rotary disk 350 to pass through the second tape attachment assembly 390 and the electrode assembly discharging mechanism 302, so as to attach the second tape 520 and discharge the electrode assembly 200 wrapped with the wrapping film 400. For example, the wrapping device 300 further includes a sliding track 351. The electrode assembly discharging mechanism 302 includes a robotic arm, and the robotic arm is configured to clamp the electrode assembly 200 wrapped with the wrapping film 400. The robotic arm can slide toward the next process along the sliding track 351 to drive the electrode assembly 200 wrapped with the wrapping film 400 to the next process.

Optionally, when one of the at least two first wrapping assemblies 330 passes through the first positioning assembly 310 and performs the loading of the electrode assembly 200 onto the rotary disk 350, the other one of the at least two first wrapping assemblies 330 may pass through the wrapping film feeding mechanism 301 and perform the loading of the wrapping film 400 onto the rotary disk 350. Further, while the electrode assembly 200 and the wrapping film 400 are separately loaded onto the rotary disk 350, another electrode assembly 200 and another wrapping film 400 can be driven by the rotary disk 350 to pass through the second wrapping assembly 370 and the first tape attachment assembly 380, so as to wrap the two side surfaces 213 and the second one 212b of the two end surfaces 212 with the wrapping film 400 and attach the first tape 510. At the same time, another electrode assembly 200 and another wrapping film 400 can be driven by the rotary disk 350 to pass through the second tape attachment assembly 390 and the electrode assembly discharging mechanism 302, so as to attach the second tape 520 and discharge the electrode assembly 200 wrapped with the wrapping film 400.

Optionally, the wrapping device 300 further includes a defective product discharging mechanism 355. The defective product discharging mechanism 355 can take the electrode assembly 200 and the wrapping film 400 that are defective away from the rotary disk 350. For example, the defective product discharging mechanism 355 includes a robotic arm and a conveyor belt. The robotic arm is configured to clamp the electrode assembly 200 and the wrapping film 400 that are defective, and the conveyor belt is configured to drive the electrode assembly 200 and the wrapping film 400 that are defective to move away from the rotary disk 350.

According to some embodiments of the present application, optionally, as shown in FIGs. 4 to 31, the electrode assembly 200 includes an electrode main body 210 and a tab part 201. The electrode main body 210 has a first direction D1, a second direction D2, and a third direction D3 that are orthogonal to each other, and includes two main surfaces 211 disposed opposite to each other in the first direction D1, two end surfaces 212 disposed opposite to each other in the second direction D2, and two side surfaces 213 disposed opposite to each other in the third direction D3. The tab part 201 is disposed in a protruding manner on the first one 212a of the two end surfaces 212. The wrapping device 300 includes a first positioning assembly 310 and a first wrapping assembly 330. The first wrapping assembly 330 is configured to position the wrapping film 400. The wrapping film 400 includes two main wrapping zones 410 spaced apart from each other and a connection zone 420 connected between the two main wrapping zones 410, and the connection zone 420 is provided with openings 421. The first positioning assembly 310 is configured to position the electrode assembly 200 and enable the tab part 201 to be disposed toward the connection zone 420. At least one of the first positioning assembly 310 and the first wrapping assembly 330 is configured to drive the electrode assembly 200 and the wrapping film 400 to move relative to each other, such that the tab part 201 passes through the opening 421, and the connection zone 420 contacts and wraps the first one 212a of the two end surfaces 212. Before the first one 212a of the two end surfaces 212 contacts the connection zone 420, the first wrapping assembly 330 is configured such that the connection zone 420 and the two main wrapping zones 410 are coplanar with each other. At least one of the first positioning assembly 310 and the first wrapping assembly 330 is configured to drive the electrode assembly 200 and the wrapping film 400 to approach each other in the second direction D2, and after the first one 212a of the two end surfaces 212 contacts the connection zone 420, to drive the electrode assembly 200 to continue to move in the second direction D2 relative to the end parts of the two main wrapping zones 410 distal to the connection zone 420. The first wrapping assembly 330 is configured to separately drive the end parts of the two main wrapping zones 410 to move close to each other in the first direction D1, such that the two main wrapping zones 410 each contact and wrap the exposed portion of the corresponding one of the two main surfaces 211. The first positioning assembly 310 includes an electrode clamp 311. The electrode clamp 311 is configured to clamp and fix the electrode main body 210 from the outer sides of the two side surfaces 213 in the third direction D3, or configured to clamp and fix the electrode main body 210 from the outer sides of the two main surfaces 211 in the first direction D1. The first positioning assembly 310 includes an electrode transmission mechanism 312. The electrode transmission mechanism 312 is configured to drive the electrode assembly 200 to move in the second direction D2 toward the side where the wrapping film 400 is located, and after the first one 212a of the two end surfaces 212 contacts the connection zone 420, to drive the first one 212a of the two end surfaces 212 and the connection zone 420 to continue to move synchronously in the second direction D2. The electrode transmission mechanism 312 includes an electrode transmission motor 314, a first electrode support 3141, and a second electrode support 3142. The electrode transmission motor 314 is disposed on the first electrode support 3141, and the electrode transmission motor 314 is configured to drive the second electrode support 3142 to move relative to the first electrode support 3141 in the second direction D2. The electrode clamp 311 is disposed on the second electrode support 3142 and includes an electrode clamping jaw 3131 and an electrode clamping cylinder 313. The electrode clamping cylinder 313 is configured to drive the electrode clamping jaw 3131 to clamp and fix the electrode main body 210. The first wrapping assembly 330 includes two first wrapping sub-assemblies 331 spaced apart from each other. Each first wrapping sub-assembly 331 separately includes a film clamp 332 and a first film transmission mechanism 333. Two film clamps 332 clamp and fix two ends of the wrapping film 400 distal to the connection zone 420, respectively. The first film transmission mechanism 333 drives the two film clamps 332 to move close to each other in the first direction D1, such that the zone of the main wrapping zone 410 that is not clamped by the film clamp 332 can be bent toward the corresponding main surface 211 relative to the connection zone 420. The first film transmission mechanism 333 includes a first film transmission motor 337, a first film support 3371, and a second film support 342. The first film transmission motor 337 is disposed on the first film support 3371, and the first film transmission motor 337 is configured to drive the second film support 342 to move relative to the first film support 3371 in the first direction D1. The film clamp 332 is disposed on the second film support 342 and includes a film clamping jaw 338 and a film clamping cylinder 336. The film clamping cylinder 336 is configured to drive the film clamping jaw 338 to clamp and fix the wrapping film 400. Each first wrapping sub-assembly 331 further separately includes a second film transmission mechanism 334. Two second film transmission mechanisms 334 drive the corresponding film clamps 332 to rotate, respectively, such that the movement trend of zones of the wrapping film 400 that are clamped by the film clamps 332 relative to the connection zone 420 remains consistent with the bending trend of the unclamped zone of the main wrapping zone 410 relative to the connection zone 420. The first film transmission mechanism 333 includes a first film transmission motor 337, a first film support 3371, and a second film support 342. The first film transmission motor 337 is disposed on the first film support 3371, and the first film transmission motor 337 is configured to drive the second film support 342 to move relative to the first film support 3371 in the first direction D1. The second film transmission mechanism 334 includes a second film transmission motor 340. The second film transmission motor 340 is disposed on the second film support 342 and drives the film clamp 332 to rotate. The film clamp 332 includes a film clamping jaw 338 and a film clamping cylinder 336. The film clamping cylinder 336 is configured to drive the film clamping jaw 338 to clamp and fix the wrapping film 400. Each first wrapping sub-assembly 331 further separately includes a third film transmission mechanism 335. Two third film transmission mechanisms 335 drive the corresponding film clamps 332 to move in the second direction D2 toward the side where the electrode main body 210 is located, respectively. Alternatively, the first positioning assembly 310 includes an electrode transmission mechanism 312. The electrode transmission mechanism 312 is configured to drive the electrode assembly 200 to move in the second direction D2 toward the side where the wrapping film 400 is located, and after the first one 212a of the two end surfaces 212 contacts the connection zone 420, to drive the first one 212a of the two end surfaces 212 and the connection zone 420 to continue to move synchronously in the second direction D2. The third film transmission mechanism 335 drives, in the second direction D2, the corresponding film clamp 332 to move toward the side distal to the electrode main body 210 in the second direction D2 after the first one 212a of the two end surfaces 212 contacts the connection zone 420. The first film transmission mechanism 333 includes a first film transmission motor 337, a first film support 3371, and a second film support 342. The first film transmission motor 337 is disposed on the first film support 3371, and the first film transmission motor 337 is configured to drive the second film support 342 to move relative to the first film support 3371 in the first direction D1. The third film transmission mechanism 335 includes a third film transmission motor 341 and a third film support 343. The third film transmission motor 341 is disposed on the second film support 342, and drives the third film support 343 to move relative to the second film support 342 in the second direction D2. The second film transmission mechanism 334 includes a second film transmission motor 340. The second film transmission motor 340 is disposed on the third film support 343 and drives the film clamp 332 to rotate. The film clamp 332 includes a film clamping jaw 338 and a film clamping cylinder 336. The film clamping cylinder 336 is configured to drive the film clamping jaw 338 to clamp and fix the wrapping film 400. Before the first one 212a of the two end surfaces 212 contacts the connection zone 420, the first wrapping assembly 330 is configured such that the connection zone 420 and the first one of the two main wrapping zones 410 are bent relative to each other. Before the first one 212a of the two end surfaces 212 contacts the connection zone 420, the first wrapping assembly 330 is configured such that the connection zone 420 and the second one of the two main wrapping zones 410 are coplanar with each other. The first wrapping assembly 330 includes a first wrapping sub-assembly 331 and a second wrapping sub-assembly 344. The first wrapping sub-assembly 331 clamps and fixes an end part of the wrapping film 400 distal to the first one of the two main wrapping zones 410. The second wrapping sub-assembly 344 is configured to support and position the first one of the two main wrapping zones 410. The first positioning assembly 310 is configured to drive the electrode assembly 200 in the second direction D2, such that the first one 212a of the two end surfaces 212 contacts the connection zone 420. The first positioning assembly 310 is further configured to drive the electrode assembly 200 in the first direction D1, such that the first one of the two main surfaces 211 contacts the first one of the two main wrapping zones 410. The first wrapping sub-assembly 331 is configured to drive the end part of the second one of the two main wrapping zones 410 in the first direction D1 and the second direction D2, such that the second one of the two main wrapping zones 410 contacts the second one of the two main surfaces 211. The wrapping film 400 includes a side wrapping zone 430 connected to the main wrapping zone 410. The wrapping device 300 further includes a second wrapping assembly 370, and the second wrapping assembly 370 is configured to drive the side wrapping zone 430 to contact and wrap the side surface 213. The second wrapping assembly 370 includes a side surface pressing plate 371, a first pressing plate transmission mechanism 372, and a second pressing plate transmission mechanism 373. The first pressing plate transmission mechanism 372 is configured to drive the side surface pressing plate 371 in the first direction D1, such that the side surface pressing plate 371 pushes the side wrapping zone 430 to bend toward the side surface 213 relative to the main wrapping zone 410. The second pressing plate transmission mechanism 373 is configured to drive the side surface pressing plate 371 in the third direction D3, such that the side surface pressing plate 371 presses the side wrapping zone 430 onto the side surface 213. The wrapping film 400 includes an end wrapping zone 440 connected to the main wrapping zone 410. The second wrapping assembly 370 is configured to drive the end wrapping zone 440 to contact and wrap the second one 212b of the two end surfaces 212. The second wrapping assembly 370 includes an end surface pressing plate 374, a first pressing plate transmission mechanism 372, and a third pressing plate transmission mechanism 375. The first pressing plate transmission mechanism 372 is configured to drive the end surface pressing plate 374 in the first direction D1, such that the end surface pressing plate 374 pushes the end wrapping zone 440 to bend toward the second one 212b of the two end surfaces 212 relative to the main wrapping zone 410. The third pressing plate transmission mechanism 375 is configured to drive the end surface pressing plate 374 in the second direction D2, such that the end surface pressing plate 374 presses the end wrapping zone 440 onto the second one 212b of the two end surfaces 212. The first pressing plate transmission mechanism 372 includes a pressing plate transmission motor 377, a first pressing plate support 378, and a second pressing plate support 379. The pressing plate transmission motor 377 is disposed on the first pressing plate support 378 and drives the second pressing plate support 379 to move relative to the first pressing plate support 378. The second pressing plate transmission mechanism 373 includes a first pressing plate cylinder 376. The first pressing plate cylinder 376 is disposed on the second pressing plate support 379, and the first pressing plate cylinder 376 drives the side surface pressing plate 371 to move relative to the second pressing plate support 379. The third pressing plate transmission mechanism 375 includes a second pressing plate cylinder 3761. The second pressing plate cylinder 3761 is disposed on the second pressing plate support 379, and the second pressing plate cylinder 3761 drives the end surface pressing plate 374 to move relative to the second pressing plate support 379. The wrapping film 400 further includes a side wrapping zone 430 and an end wrapping zone 440 that are connected to the main wrapping zone 410. The side wrapping zone 430 wraps the side surface 213, and the end wrapping zone 440 wraps the second one 212b of the two end surfaces 212. The wrapping device 300 further includes a first tape attachment assembly 380. The first tape attachment assembly 380 is configured to drive the electrode assembly 200 and a first tape 510 to move relative to each other. The first tape 510 includes a first portion and a second portion connected to each other. The first tape attachment assembly 380 is configured to attach, at a corner formed by the side surface 213 and the second one 212b of the two end surfaces 212, the first portion 511 of the first tape 510 to the side wrapping zone 430 and the second portion 512 of the first tape 510 to the end wrapping zone 440. The first tape attachment assembly 380 includes a first unwinding mechanism 381, a first tape pulling mechanism 382, and a first cutting mechanism 383. The first unwinding mechanism 381 is configured to place and release the first tape roll 384, the first tape pulling mechanism 382 is configured to clamp and pull the head end of the release portion of the first tape roll 384, and the first cutting mechanism 383 is configured to cut the first tape 510 out of the release portion of the first tape roll 384. The first tape pulling mechanism 382 includes a first tape clamping cylinder 3821, a first tape pulling motor 3822, and a first tape clamping member 3823. The first tape clamping cylinder 3821 is configured to drive the first tape clamping member 3823 to clamp the head end of the release portion, and the first tape pulling motor 3822 is configured to drive the first tape clamping member 3823 to move to pull the release portion. Two corresponding groups of first unwinding mechanisms 381 and first cutting mechanisms 383 are provided. The first tape attachment assembly 380 includes a switching mechanism 385, and the switching mechanism 385 includes a material roll support 3851 and a switching motor 3852. The two groups of first unwinding mechanisms 381 and first cutting mechanisms 383 are disposed on the material roll support 3851. The switching motor 3852 drives the material roll support 3851 to rotate around a predetermined rotation axis, such that the two groups of first unwinding mechanisms 381 and first cutting mechanisms 383 can switch between a standby station and a work station where the first tape pulling mechanism 382 and the first cutting mechanism 383 operate. The rotation axis is perpendicular to the plane where the release portion is located. The first tape attachment assembly 380 includes a first tape pickup mechanism 386, and the first tape pickup mechanism 386 is configured to adsorb and take away the first tape 510. The first cutting mechanism 383 includes a first pressing block 3831, a first cutter 3832, and a first cutting cylinder 3833. The first pressing block 3831 and the first cutter 3832 are oppositely and fixedly disposed. The first cutting cylinder 3833 is configured to drive the first pressing block 3831 to press the release portion onto the first tape pickup mechanism 386 and to drive the first cutter 3832 to cut the first tape 510 out of the release portion. The first tape attachment assembly 380 includes a first tape pickup mechanism 386, and the first tape pickup mechanism 386 is configured to adsorb and take away the first tape 510. The first tape pickup mechanism 386 includes a first tape pickup member 3861, a first tape pickup motor 3862, a second tape pickup motor 3863, a first tape pickup support 3864, and a second tape pickup support 3865. The first tape pickup member 3861 is configured to adsorb the first tape 510. The first tape pickup motor 3862 is disposed on the first tape pickup support 3864 and drives the second tape pickup support 3865 to move to the side of the main surface of the release portion. The second tape pickup motor 3863 is disposed on the second tape pickup support 3865 and drives the first tape pickup member 3861 to approach and move away from the plane where the release portion is located. The first tape pickup member 3861 includes a first tape pickup sub-part 3866 and a second tape pickup sub-part 3867. The first tape pickup sub-part 3866 is configured to adsorb the first portion 511 of the first tape 510 and attach the first portion to the side wrapping zone 430. The second tape pickup sub-part 3867 is configured to adsorb the second portion 512 of the first tape 510 and attach the second portion to the end wrapping zone 440. The first tape pickup sub-part 3866 is a telescoping member. The second tape pickup motor 3863 drives the first tape pickup member 3861 in the third direction D3; and the first tape pickup sub-part 3866 presses the first portion 511 of the first tape 510 onto the side wrapping zone 430 and retracts, so as to enable the second tape pickup sub-part 3867 to continue to move in the third direction D3 and attach to the end wrapping zone 440, thereby attaching the second portion 512 of the first tape 510 to the end wrapping zone 440. Alternatively, the second tape pickup sub-part 3867 is a telescoping member. The second tape pickup motor 3863 drives the first tape pickup member 3861 in the second direction D2; and the second tape pickup sub-part 3867 presses the second portion 512 of the first tape 510 onto the end wrapping zone 440 and retracts, so as to enable the first tape pickup sub-part 3866 to continue to move in the second direction D2 and attach to the side wrapping zone 430, thereby attaching the first portion 511 of the first tape 510 to the side wrapping zone 430. The first cutting mechanism 383 is configured to cut two first tapes 510 out of the release portion. There are two first tape pickup members 3861, and the two first tape pickup members adsorb the corresponding first tapes 510, respectively. The first tape attachment assembly 380 includes a first tape pickup mechanism 386. The first tape pickup mechanism 386 is configured to adsorb and take away the first tape 510, and the first tape pickup mechanism 386 includes a first tape pickup member 3861, a first tape pickup motor 3862, a second tape pickup motor 3863, a first tape pickup support 3864, a second tape pickup support 3865, a third tape pickup support 3868, and a tape dispensing cylinder 3869. The first tape pickup member 3861 is configured to adsorb the first tape 510. The first tape pickup motor 3862 is disposed on the first tape pickup support 3864 and drives the second tape pickup support 3865 to move to the side of the main surface of the release portion. The second tape pickup motor 3863 is disposed on the second tape pickup support 3865 and drives the third tape pickup support 3868 and the two first tape pickup members 3861 to approach and move away from the plane where the release portion is located. The tape dispensing cylinder 3869 is disposed on the third tape pickup support 3868, and the tape dispensing cylinder 3869 is configured to drive the two first tape pickup members 3861 to move away from each other, such that the two first tape pickup members 3861 correspond to the two corners of the electrode assembly 200 spaced apart from each other in the third direction D3, respectively. The wrapping device 300 further includes a second tape attachment assembly 390. The second tape attachment assembly 390 is configured to drive the electrode assembly 200 and a second tape 520 to move relative to each other. The second tape 520 includes a first portion and a second portion connected to each other. The second tape attachment assembly 390 is configured to attach, at a corner formed by the side surface 213 and the main surface 211, the first portion 521 of the second tape 520 to the main wrapping zone 410 and the second portion 522 of the second tape 520 to the side wrapping zone 430. The number of the first portions 521 of the second tape 520 is two, the two first portions are located at two ends of the second portion 522 of the second tape 520, and the second tape attachment assembly 390 is configured to respectively attach the two first portions of the second tape 520 to corresponding ones of the two main wrapping zones 410. The second tape attachment assembly 390 includes a second unwinding mechanism 391, a second tape pulling mechanism 392, and a second cutting mechanism 393. The second unwinding mechanism 391 is configured to place and release the second tape roll 396. The second tape pulling mechanism 392 is configured to clamp and pull the head end of the release portion of the second tape roll 396. The second cutting mechanism 393 is configured to cut the second tape 520 out of the release portion of the second tape roll 396. The second tape pulling mechanism 392 includes a second tape clamping cylinder 3921, a second tape pulling motor 3922, and a second tape clamping member 3923. The second tape clamping cylinder 3921 is configured to drive the second tape clamping member 3923 to clamp the head end of the release portion, and the second tape pulling motor 3922 is configured to drive the second tape clamping member 3923 to move to pull the release portion. Two corresponding groups of second unwinding mechanisms 391 and second cutting mechanisms 393 are provided and spaced apart from each other in the width direction D4 of the release portion. The second tape attachment assembly 390 includes a tape pulling support 394, a tape pulling and transposition cylinder 3941, and a tape pulling and transposition support 3942. The tape pulling and transposition cylinder 3941 is disposed on the tape pulling support 394, and the second tape pulling mechanism 392 is disposed on the tape pulling and transposition support 3942. The tape pulling and transposition cylinder 3941 is configured to drive the tape pulling and transposition support 3942 to move in the spacing direction D5 of two second unwinding mechanisms 391, such that the second tape pulling mechanism 392 can switch between a standby station and a work station where the second tape pulling mechanism 392 operates. The standby station and the work station are each provided with a group of the second unwinding mechanism 391 and the second cutting mechanism 393. The second tape attachment assembly 390 includes a second tape pickup mechanism 395, and the second tape pickup mechanism 395 is configured to adsorb and take away the second tape 520. The second cutting mechanism 393 includes a second pressing block 3931, a second cutter 3932, and a second cutting cylinder 3933. The second pressing block 3931 and the second cutter 3932 are oppositely and fixedly disposed. The second cutting cylinder 3933 is configured to drive the second pressing block 3931 to press the release portion onto the second tape pickup mechanism 395 and to drive the second cutter 3932 to cut the second tape 520 out of the release portion. The second tape attachment assembly 390 includes a second tape pickup mechanism 395, and the second tape pickup mechanism 395 is configured to adsorb and take away the second tape 520. The second tape pickup mechanism 395 includes a second tape pickup member 3951, a fourth tape pickup motor 3952, and a fourth tape pickup support 3953. The second tape pickup member 3951 is configured to adsorb the second tape 520. The fourth tape pickup motor 3952 is disposed on the fourth tape pickup support 3953, drives the second tape pickup member 3951 to move to be disposed opposite to the release portion in the thickness direction D6 of the release portion, and drives the second tape pickup member 3951 to approach and move away from the plane where the release portion is located. The second tape pickup member 3951 includes a third tape pickup sub-part 3954 and a fourth tape pickup sub-part 3955. The third tape pickup sub-part 3954 is configured to adsorb the first portion 521 of the second tape 520 and attach the first portion to the main wrapping zone 410. The fourth tape pickup sub-part 3955 is configured to adsorb the second portion 522 of the second tape 520 and attach the second portion to the side wrapping zone 430. The fourth tape pickup sub-part 3955 is a telescoping member. The fourth tape pickup motor 3952 drives the second tape pickup member 3951 in the third direction D3; and the fourth tape pickup sub-part 3955 presses the second portion 522 of the second tape 520 onto the side wrapping zone 430 and retracts, so as to enable the third tape pickup sub-part 3954 to continue to move in the third direction D3 and attach to the main wrapping zone 410, thereby attaching the first portion 521 of the second tape 520 to the main wrapping zone 410. Two corresponding groups of second unwinding mechanisms 391 and second cutting mechanisms 393 are provided and spaced apart from each other in the width direction D4 of the release portion. The second tape pickup mechanism 395 includes a tape pickup and transposition cylinder 3956 and a tape pickup and transposition support 3957. The tape pickup and transposition cylinder 3956 is disposed on the fourth tape pickup support 3953, and the second tape pickup member 3951 is disposed on the tape pickup and transposition support 3957. The tape pickup and transposition cylinder 3956 is configured to drive the tape pickup and transposition support 3957 to move in the spacing direction D5 of the two second unwinding mechanisms 391, such that the second tape pickup member 3951 can switch between a standby station and a work station where the second tape pickup mechanism 395 operates. The standby station and the work station are each provided with a group of the second unwinding mechanism 391 and the second cutting mechanism 393. The electrode main body 210 includes two electrode modules 220 stacked on each other in the first direction D1, and each electrode module 220 separately includes a positive electrode plate 221221, a separation film 222, and a negative electrode plate 223223 that are stacked. The wrapping device 300 further includes a rotary disk 350. The rotary disk 350 is configured to rotate around a predetermined rotation axis. There are at least two first wrapping assemblies 330, and the at least two first wrapping assemblies are spaced apart on the rotary disk 350 around the rotation axis. The rotary disk 350 drives the at least two first wrapping assemblies 330 to sequentially pass through the first positioning assembly 310.

Optionally, the wrapping device 300 further includes a conveying device and an assembly device. The conveying device is configured to convey structures to be assembled to each station of the assembly device. The stations of the assembly device include at least a tab welding apparatus, a housing insertion apparatus, a tab guide apparatus, a post terminal welding apparatus, and a bottom cover welding apparatus.

The tab welding apparatus is configured to weld a plurality of tab plates of the electrode assembly 200 to form a tab part 201. The housing insertion apparatus is configured to load the electrode assembly 200 into the housing 100 from the opening end 112. The tab guide apparatus is configured to clamp the tab part 201 to pass through the through hole when the electrode assembly 200 is loaded into the housing. The post terminal welding apparatus is configured to weld the tab part 201 passing through the through hole to one side of the post terminal facing away from the accommodating cavity. The bottom cover welding apparatus is configured to weld the bottom cover to the opening end 112 of the housing 100.

It should be noted that in the embodiments, the conveying device includes a conveyor line. The conveyor line may be a conveying structure formed by a motor-driven conveying roller cooperating with a conveyor belt, or may be a conveying structure formed by a motor-driven conveying chain with hinged links, or may be an AGV conveying trolley, as long as the conveyor line is capable of conveying in at least one direction and can support and ensure the stability of the structure to be assembled.

The tab welding apparatus is intended to pre-weld the tab plates to form the tab part 201. The tab welding apparatus is optionally an ultrasonic welding device, as long as the tab welding apparatus can ensure that the tab plates are welded in a stable clamped state. The housing insertion apparatus is a pushing mechanism or a clamping mechanism, as long as the housing insertion apparatus can stably move the electrode assembly 200 toward the opening end 112 of the housing 100 and enable the electrode assembly to enter the accommodating cavity through the opening end 112. Similarly, the tab guide apparatus may be a clamping structure or a guiding structure, as long as the tab guide apparatus can guide the tab part 201 to pass through the through hole smoothly without interfering with the housing 100. The post terminal welding apparatus is intended to achieve the welding of the tab part 201 and the post terminal, and optionally, the post terminal welding apparatus may be a laser welding device. The bottom cover welding apparatus is intended to weld the bottom cover to the circumferential edge of the opening end 112 of the housing 100, and is also a laser welding device.

In addition, the assembly device includes, but is not limited to, the tab welding apparatus, the housing insertion apparatus, the tab guide apparatus, the post terminal welding apparatus, and the bottom cover welding apparatus. Illustratively, when the electrode assembly 200 includes a plurality of electrode modules 220, for example, two electrode modules 220, the assembly device further includes a pairing assembly. The pairing assembly is configured to stack the plurality of electrode modules 220, such that the tab plates of the two electrode modules 220 are substantially opposite to each other. As a result, the conveying structure can convey the paired electrode modules 220 to the tab welding apparatus for welding the tab plates, thereby facilitating the formation of the tab part 201. Further illustratively, to ensure the reliability of the battery assembly process, dust removal and NG detection stations may also be added between any two adjacent stations, which is not limited in the embodiments.

According to some embodiments of the present application, the electrode assembly described in the embodiments of the wrapping method for an electrode assembly includes an electrode main body and a tab part. The electrode main body has a first direction, a second direction, and a third direction that are orthogonal to each other, and includes two main surfaces disposed opposite to each other in the first direction, two end surfaces disposed opposite to each other in the second direction, and two side surfaces disposed opposite to each other in the third direction. The tab part is disposed in a protruding manner on the first one of the two end surfaces. The wrapping method includes the following. In S100, a first wrapping assembly is used to position a wrapping film, where the wrapping film includes two main wrapping zones spaced apart from each other and a connection zone connected between the two main wrapping zones, and the connection zone is provided with openings. In S200, a first positioning assembly is used to position the electrode assembly and enable the tab part to be disposed toward the connection zone. In S300, at least one of the first positioning assembly and the first wrapping assembly is controlled to drive the electrode assembly and the wrapping film to move relative to each other, such that the tab part passes through the opening, and the connection zone contacts and wraps the first one of the two end surfaces.

According to some embodiments of the present application, optionally, using the first wrapping assembly to position the wrapping film includes the following.

In S110, before the first one of the two end surfaces contacts the connection zone, the first wrapping assembly is controlled to enable the connection zone and the two main wrapping zones to be coplanar with each other.

According to some embodiments of the present application, optionally, controlling the at least one of the first positioning assembly and the first wrapping assembly to drive the electrode assembly and the wrapping film to move relative to each other includes the following.

In S310, the at least one of the first positioning assembly and the first wrapping assembly is controlled to drive the electrode assembly and the wrapping film to approach each other in the second direction, and after the first one of the two end surfaces contacts the connection zone, to drive the electrode assembly to continue to move in the second direction relative to the end parts of the two main wrapping zones distal to the connection zone.

In S320, the first wrapping assembly is controlled to separately drive the end parts of the two main wrapping zones to move close to each other in the first direction, such that the two main wrapping zones each contact and wrap the exposed portion of the corresponding one of the two main surfaces.

According to some embodiments of the present application, optionally, using the first wrapping assembly to position the wrapping film includes the following.

In S120, before the first one of the two end surfaces contacts the connection zone, the first wrapping assembly is controlled to enable the connection zone and the first one of the two main wrapping zones to be bent relative to each other.

According to some embodiments of the present application, optionally, the first wrapping assembly includes a first wrapping sub-assembly and a second wrapping sub-assembly. The first wrapping sub-assembly clamps and fixes an end part of the wrapping film distal to the first one of the two main wrapping zones. The second wrapping sub-assembly is configured to support and position the first one of the two main wrapping zones.

Controlling the at least one of the first positioning assembly and the first wrapping assembly to drive the electrode assembly and the wrapping film to move relative to each other includes the following.

In S330, the first positioning assembly is controlled to drive the electrode assembly in the second direction, such that the first one of the two end surfaces contacts the connection zone.

In S340, the first positioning assembly is controlled to drive the electrode assembly in the first direction, such that the first one of the two main surfaces contacts the first one of the two main wrapping zones.

In S350, the first wrapping sub-assembly is controlled to drive the wrapping film to move away from the end part of the first one of the two main wrapping zones in the first direction and the second direction, such that the second one of the two main wrapping zones contacts the second one of the two main surfaces.

The embodiments of the wrapping method for an electrode assembly of the present application may refer to the relevant contents of the above embodiments of the wrapping device for an electrode assembly, which will not be described herein again.

In summary, according to the embodiments of the present application, by configuring the first positioning assembly and the first wrapping assembly to adjust the relative position relationship between the electrode assembly and the wrapping film, the relative position relationship between the first one of the two end surfaces and the connection zone can be adjusted. When the wrapping film wraps the first one of the two end surfaces, the stability of the wrapping process can be improved. By providing the opening on the connection zone, the opening can form a clearance for the tab part, reducing the interference of the tab part to the wrapping process, thereby improving the wrapping effect of the wrapping film on the first one of the two end surfaces.

Finally, it should be noted that the above embodiments are only used to illustrate the technical solutions of the present application, rather than limit the same. Although the present application has been described in detail with reference to the foregoing embodiments, those of ordinary skill in the art should understand that modifications can still be made to the technical solutions recorded in the foregoing embodiments, or equivalent substitutions to some or all of the technical features can be made. However, such modifications or substitutions do not make the spirit of the corresponding technical solutions deviate from the scope of the technical solutions in the embodiments of the present application, and shall all fall within the scope of claims and specification of the present application. In particular, the technical features mentioned in the embodiments can be combined in any manner, provided that there is no structural conflict. The present application is not limited to the specific embodiments disclosed herein, but encompasses all technical solutions falling within the scope of the claims.

## Claims

1. A wrapping device for an electrode assembly, wherein the electrode assembly comprises an electrode main body and a tab part, wherein the electrode main body has a first direction, a second direction, and a third direction that are orthogonal to each other, and comprises two main surfaces disposed opposite to each other in the first direction, two end surfaces disposed opposite to each other in the second direction, and two side surfaces disposed opposite to each other in the third direction, and the tab part is disposed in a protruding manner on a first one of the two end surfaces; and the wrapping device comprises:
a first wrapping assembly, configured to position a wrapping film, wherein the wrapping film comprises two main wrapping zones spaced apart from each other and a connection zone connected between the two main wrapping zones, and the connection zone is provided with openings; and
a first positioning assembly, configured to position the electrode assembly and enable the tab part to be disposed toward the connection zone, wherein
at least one of the first positioning assembly and the first wrapping assembly is configured to be movable relative to the other, such that the tab part passes through the opening with the relative movement between the first positioning assembly and the first wrapping assembly, and the connection zone contacts and wraps the first one of the two end surfaces.

2. The wrapping device according to claim 1, wherein before the first one of the two end surfaces contacts the connection zone, the first wrapping assembly is configured such that the connection zone and the two main wrapping zones are coplanar with each other.

3. The wrapping device according to claim 1 or 2, wherein at least one of the first positioning assembly and the first wrapping assembly is configured to move in the second direction, such that the electrode assembly and the wrapping film approach each other in the second direction, and after the first one of the two end surfaces contacts the connection zone, the electrode assembly continues to move in the second direction relative to end parts of the two main wrapping zones distal to the connection zone; and the first wrapping assembly is configured to move in the first direction, such that the end parts of the two main wrapping zones move close to each other in the first direction, and as a result, the two main wrapping zones each contact and wrap an exposed portion of a corresponding one of the two main surfaces.

4. The wrapping device according to claim 1, wherein the first positioning assembly comprises an electrode clamp, wherein the electrode clamp is configured to clamp and fix the electrode main body from outer sides of the two side surfaces in the third direction, or configured to clamp and fix the electrode main body from outer sides of the two main surfaces in the first direction.

5. The wrapping device according to claim 4, wherein the first positioning assembly comprises an electrode transmission mechanism, wherein the electrode transmission mechanism is configured to drive the electrode clamp to move in the second direction, such that after the first one of the two end surfaces contacts the connection zone, the first one of the two end surfaces and the connection zone continue to move synchronously in the second direction.

6. The wrapping device according to claim 5, wherein the electrode transmission mechanism comprises an electrode transmission motor, a first electrode support, and a second electrode support, wherein the electrode transmission motor is disposed on the first electrode support, and the electrode transmission motor is configured to drive the second electrode support to move relative to the first electrode support in the second direction; and the electrode clamp is disposed on the second electrode support and comprises an electrode clamping jaw and an electrode clamping cylinder, wherein the electrode clamping cylinder is configured to drive the electrode clamping jaw, such that the electrode clamping jaw clamps and fixes the electrode main body.

7. The wrapping device according to claim 3, wherein the first wrapping assembly comprises two first wrapping sub-assemblies spaced apart from each other, wherein each first wrapping sub-assembly separately comprises a film clamp and a first film transmission mechanism, two film clamps clamp and fix two ends of the wrapping film distal to the connection zone, respectively, and the first film transmission mechanism drives the two film clamps to move close to each other in the first direction, such that a zone of the main wrapping zone that is not clamped by the film clamp is capable of being bent toward a corresponding main surface relative to the connection zone.

8. The wrapping device according to claim 7, wherein the first film transmission mechanism comprises a first film transmission motor, a first film support, and a second film support, wherein the first film transmission motor is disposed on the first film support, and the first film transmission motor is configured to drive the second film support to move relative to the first film support in the first direction; and
the film clamp is disposed on the second film support and comprises a film clamping jaw and a film clamping cylinder, wherein the film clamping cylinder is configured to drive the film clamping jaw, such that the film clamping jaw clamps and fixes the wrapping film.

9. The wrapping device according to claim 7, wherein each first wrapping sub-assembly further separately comprises a second film transmission mechanism, and two second film transmission mechanisms drive the corresponding film clamps to rotate, respectively, such that a movement trend of zones of the wrapping film that are clamped by the film clamps relative to the connection zone remains consistent with a bending trend of the unclamped zone of the main wrapping zone relative to the connection zone.

10. The wrapping device according to claim 9, wherein the first film transmission mechanism comprises a first film transmission motor, a first film support, and a second film support, wherein the first film transmission motor is disposed on the first film support, and the first film transmission motor is configured to drive the second film support to move relative to the first film support in the first direction; and
the second film transmission mechanism comprises a second film transmission motor, wherein the second film transmission motor is disposed on the second film support and drives the film clamp to rotate, the film clamp comprises a film clamping jaw and a film clamping cylinder, and the film clamping cylinder is configured to drive the film clamping jaw, such that the film clamping jaw clamps and fixes the wrapping film.

11. The wrapping device according to claim 7 or 9, wherein each first wrapping sub-assembly further separately comprises a third film transmission mechanism, and two third film transmission mechanisms drive the corresponding film clamps to move in the second direction, respectively;
or the first positioning assembly comprises an electrode clamp and an electrode transmission mechanism, wherein the electrode clamp is configured to clamp and fix the electrode main body, and the electrode transmission mechanism is configured to drive the electrode clamp to move in the second direction toward a side where the wrapping film is located, such that after the first one of the two end surfaces contacts the connection zone, the first one of the two end surfaces and the connection zone continue to move synchronously in the second direction; and the third film transmission mechanism is configured to drive, in the second direction, a corresponding film clamp to move in the second direction.

12. The wrapping device according to claim 11, wherein
the first film transmission mechanism comprises a first film transmission motor, a first film support, and a second film support, wherein the first film transmission motor is disposed on the first film support, and the first film transmission motor is configured to drive the second film support to move relative to the first film support in the first direction;
the third film transmission mechanism comprises a third film transmission motor and a third film support, wherein the third film transmission motor is disposed on the second film support and drives the third film support to move relative to the second film support in the second direction; and
the second film transmission mechanism comprises a second film transmission motor, wherein the second film transmission motor is disposed on the third film support and drives the film clamp to rotate, the film clamp comprises a film clamping jaw and a film clamping cylinder, and the film clamping cylinder is configured to drive the film clamping jaw, such that the film clamping jaw clamps and fixes the wrapping film.

13. The wrapping device according to claim 1, wherein before the first one of the two end surfaces contacts the connection zone, the first wrapping assembly is configured such that the connection zone and a first one of the two main wrapping zones are bent relative to each other.

14. The wrapping device according to claim 13, wherein before the first one of the two end surfaces contacts the connection zone, the first wrapping assembly is configured such that the connection zone and a second one of the two main wrapping zones are coplanar with each other.

15. The wrapping device according to claim 13 or 14, wherein the first wrapping assembly comprises a first wrapping sub-assembly and a second wrapping sub-assembly, wherein the first wrapping sub-assembly clamps and fixes an end part of the wrapping film distal to the first one of the two main wrapping zones, and the second wrapping sub-assembly is configured to support and position the first one of the two main wrapping zones.

16. The wrapping device according to claim 15, wherein the first positioning assembly is configured to move in the second direction, such that the first one of the two end surfaces contacts the connection zone; the first positioning assembly is further configured to move in the first direction, such that a first one of the two main surfaces contacts the first one of the two main wrapping zones; and the first wrapping sub-assembly is configured to move in the first direction and the second direction, such that the second one of the two main wrapping zones contacts a second one of the two main surfaces.

17. The wrapping device according to claim 1, wherein the wrapping film comprises a side wrapping zone connected to the main wrapping zone, and the wrapping device further comprises a second wrapping assembly, wherein the second wrapping assembly is configured to drive the side wrapping zone to contact and wrap the side surface.

18. The wrapping device according to claim 17, wherein the second wrapping assembly comprises a side surface pressing plate, a first pressing plate transmission mechanism, and a second pressing plate transmission mechanism, wherein the first pressing plate transmission mechanism is configured to drive the side surface pressing plate in the first direction, such that the side surface pressing plate pushes the side wrapping zone to bend toward the side surface relative to the main wrapping zone, and the second pressing plate transmission mechanism is configured to drive the side surface pressing plate in the third direction, such that the side surface pressing plate presses the side wrapping zone onto the side surface.

19. The wrapping device according to claim 18, wherein the wrapping film comprises an end wrapping zone connected to the main wrapping zone, and the second wrapping assembly is configured to drive the end wrapping zone to contact and wrap a second one of the two end surfaces.

20. The wrapping device according to claim 19, wherein the second wrapping assembly comprises an end surface pressing plate, a first pressing plate transmission mechanism, and a third pressing plate transmission mechanism, wherein the first pressing plate transmission mechanism is configured to drive the end surface pressing plate in the first direction, such that the end surface pressing plate pushes the end wrapping zone to bend toward the second one of the two end surfaces relative to the main wrapping zone, and the third pressing plate transmission mechanism is configured to drive the end surface pressing plate in the second direction, such that the end surface pressing plate presses the end wrapping zone onto the second one of the two end surfaces.

21. The wrapping device according to claim 20, wherein the first pressing plate transmission mechanism comprises a pressing plate transmission motor, a first pressing plate support, and a second pressing plate support, wherein the pressing plate transmission motor is disposed on the first pressing plate support and drives the second pressing plate support to move relative to the first pressing plate support;
the second pressing plate transmission mechanism comprises a first pressing plate cylinder, wherein the first pressing plate cylinder is disposed on the second pressing plate support, and the first pressing plate cylinder drives the side surface pressing plate to move relative to the second pressing plate support; and
the third pressing plate transmission mechanism comprises a second pressing plate cylinder, wherein the second pressing plate cylinder is disposed on the second pressing plate support, and the second pressing plate cylinder drives the end surface pressing plate to move relative to the second pressing plate support.

22. The wrapping device according to claim 1, wherein the wrapping film further comprises a side wrapping zone and an end wrapping zone that are connected to the main wrapping zone, wherein the side wrapping zone wraps the side surface, and the end wrapping zone wraps a second one of the two end surfaces; the wrapping device further comprises a first tape attachment assembly, wherein the first tape attachment assembly is configured to attach a first tape to the electrode assembly, the first tape comprising a first portion and a second portion connected to each other, and the first tape attachment assembly is configured to attach the first portion of the first tape to the side wrapping zone and attach the second portion of the first tape to the end wrapping zone at a corner formed by the side surface and the second one of the two end surfaces.

23. The wrapping device according to claim 22, wherein the first tape attachment assembly comprises a first unwinding mechanism, a first tape pulling mechanism, and a first cutting mechanism, wherein the first unwinding mechanism is configured to place and release a first tape roll; the first tape pulling mechanism is configured to clamp and pull a head end of a release portion of the first tape roll; and the first cutting mechanism is configured to cut the first tape out of the release portion of the first tape roll.

24. The wrapping device according to claim 23, wherein the first tape pulling mechanism comprises a first tape clamping cylinder, a first tape pulling motor, and a first tape clamping member, wherein the first tape clamping cylinder is configured to drive the first tape clamping member, such that the first tape clamping member clamps the head end of the release portion, and the first tape pulling motor is configured to drive the first tape clamping member to move to pull the release portion.

25. The wrapping device according to claim 23, wherein two corresponding groups of first unwinding mechanisms and first cutting mechanisms are provided; the first tape attachment assembly comprises a switching mechanism, the switching mechanism comprising a material roll support and a switching motor; the two groups of first unwinding mechanisms and first cutting mechanisms are disposed on the material roll support; the switching motor drives the material roll support to rotate around a predetermined rotation axis, such that the two groups of first unwinding mechanisms and first cutting mechanisms are capable of switching between a standby station and a work station where the first tape pulling mechanism and the first cutting mechanism operate; and the rotation axis is perpendicular to a plane where the release portion is located.

26. The wrapping device according to claim 23, wherein the first tape attachment assembly comprises a first tape pickup mechanism, the first tape pickup mechanism being configured to adsorb and take away the first tape; and the first cutting mechanism comprises a first pressing block, a first cutter, and a first cutting cylinder, wherein the first pressing block and the first cutter are oppositely and fixedly disposed; and the first cutting cylinder is configured to drive the first pressing block to press the release portion onto the first tape pickup mechanism and drive the first cutter to cut the first tape out of the release portion.

27. The wrapping device according to claim 23, wherein the first tape attachment assembly comprises a first tape pickup mechanism, wherein the first tape pickup mechanism is configured to adsorb and take away the first tape; and the first tape pickup mechanism comprises a first tape pickup member, a first tape pickup motor, a second tape pickup motor, a first tape pickup support, and a second tape pickup support, wherein the first tape pickup member is configured to adsorb the first tape; the first tape pickup motor is disposed on the first tape pickup support and drives the second tape pickup support to move to a side of a main surface of the release portion; and the second tape pickup motor is disposed on the second tape pickup support and drives the first tape pickup member to approach and move away from a plane where the release portion is located.

28. The wrapping device according to claim 27, wherein the first tape pickup member comprises a first tape pickup sub-part and a second tape pickup sub-part, wherein the first tape pickup sub-part is configured to adsorb the first portion of the first tape and attach the first portion to the side wrapping zone; and the second tape pickup sub-part is configured to adsorb the second portion of the first tape and attach the second portion to the end wrapping zone.

29. The wrapping device according to claim 28, wherein the first tape pickup sub-part is a telescoping member; the second tape pickup motor drives the first tape pickup member in the third direction; and the first tape pickup sub-part presses the first portion of the first tape onto the side wrapping zone and retracts, so as to enable the second tape pickup sub-part to continue to move in the third direction and attach to the end wrapping zone, thereby attaching the second portion of the first tape to the end wrapping zone; or
the second tape pickup sub-part is a telescoping member; the second tape pickup motor drives the first tape pickup member in the second direction; and the second tape pickup sub-part is configured to press the second portion of the first tape onto the end wrapping zone and retracts, so as to enable the first tape pickup sub-part to continue to move in the second direction and attach to the side wrapping zone, thereby attaching the first portion of the first tape to the side wrapping zone.

30. The wrapping device according to claim 23, wherein the first cutting mechanism is configured to cut two first tapes out of the release portion; and the first tape attachment assembly comprises a first tape pickup mechanism, wherein the first tape pickup mechanism is configured to adsorb and take away the first tape, and the first tape pickup mechanism comprises first tape pickup members, a first tape pickup motor, a second tape pickup motor, a first tape pickup support, a second tape pickup support, a third tape pickup support, and a tape dispensing cylinder, wherein there are two first tape pickup members, and the two first tape pickup members adsorb the corresponding first tapes, respectively; the first tape pickup motor is disposed on the first tape pickup support and drives the second tape pickup support to move to a side of a main surface of the release portion; the second tape pickup motor is disposed on the second tape pickup support and drives the third tape pickup support and the two first tape pickup members to approach and move away from a plane where the release portion is located; and the tape dispensing cylinder is disposed on the third tape pickup support, and the tape dispensing cylinder is configured to drive the two first tape pickup members to move away from each other, such that the two first tape pickup members correspond to two corners of the electrode assembly spaced apart from each other in the third direction, respectively.

31. The wrapping device according to claim 28, the wrapping device further comprises a second tape attachment assembly, wherein the second tape attachment assembly is configured to attach a second tape to the electrode assembly, the second tape comprising first portions and a second portion connected to each other, and the second tape attachment assembly is configured to attach the first portion of the second tape to the main wrapping zone and attach the second portion of the second tape to the side wrapping zone at a corner formed by the side surface and the main surface.

32. The wrapping device according to claim 31, wherein there are two first portions of the second tape, and the two first portions are located at two ends of the second portion of the second tape; and the second tape attachment assembly is configured to respectively attach the two first portions of the second tape to corresponding ones of the two main wrapping zones.

33. The wrapping device according to claim 31 or 32, wherein the second tape attachment assembly comprises a second unwinding mechanism, a second tape pulling mechanism, and a second cutting mechanism, wherein the second unwinding mechanism is configured to place and release a second tape roll; the second tape pulling mechanism is configured to clamp and pull a head end of a release portion of the second tape roll; and the second cutting mechanism is configured to cut the second tape out of the release portion of the second tape roll.

34. The wrapping device according to claim 33, wherein the second tape pulling mechanism comprises a second tape clamping cylinder, a second tape pulling motor, and a second tape clamping member, wherein the second tape clamping cylinder is configured to drive the second tape clamping member to clamp the head end of the release portion, and the second tape pulling motor is configured to drive the second tape clamping member to move to pull the release portion.

35. The wrapping device according to claim 33, wherein two corresponding groups of second unwinding mechanisms and second cutting mechanisms are provided and spaced apart from each other in a width direction of the release portion; and the second tape attachment assembly comprises a tape pulling support, a tape pulling and transposition cylinder, and a tape pulling and transposition support, wherein the tape pulling and transposition cylinder is disposed on the tape pulling support, the second tape pulling mechanism is disposed on the tape pulling and transposition support, and the tape pulling and transposition cylinder is configured to drive the tape pulling and transposition support to move in a spacing direction of the two second unwinding mechanisms, such that the second tape pulling mechanism is capable of switching between the two groups of second unwinding mechanisms and second cutting mechanisms.

36. The wrapping device according to claim 33, wherein the second tape attachment assembly comprises a second tape pickup mechanism, the second tape pickup mechanism being configured to adsorb and take away the second tape; and the second cutting mechanism comprises a second pressing block, a second cutter, and a second cutting cylinder, wherein the second pressing block and the second cutter are oppositely and fixedly disposed; and the second cutting cylinder is configured to drive the second pressing block to press the release portion onto the second tape pickup mechanism and drive the second cutter to cut the second tape out of the release portion.

37. The wrapping device according to claim 33, wherein the second tape attachment assembly comprises a second tape pickup mechanism, wherein the second tape pickup mechanism is configured to adsorb and take away the second tape; and the second tape pickup mechanism comprises a second tape pickup member, a fourth tape pickup motor, and a fourth tape pickup support, wherein the second tape pickup member is configured to adsorb the second tape; and the fourth tape pickup motor is disposed on the fourth tape pickup support and is configured to drive the second tape pickup member to move to a side of a main surface of the release portion; and is configured to drive the second tape pickup member to approach and move away from a plane where the release portion is located.

38. The wrapping device according to claim 37, wherein the second tape pickup member comprises a third tape pickup sub-part and a fourth tape pickup sub-part, wherein the third tape pickup sub-part is configured to adsorb the first portion of the second tape and attach the first portion to the main wrapping zone; and the fourth tape pickup sub-part is configured to adsorb the second portion of the second tape and attach the second portion to the side wrapping zone.

39. The wrapping device according to claim 38, wherein the fourth tape pickup sub-part is a telescoping member; the fourth tape pickup motor drives the second tape pickup member in the third direction; and the fourth tape pickup sub-part is configured to press the second portion of the second tape onto the side wrapping zone and retracts, so as to enable the third tape pickup sub-part to continue to move in the third direction and attach to the main wrapping zone, thereby attaching the first portion of the second tape to the main wrapping zone.

40. The wrapping device according to claim 37, wherein two corresponding groups of second unwinding mechanisms and second cutting mechanisms are provided and spaced apart from each other in a width direction of the release portion; and the second tape pickup mechanism comprises a tape pickup and transposition cylinder and a tape pickup and transposition support, wherein the tape pickup and transposition cylinder is disposed on the fourth tape pickup support, the second tape pickup member is disposed on the tape pickup and transposition support, and the tape pickup and transposition cylinder is configured to drive the tape pickup and transposition support to move in a spacing direction of the two second unwinding mechanisms, such that the second tape pickup member switches between the two groups of second unwinding mechanisms and second cutting mechanisms.

41. The wrapping device according to claim 1, wherein the electrode main body comprises two electrode modules stacked on each other in the first direction, and each electrode module separately comprises a positive electrode plate, a separation film, and a negative electrode plate that are stacked.

42. The wrapping device according to claim 1, wherein the wrapping device further comprises a rotary disk, wherein the rotary disk is configured to rotate around a predetermined rotation axis; there are at least two first wrapping assemblies, and the at least two first wrapping assemblies are spaced apart on the rotary disk around the rotation axis; and the rotary disk drives the at least two first wrapping assemblies to sequentially pass through the first positioning assembly.

43. A wrapping method for an electrode assembly, wherein the electrode assembly comprises an electrode main body and a tab part, wherein the electrode main body has a first direction, a second direction, and a third direction that are orthogonal to each other, and comprises two main surfaces disposed opposite to each other in the first direction, two end surfaces disposed opposite to each other in the second direction, and two side surfaces disposed opposite to each other in the third direction, and the tab part is disposed in a protruding manner on a first one of the two end surfaces; and the wrapping method comprises:
using a first wrapping assembly to position a wrapping film, wherein the wrapping film comprises two main wrapping zones spaced apart from each other and a connection zone connected between the two main wrapping zones, and the connection zone is provided with openings;
using a first positioning assembly to position the electrode assembly and enable the tab part to be disposed toward the connection zone; and
controlling at least one of the first positioning assembly and the first wrapping assembly to move relative to the other, such that the tab part passes through the opening, and the connection zone contacts and wraps the first one of the two end surfaces.

44. The wrapping method according to claim 43, wherein using the first wrapping assembly to position the wrapping film, comprises:
before the first one of the two end surfaces contacts the connection zone, controlling the first wrapping assembly to enable the connection zone and the two main wrapping zones to be coplanar with each other.

45. The wrapping method according to claim 43 or 44, wherein controlling the at least one of the first positioning assembly and the first wrapping assembly to move relative to the other, comprises:
controlling the at least one of the first positioning assembly and the first wrapping assembly to approach each other in the second direction, such that after the first one of the two end surfaces contacts the connection zone, the electrode assembly continues to move in the second direction relative to end parts of the two main wrapping zones distal to the connection zone; and
controlling the first wrapping assembly to move in the first direction, such that the end parts of the two main wrapping zones move close to each other, and thus the two main wrapping zones each contact and wrap an exposed portion of a corresponding one of the two main surfaces.

46. The wrapping method according to claim 43, wherein using the first wrapping assembly to position the wrapping film, comprises:
before the first one of the two end surfaces contacts the connection zone, controlling the first wrapping assembly to enable the connection zone and a first one of the two main wrapping zones to be bent relative to each other.

47. The wrapping method according to claim 43 or 46, wherein the first wrapping assembly comprises a first wrapping sub-assembly and a second wrapping sub-assembly, wherein the first wrapping sub-assembly clamps and fixes an end part of the wrapping film distal to the first one of the two main wrapping zones, and the second wrapping sub-assembly is configured to support and position the first one of the two main wrapping zones; and
controlling the first positioning assembly and the first wrapping assembly to move relative to each other, comprises:
controlling the first positioning assembly to move in the second direction, such that the first one of the two end surfaces contacts the connection zone;
controlling the first positioning assembly to move in the first direction, such that a first one of the two main surfaces contacts the first one of the two main wrapping zones; and
controlling the first wrapping sub-assembly to move in the first direction and the second direction, such that the wrapping film moves away from an end part of the first one of the two main wrapping zones, and thus a second one of the two main wrapping zones contacts a second one of the two main surfaces.
